(19) Europäisches Patentamt / European Patent Office / Office européen des brevets

(11) **EP 4 701 181 A1**

(12) **EUROPEAN PATENT APPLICATION**
published in accordance with Art. 153(4) EPC

(43) Date of publication:
**25.02.2026 Bulletin 2026/09**

(21) Application number: **23933508.6**

(22) Date of filing: **21.04.2023**

(51) International Patent Classification (IPC):
**H04N 19/117** (2014.01)

(52) Cooperative Patent Classification (CPC):
**H04N 19/117**

(86) International application number:
**PCT/CN2023/089855**

(87) International publication number:
**WO 2024/216632 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Luhang**
**Dongguan, Guangdong 523860 (CN)**

(74) Representative: **Mewburn Ellis LLP**
**Aurora Building**
**Counterslip**
**Bristol BS1 6BX (GB)**

(54) **VIDEO ENCODING METHOD AND APPARATUS, VIDEO DECODING METHOD AND APPARATUS, AND DEVICE, SYSTEM AND STORAGE MEDIUM**

(57) Provided in the present application are a video encoding method and apparatus, a video decoding method and apparatus, and a device, a system and a storage medium. The present application further discloses: when the current block is predicted, first determining a reference region of the current block, and an interpolation filter, determining a filtering coefficient on the basis of the reference region; on the basis of the filtering coefficient, performing parallel prediction on at least two pixel points in the current block by using the interpolation filter, so as to obtain a prediction block of the current block; and determining a transformation kernel corresponding to the current block, and determining a reconstruction value of the current block on the basis of the transformation kernel and the prediction block. That is to say, in the embodiments of the present application, when an interpolation filter is used for performing interpolation filtering prediction on the current block, parallel prediction is performed on at least two points in the current block, thereby improving the prediction speed, and as such improving the encoding and decoding efficiency.

FIG. 10

**Description**

## TECHNICAL FIELD

The present disclosure relates to the field of video encoding and decoding technologies, and in particular to a video encoding and decoding method, apparatus, device, system, and storage medium.

## BACKGROUND

Digital video technologies may be integrated into a variety of video apparatuses, such as a digital television, a smartphone, a computer, an e-reader, or a video player, etc. With the development of video technologies, video data includes a large amount of data, and in order to facilitate the transmission of video data, the video apparatus performs a video compression technology so that the video data is more efficiently transmitted or stored.

Since there is temporal or spatial redundancy in the video, prediction may be used to eliminate or reduce the redundancy in the video, thereby improving compression efficiency. To improve prediction effects, an extrapolation filter prediction method is used in some cases for prediction compression, however, the current extrapolation filter prediction has the problem of low prediction efficiency, resulting in poor video encoding and decoding performance.

## SUMMARY

Embodiments of the present disclosure provide a video encoding and decoding method, apparatus, device, system, and storage medium, where parallel prediction may be performed when predicting by using extrapolation filter prediction, thereby improving the prediction efficiency of the extrapolation filter prediction mode and enhancing the encoding and decoding performance.

In a first aspect, the present disclosure provides a video decoding method, that is applied to a decoder, and includes:

determining a reference region and an extrapolation filter of a current block, and determining a filter coefficient of the extrapolation filter based on the reference region;

performing, based on the filter coefficient, parallel prediction on at least two samples in the current block by using the extrapolation filter, to determine a prediction block of the current block; and

determining a transform core corresponding to the current block, and determining a reconstructed block of the current block based on the transform core corresponding to the current block and the prediction block.

In a second aspect, the embodiments of the present disclosure provide a video encoding method, that is applied to an encoder, and includes:

determining a reference region and an extrapolation filter of a current block, and determining a filter coefficient of the extrapolation filter based on the reference region;

performing, based on the filter coefficient, parallel prediction on at least two samples in the current block by using the extrapolation filter, to determine a prediction block of the current block; and

determining a transform core corresponding to the current block, and encoding the current block based on the transform core corresponding to the current block and the prediction block, to obtain a bitstream.

In a third aspect, the present disclosure provides a video decoding apparatus, configured to perform the method in the above first aspect or its various implementations. Specifically, the apparatus includes a functional unit configured to perform the method in the above first aspect or its various implementations.

In a fourth aspect, the present disclosure provides a video encoding apparatus, configured to perform the method in the above second aspect or its various implementations. Specifically, the apparatus includes a functional unit configured to perform the method in the above second aspect or its various implementations.

In a fifth aspect, a video decoder is provided, and includes a processor and a memory. The memory is configured to store a computer program, and the processor is configured to call and run the computer program stored in the memory, to perform the method in the above first aspect or its various implementations.

In a sixth aspect, a video encoder is provided, and includes a processor and a memory. The memory is configured to store a computer program, and the processor is configured to call and run the computer program stored in the memory, to perform the method in the above second aspect or its various implementations.

In a seventh aspect, a video encoding and decoding system is provided, and includes a video encoder and a video decoder. The video decoder is configured to perform the method in the above first aspect or its various implementations, and the video encoder is configured to perform the method in the above second aspect or its various implementations.

In an eighth aspect, a chip is provided, and is configured to implement the method in any one of the above first aspect to second aspect or their various implementations. Specifically, the chip includes: a processor configured to call and run a computer program from a memory so that a device equipped with the chip performs the method in any one of the above first aspect to second aspect or their various implementations.

In a ninth aspect, a computer-readable storage medium is provided, and is configured to store a computer program, and the computer program causes a computer to perform the method in any one of the above first aspect to second aspect or their various implementations.

In a tenth aspect, a computer program product is provided, and includes computer program instructions, and the computer program instructions cause a computer to perform the method in any one of the above first aspect to second aspect or their various implementations.

In an eleventh aspect, a computer program is provided, and when running on a computer, causes the computer to perform the method in any one of the above first aspect to second aspect or their various implementations.

Based on the above technical solutions, the present disclosure proposes an extrapolation filter prediction method, that when predicting a current block, first determine a reference region and an extrapolation filter of the current block, and determine a filter coefficient based on the reference region, perform parallel prediction on at least two samples in the current block by using the extrapolation filter based on the filter coefficient, to determine a prediction block of the current block; and determine a transform core corresponding to the current block, and determine a reconstructed value of the current block based on the transform core and the prediction block. That is, in the embodiments of the present disclosure, when performing extrapolation filter prediction on the current block by using the extrapolation filter, the parallel prediction is performed on at least two points in the current block, thereby improving prediction speed, and then enhancing encoding and decoding efficiency.

## BRIEF DESCRIPTION OF THE DRAWINGS

FIG. 1 is a schematic block diagram of a video encoding and decoding system involved in the embodiments of the present disclosure.

FIG. 2 is a schematic block diagram of a video encoder involved in the embodiments of the present disclosure.

FIG. 3 is a schematic block diagram of a video decoder involved in the embodiments of the present disclosure.

FIG. 4A is a schematic diagram of intra prediction.

FIG. 4B is a schematic diagram of intra prediction.

FIG. 5A to FIG. 5I are schematic diagrams of intra prediction.

FIG. 6 is a schematic diagram of an intra prediction mode.

FIG. 7 is a schematic diagram of an intra prediction mode.

FIG. 8 is a schematic diagram of an intra prediction mode.

FIG. 9 is a schematic diagram of a CCCM principle.

FIG. 10 is a schematic diagram of a video decoding method provided in an embodiment of the present disclosure.

FIG. 11 is a schematic diagram of a position of a current block in a current picture.

FIG. 12 is a schematic diagram of a reconstructed region.

FIG. 13A to FIG. 13C are several schematic diagrams of reference regions.

FIG. 14A to FIG. 14G are several schematic diagrams of extrapolation filter shapes.

FIG. 15 is a schematic diagram of several extrapolation filter shapes involved in the embodiments of the present disclosure.

FIG. 16 is a schematic diagram of several extrapolation filter shapes involved in the embodiments of the present disclosure.

FIG. 17 is a schematic diagram of several extrapolation filter shapes involved in the embodiments of the present disclosure.

FIG. 18A and FIG. 18B are several schematic diagrams of extrapolation filter shapes involved in the embodiments of the present disclosure.

FIG. 19 is a schematic diagram of several extrapolation filter shapes involved in the embodiments of the present disclosure.

FIG. 20A is a sliding step size of an extrapolation filter.

FIG. 20B is a schematic diagram of a first reconstructed region.

FIG. 21 is a schematic diagram of the movement of extrapolation filters with different shapes within different types of reference regions.

FIG. 22A and FIG. 22B are schematic diagrams of extrapolation prediction on a current block by using an extrapolation filter.

FIG. 23 is a schematic diagram of extrapolation prediction on a current block along a diagonal line direction involved in the embodiments of the present disclosure.

FIG. 24A to FIG. 24C are schematic diagrams of several directions of the diagonal line.

FIG. 25 is a schematic diagram of an intra prediction mode.

FIG. 26 is a schematic diagram of determining a horizontal gradient and a vertical gradient.

FIG. 27 is a histogram of gradient magnitude values.

FIG. 28 is a schematic diagram of a video encoding method provided in an embodiment of the present disclosure.

FIG. 29 is a schematic flowchart of determining a prediction mode involved in the embodiments of the present disclosure.

FIG. 30 is a schematic block diagram of a video decoding apparatus provided in an embodiment of the present disclosure.

FIG. 31 is a schematic block diagram of a video encoding apparatus provided in an embodiment of the present disclosure.

FIG. 32 is a schematic block diagram of an electronic device provided in the embodiments of the present disclosure.

FIG. 33 is a schematic block diagram of a video encoding and decoding system provided in the embodiments of the present disclosure.

## DETAILED DESCRIPTION

The present disclosure may be applied to the field of picture encoding and decoding, the field of video encoding and decoding, the field of hardware video encoding and decoding, the field of dedicated circuit video encoding and decoding, and the field of real-time video encoding and decoding, etc. For example, solutions of the present disclosure may be combined into an audio video coding standard (AVS), such as H.264/audio video coding (AVC) standard, H.265/high efficiency video coding (HEVC) standard, and H.266/versatile video coding (VVC) standard. Alternatively, the solutions of the present disclosure may be combined into other dedicated or industrial standards for operations, and the standards contain ITU-TH.261, ISO/IECMPEG-1 Visual, ITU-TH.262 or ISO/IECMPEG-2Visual, ITU-TH.263, ISO/IECMPEG-4Visual, ITU-TH.264 (also referred to as ISO/IECMPEG-4AVC), containing scalable video coding (SVC) and multi-view video coding (MVC) extensions. It should be understood that the technology of the present disclosure is not limited to any specific coding standard or technology.

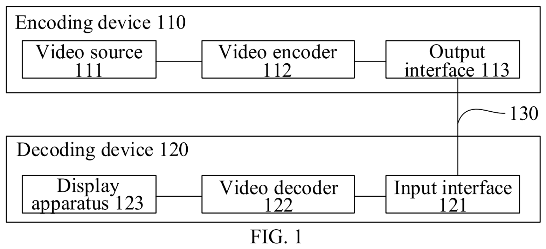

For ease of understanding, a video encoding and decoding system involved in the embodiments of the present disclosure is first introduced in combination with FIG. 1.

FIG. 1 is a schematic block diagram of a video encoding and decoding system involved in the embodiments of the present disclosure. It should be noted that FIG. 1 is only an example, and the video encoding and decoding system of the embodiments of the present disclosure includes but is not limited to that illustrated in FIG. 1. As illustrated in FIG. 1, the video encoding and decoding system 100 contains an encoding device 110 and a decoding device 120. Herein, the encoding device is used to encode video data (which may be understood as compression) to generate a bitstream, and transmit the bitstream to the decoding device. The decoding device decodes the bitstream generated by the encoding of the encoding device to obtain decoded video data.

The encoding device 110 of the embodiments of the present disclosure may be understood as a device with a video encoding function, and the decoding device 120 may be understood as a device with a video decoding function, that is, the embodiments of the present disclosure contain a wider range of apparatuses for the encoding device 110 and the decoding device 120, such as containing a smartphone, a desktop computer, a mobile computing apparatus, a notebook (e.g., laptop) computer, a tablet computer, a set-top box, a television, a camera, a display apparatus, a digital media player, a video game console, a vehicle-mounted computer, etc.

In some embodiments, the encoding device 110 may transmit the encoded video data (eg, the bitstream) to the decoding device 120 via channel 130. Channel 130 may include one or more media and/or apparatuses capable of transmitting the encoded video data from the encoding device 110 to the decoding device 120.

In an instance, channel 130 includes one or more communication media that enable the encoding device 110 to transmit the encoded video data directly to the decoding device 120 in real-time. In this instance, the encoding device 110 may modulate the encoded video data according to a communication standard and transmit modulated video data to the decoding device 120. Herein, the communication medium contains a wireless communication medium, such as a radio frequency spectrum. Optionally, the communication medium may also contain a wired communication medium, such as one or more physical transmission lines.

In another instance, channel 130 includes a storage medium, and the storage medium may store the video data encoded by the encoding device 110. The storage medium contains a variety of locally accessible data storage media, such as an optical disk, a digital video disk (DVD), a flash memory, etc. In this instance, the decoding device 120 may acquire the encoded video data from the storage medium.

In another instance, channel 130 may contain a storage server, and the storage server may store the video data encoded by the encoding device 110. In this instance, the decoding device 120 may download the stored encoded video data from the storage server. Optionally, the storage server may store the encoded video data and may transmit the encoded video data to the decoding device 120, for example, a web server (e.g., for a website), a file transfer protocol (FTP) server, etc.

In some embodiments, the encoding device 110 contains a video encoder 112 and an output interface 113. Herein, the output interface 113 may contain a modulator/demodulator (a modem) and/or a transmitter.

In some embodiments, the encoding device 110 may also include a video source 111 other than the video encoder 112 and the input interface 113.

The video source 111 may contain at least one of: a video capturing apparatus (eg, a video camera), a video archive, a video input interface, or a computer graphics system, where the video input interface is used to receive video data from a video content provider, and the computer graphics system is used to generate video data.

The video encoder 112 encodes the video data from the video source 111 to generate a bitstream. The video data may include one or more pictures or one or more sequences of pictures. The bitstream contains encoded information of the picture or the sequence of pictures in the form of a bit stream. The encoded information may contain encoded picture data and associated data. The associated data may contain a sequence parameter set (SPS), a picture parameter set (PPS) and other syntax structures. The SPS may contain a parameter applied to one or more sequences. The PPS may contain a parameter applied to one or more pictures. The syntax structure is a set of zero or more syntax elements arranged in a specified order in a bitstream.

The video encoder 112 transmits the encoded video data directly to the decoding device 120 via the output interface 113. The encoded video data may also be stored in the storage medium or the storage server, for subsequent reading by the decoding device 120.

In some embodiments, the decoding device 120 contains an input interface 121 and a video decoder 122.

In some embodiments, the decoding device 120 may include a display apparatus 123 other than the input interface 121 and the video decoder 122.

Herein, the input interface 121 contains a receiver and/or a modem. The input interface 121 may receive the encoded video data through the channel 130.

The video decoder 122 is used to decode the encoded video data to obtain decoded video data, and transmit the decoded video data to the display apparatus 123.

The display apparatus 123 displays the decoded video data. The display apparatus 123 may be integrated with the decoding device 120 or external to the decoding device 120. The display apparatus 123 may include various display apparatuses, such as a liquid crystal display (LCD), a plasma display, an organic light emitting diode (OLED) display, or other types of display apparatuses.

In addition, FIG. 1 is only an instance, and the solutions of the embodiments of the present disclosure are not limited to FIG. 1. For example, the technology of the present disclosure may also be applied to unilateral video encoding or unilateral video decoding.

A video encoding framework involved in the embodiments of the present disclosure is introduced below.

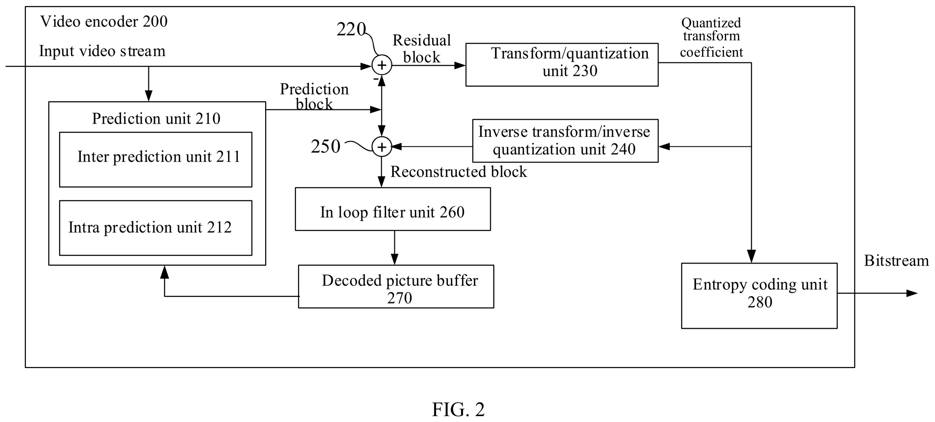

FIG. 2 is a schematic block diagram of a video encoder involved in the embodiments of the present disclosure. It should be understood that the video encoder 200 may be used to perform lossy compression on a picture, or may be used to perform lossless compression on a picture. The lossless compression may be visually lossless compression or may be mathematically lossless compression.

The video encoder 200 may be applied to picture data in a luma and chroma (YCbCr, YUV) format. For example, a YUV ratio may be 4:2:0, 4:2:2 or 4:4:4, where Y represents luma (Luma), Cb (U) represents blue chroma, Cr (V) represents red chroma, and U and V represent that the chroma (Chroma) is used to describe color and saturation. For example, in a color format, 4:2:0 represents that every 4 pixels (or referred to as samples) have 4 luma components and 2 chroma components (YYYYCbCr), 4:2:2 represents that every 4 pixels have 4 luma components and 4 chroma components (YYYYCbCrCbCr), and 4:4:4 represents full pixel display (YYYYCbCrCbCrCbCrCbCr).

For example, the video encoder 200 reads video data, and for each frame picture of the video data, partitions one frame picture into several coding tree units (CTUs). In some examples, a CTB may be referred to as a "tree block", "largest coding unit" (LCU) or "coding tree block" (CTB). Each CTU may be associated with a sample block with identical size within the picture. Each pixel may correspond to a luma (luminance) sample and two chroma (chrominance) samples. Thus, each CTU may be associated with one luma sample block and two chroma sample blocks. The size of one CTU is, for example, 128×128, 64×64, 32×32, etc. One CTU may be further partitioned into several coding units (CU) for encoding. The CU may be a rectangular block or a square block. The CU may be further partitioned into a prediction unit (PU) and a transform unit (TU), enabling separation of encoding, prediction and transform, and more flexible in processing. In an example, a CTU is partitioned into CUs in a quadtree manner, and a CU is partitioned into TUs and PUs in a quadtree manner.

The video encoder and the video decoder may support various PU sizes. Assuming that the size of a specific CU is 2N×2N, the video encoder and the video decoder may support a PU size of 2N×2N or N×N for intra prediction, and support symmetric PUs of 2N×2N, 2N×N, N ×2N, N×N or similar sizes for inter prediction. The video encoder and video decoder may also support asymmetric PUs of 2N×nU, 2N×nD, nL×2N, and nR×2N for inter prediction.

In some embodiments, as illustrated in FIG. 2, the video encoder 200 may include: a prediction unit 210, a residual unit 220, a transform/quantization unit 230, an inverse transform/inverse quantization unit 240, a reconstruction unit 250, an in loop filter unit 260, a decoded picture buffer 270 and an entropy encoding unit 280. It should be noted that the video encoder 200 may contain more, fewer or different functional components.

Optionally, in the present disclosure, a current block may be referred to as a current coding unit (CU) or a current prediction unit (PU), etc. The prediction block may also be referred to as a prediction picture block or a picture prediction block, and a reconstruction picture block may also be referred to as a reconstruction block or a picture reconstruction picture block.

In some embodiments, the prediction unit 210 includes an inter prediction unit 211 and an intra prediction unit 212. Since there is a strong correlation between neighboring samples in one frame (or referred to as picture) of a video, an intra prediction method is used in the video encoding and decoding technology to eliminate spatial redundancy between the neighboring samples. Since there is a strong similarity between neighboring frames in a video, an inter prediction method is used in the video encoding and decoding technology to eliminate temporal redundancy between the neighboring frames, thereby improving the encoding efficiency.

The inter prediction unit 211 may be used for inter prediction, the inter prediction may include motion estimation and motion compensation. It may refer to picture information of different frames, and inter prediction uses motion information to find a reference block from a reference frame, and generates a prediction block according to the reference block, to eliminate the temporal redundancy. The frame used for inter prediction may be a P frame and/or a B frame, where the P frame refers to a forward prediction frame and the B frame refers to a bi-directional prediction frame. Inter prediction uses motion information to find a reference block from a reference frame and generates a prediction block according to the reference block. The motion information includes a reference frame list in which the reference frame is located, a reference frame index, and a motion vector. The motion vector may be integer-sample or fractional-sample. If the motion vector is fractional-sample, then it is necessary to use extrapolation filtering in the reference frame to obtain a required fractional-sample block. Here, an integer-sample block or fractional-sample block of the reference frame found according to the motion vector is referred to as a reference block. The reference block is used as a prediction block directly in some technologies, while a prediction block is generated on the basis of processing the reference block in some technologies. The prediction block being generated on the basis of processing the reference block, may also be understood as using the reference block as a prediction block and then generating a new prediction block on the basis of processing the prediction block.

The intra prediction unit 212 only refers to information of a same frame picture to predict sample information of a current encoded picture block, to eliminate spatial redundancy. The frame used for intra prediction may be an I frame.

There are multiple prediction modes for intra prediction. Taking the H series of international digital video coding standards as an example, there are 8 angular prediction modes and 1 non-angular prediction mode for the H.264/AVC standard, and the H.265/HEVC is extended to 33 angular prediction modes and 2 non-angular prediction modes. The intra prediction mode used by HEVC includes a planar mode, a DC mode and 33 angular modes, for a total of 35 prediction modes. The intra modes used by VVC are a Planar mode, a DC mode, and 65 angular modes, for a total of 67 prediction modes.

It should be noted that with the increase of angular modes, intra prediction will be more accurate and more in line with the needs of the development of high-definition and ultra-high-definition digital video.

The residual unit 220 may generate a residual block of a CU based on a sample block of the CU and a prediction block of a PU of the CU. For example, the residual unit 220 may generate a residual block of the CU, so that each sample of the residual block has a value equal to a difference between: a sample of the sample block of the CU and a corresponding sample of the prediction block of the PU of the CU.

The transform/quantization unit 230 may quantize a transform coefficient. The transform/quantization unit 230 may quantize the transform coefficient associated with a TU of a CU based on a quantization parameter (QP) value associated with the CU. The video encoder 200 may adjust a degree of quantization applied to a transform coefficient associated with the CU by adjusting the QP value associated with the CU.

The inverse transform/inverse quantization unit 240 may apply inverse quantization and inverse transform to a quantized transform coefficient, respectively, to reconstruct a residual block from the quantized transform coefficient.

The reconstruction unit 250 may add a sample of the reconstruction residual block to a corresponding sample of one or more prediction blocks generated by the prediction unit 210, to generate a reconstruction picture block associated with the TU. By reconstructing the sample block of each TU of the CU in this manner, the video encoder 200 may reconstruct the sample block of the CU.

The in loop filter unit 260 is used to process the inverse-transformed and inverse-quantized samples to compensate for distortion information, and provide a better reference for subsequent encoded samples. For example, a deblocking filtering operation may be performed to reduce block artifacts of the sample block associated with the CU.

In some embodiments, the in loop filter unit 260 includes a deblocking filter unit and a sample adaptive offset/adaptive loop filter (SAO/ALF) unit, where the deblocking filter unit is used to remove block artifacts, and the SAO/ALF unit is used to remove a ringing effect.

The decoded picture buffer 270 may store the reconstruction sample block. The inter prediction unit 211 may use a reference picture containing the reconstruction sample block to perform the inter prediction on a PU of another picture. In addition, the intra prediction unit 212 may use the reconstruction sample block in the decoded picture buffer 270 to perform intra prediction on other PUs in the same picture as the CU.

The entropy encoding unit 280 may receive the quantized transform coefficient from the transform/quantization unit 230. The entropy encoding unit 280 may perform one or more entropy encoding operations on the quantized transform coefficient, to generate entropy-encoded data.

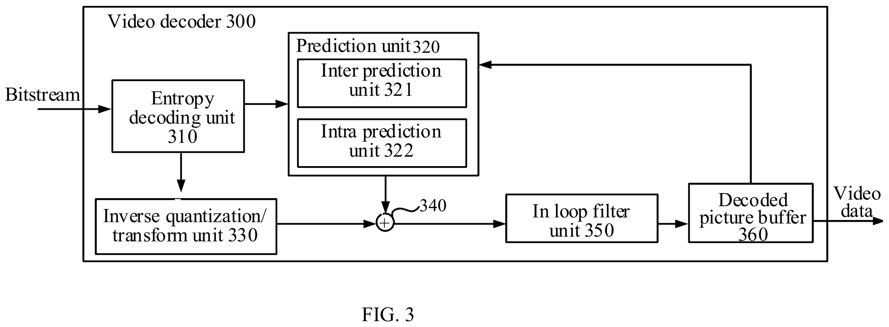

FIG. 3 is a schematic block diagram of a video decoder involved in the embodiments of the present disclosure.

As illustrated in FIG. 3, the video decoder 300 contains: an entropy decoding unit 310, a prediction unit 320, an inverse quantization/inverse transform unit 330, a reconstruction unit 340, an in loop filter unit 350, and a decoded picture buffer 360. It should be noted that the video decoder 300 may contain more, fewer or different functional components.

The video decoder 300 may receive a bitstream. The entropy decoding unit 310 may parse the bitstream to extract a syntax element from the bitstream. As a part of parsing the bitstream, the entropy decoding unit 310 may parse the entropy-coded syntax element in the bitstream. The prediction unit 320, the inverse quantization/inverse transform unit 330, the reconstruction unit 340, and the in loop filter unit 350 may decode video data according to the syntax element extracted from the bitstream, that is, to generate decoded video data.

In some embodiments, the prediction unit 320 includes an intra prediction unit 322 and an inter prediction unit 321.

The intra prediction unit 322 may perform the intra prediction to generate a prediction block of a PU. The intra prediction unit 322 may use an intra prediction mode to generate a prediction block of a PU based on a sample block of a spatial neighboring PU. The intra prediction unit 322 may also determine the intra prediction mode of the PU according to one or more syntax elements parsed from the bitstream.

The inter prediction unit 321 may construct a first reference picture list (list 0) and a second reference picture list (list 1) according to the syntax element parsed from the bitstream. In addition, if the PU is encoded by using the inter prediction, the entropy decoding unit 310 may parse motion information of the PU. The inter prediction unit 321 may determine one or more reference blocks of the PU according to motion information of the PU. The inter prediction unit 321 may generate a prediction block of the PU according to one or more reference blocks of the PU.

The inverse quantization/inverse transform unit 330 may inverse quantize (i.e., dequantize) a transform coefficient associated with a TU. The inverse quantization/inverse transform unit 330 may use a QP value associated with the CU of the TU to determine a degree of the quantization.

After inverse-quantizing the transform coefficient, the inverse quantization/inverse transform unit 330 may apply one or more inverse transforms to the inverse-quantized transform coefficient, to generate a residual block associated with the TU.

The reconstruction unit 340 uses the residual block associated with the TU of the CU and the prediction block of the PU of the CU to reconstruct a sample block of the CU. For example, the reconstruction unit 340 may add a sample of the residual block to a corresponding sample of the prediction block to reconstruct the sample block of the CU, to obtain a reconstruction picture block.

The in loop filter unit 350 may perform a deblocking filtering operation to reduce block artifacts of the sample block associated with the CU.

The video decoder 300 may store the reconstruction picture of the CU in the decoded picture buffer 360. The video decoder 300 may use the reconstruction picture of the decoded picture buffer 360 as a reference picture for subsequent prediction, or transmit the reconstruction picture to a display apparatus for presentation.

A basic procedure of video encoding and decoding is as follows: at an encoder side, a frame picture is partitioned into blocks, and for a current block, the prediction unit 210 generates a prediction block of the current block by using intra prediction or inter prediction. The residual unit 220 may calculate a residual block based on the prediction block and an original block of the current block, that is, a difference between the prediction block and the original block of the current block. The residual block may also be referred to as residual information. The residual block is transformed and quantized by the transform/quantization unit 230 and processed in other ways, so that information to which human's eyes are not sensitive may be removed, thereby eliminating visual redundancy. Optionally, the residual block before transform and quantization performed by the transform/quantization unit 230 may be referred to as a time domain residual block, and the time domain residual block transformed and quantized by the transform/quantization unit 230 may be referred to as a frequency residual block or a frequency domain residual block. The entropy encoding unit 280 receives a quantized transform coefficient output by the transform/quantization unit 230, and may perform entropy-coding on the quantized transform coefficient, to output a bitstream. For example, the entropy encoding unit 280 may eliminate character redundancy according to a target context model and probability information of a binary bitstream.

At a decoder side, the entropy decoding unit 310 may parse the bitstream to obtain prediction information, a quantization coefficient matrix, etc., of the current block, and the prediction unit 320 generates a prediction block of the current block by using intra prediction or inter prediction for the current block based on the prediction information. The inverse quantization/inverse transform unit 330 uses the quantization coefficient matrix obtained from the bitstream to perform inverse quantization and inverse transform on the quantization coefficient matrix to obtain a residual block. The reconstruction unit 340 adds the prediction block and the residual block, to obtain a reconstruction block. The reconstruction block constitutes a reconstruction picture. The in loop filter unit 350 performs in loop filtering on the reconstruction picture based on a picture or a block, to obtain a decoded picture. The encoder side also needs to perform operations similar to those of the decoder side, to obtain a decoded picture. The decoded picture may also be referred to as a reconstruction picture, and the reconstruction picture may be used as a reference frame of the inter prediction for a subsequent frame.

It should be noted that block partition information, as well as mode information such as prediction, transform, quantization, entropy encoding, in loop filtering, etc., or parameter information, etc., determined by the encoder side, are carried in the bitstream when necessary. The decoder side determines the same block partition information, mode information such as prediction, transform, quantization, entropy encoding, in loop filtering, etc., or parameter information as the encoder side, by parsing the bitstream and performing analysis according to existing information, thereby ensuring that the decoded picture obtained by the encoder side is the same as the decoded picture obtained by the decoder side.

The above is the basic procedure of a video codec under the block-based hybrid coding framework. With the development of the technology, some modules or steps of this framework or procedure may be optimized. The present disclosure is applicable to the basic procedure of the video codec under the block-based hybrid coding framework, but is not limited to this framework and procedure.

In the embodiments of the present disclosure, the current block may be a current coding unit (CU) or a current prediction unit (PU), etc. Due to the need for parallel processing, a picture may be partitioned into slices, etc., and slices in a same picture may be processed in parallel, that is, there is no data dependency between the slices. The "frame" is a commonly used term, which may generally be understood as one frame being one picture. In the present disclosure, the frame may also be replaced by a picture or a slice, etc.

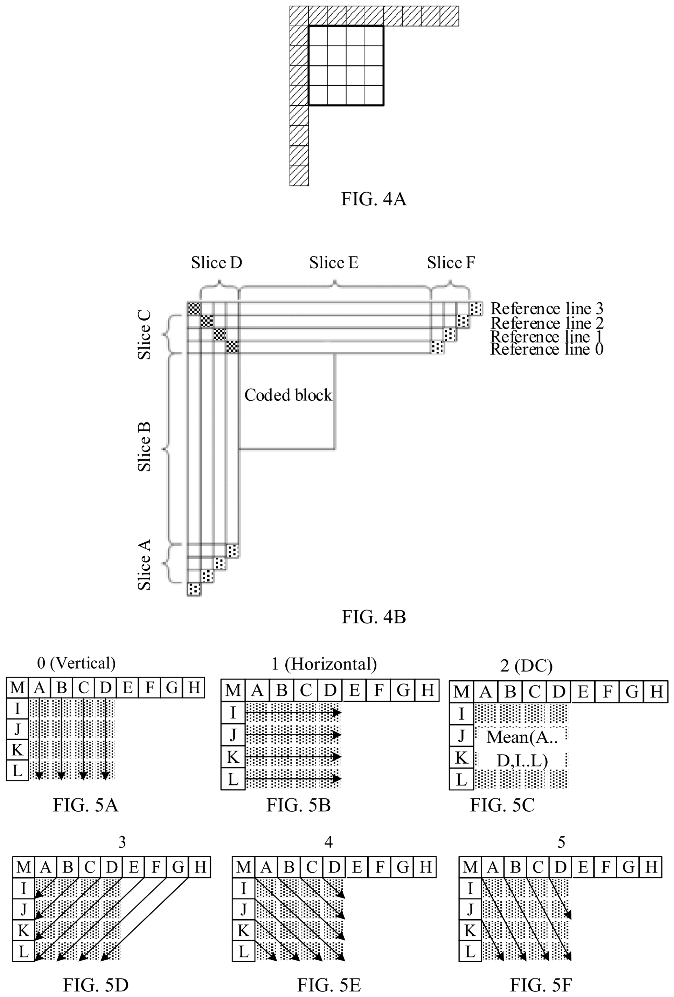

In intra prediction, angle mode(s) and non-angle mode(s) are usually used to predict the current coding block to obtain a prediction block, and according to the rate distortion information calculated from the prediction block and the original block, an optimal prediction mode for the current coding unit is selected, and then this prediction mode is transmitted to a decoder side through a bitstream. The decoder side parses the prediction mode, predicts and obtains the prediction picture of the current decoding block, and superimposes residual samples transmitted through the bitstream, to obtain a reconstructed picture. The intra prediction method is to predict the current block by using the coded reconstruction sample surrounding the current block as the reference sample. FIG. 4A is a schematic diagram of intra prediction. As illustrated in FIG. 4A, the size of the current block is $4 \times 4$, and samples in one row to the left of the current block and samples in one column above the current block are reference samples of the current block. The intra prediction is to predict the current block by using these reference samples. These reference samples may all be available, i.e., all have been coded. A part of these reference samples may also be unavailable, for example, if the current block is at the leftmost side of the whole frame, then reference samples at the left of the current block are unavailable. Alternatively, when coding the current block, a part at the bottom-left of the current block has not been coded, then the reference samples at the bottom-left are also unavailable. In a case where the reference samples are unavailable, available reference samples or certain values or certain methods may be used for filling, or not filling.

FIG. 4B is a schematic diagram of intra prediction. As illustrated in FIG. 4B, the multiple reference line intra prediction method (MRL) may use more reference samples to improve the encoding and decoding efficiency, for example, by using 4 reference rows/columns as reference samples of the current block.

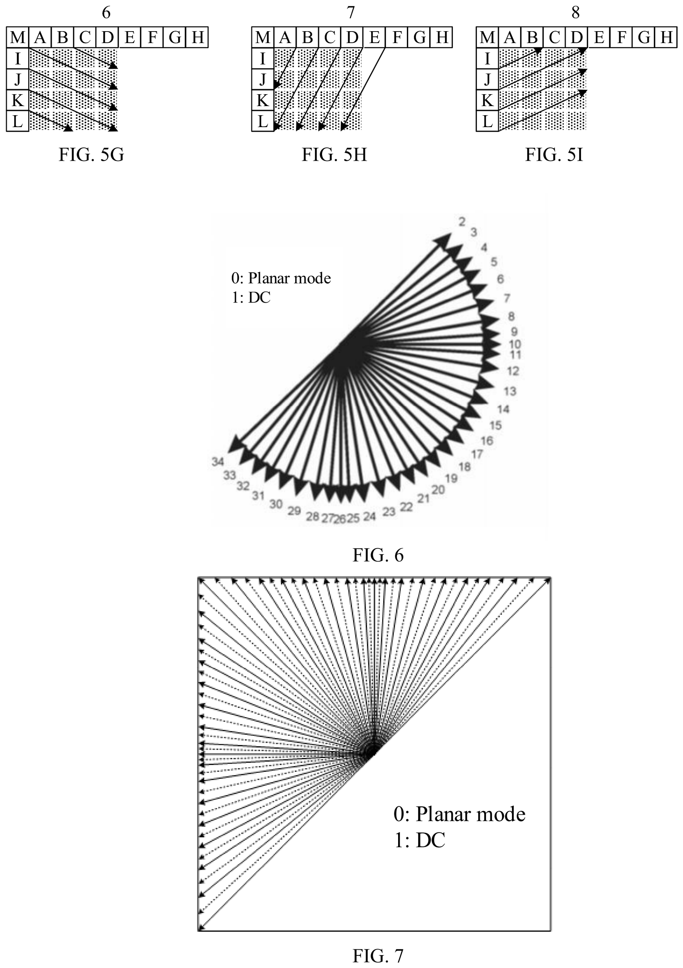

Furthermore, there are multiple prediction modes for the intra prediction. FIG. 5A to FIG. 5I are schematic diagrams of the intra prediction. As illustrated in FIG. 5A to FIG. 5I, intra prediction for a 4x4 block in H.264 may mainly include 9 modes. Herein, in mode 0 as illustrated in FIG. 5A, samples above the current block are copied in a vertical direction to the current block as prediction values; in mode 1 as illustrated in FIG. 5B, reference samples on the left are copied in a horizontal direction to the current block as prediction values; in mode 2 of direct current (DC) as illustrated in FIG. 5C, an average value of these eight points A to D and I to L is used as prediction values for all points; and in mode 3 to mode 8 as illustrated in FIG. 5D to FIG. 5I, the reference samples are copied to corresponding positions of the current block at a certain angle, respectively. Because some positions of the current block cannot correspond exactly to reference samples, it may be necessary to use a weighted average value of the reference samples, or fractional-samples of the extrapolated reference samples.

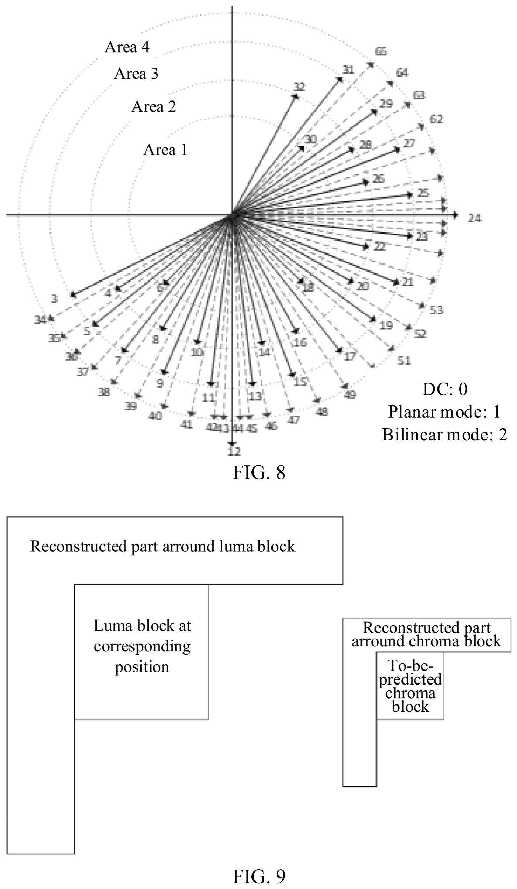

In addition, there are Plane mode, Planar mode and other modes. With the development of the technology and the expansion of blocks, there are more and more angular prediction modes. FIG. 6 is a schematic diagram of an intra prediction mode. As illustrated in FIG. 6, the intra prediction modes as used by HEVC include a Planar mode, a DC mode, and 33 angular modes, for a total of 35 prediction modes. FIG. 7 is a schematic diagram of an intra prediction mode. As illustrated in FIG. 7, intra modes used by VVC include a Planar mode, a DC mode, and 65 angular modes, for a total of 67 prediction modes. FIG. 8 is a schematic diagram of an intra prediction mode. As illustrated in FIG. 8, VS3 uses a total of 66 prediction modes, including a DC mode, a Plane mode, a Bilinear mode, a PCM mode, and 62 angular modes.

There are also some other technologies to improve the prediction, such as by improving the fractional-sample extrapolation of the reference sample, filtering the prediction sample, etc. For example, for multiple intra prediction filter (MIPF) in the AVS3, different filters for different block sizes are used to generate prediction values. For samples at different positions in the same block, a filter is used for samples closer to the reference sample to generate prediction values, and another filter is used for samples farther from the reference sample to generate prediction values. The technology of filtering prediction samples, is the intra prediction filter (IPF) in the AVS3, for example, and the prediction value may be filtered by using the reference sample.

In some embodiments, in the current video encoding and decoding, an adaptive loop filter (ALF) technology is used in the in loop filtering unit. For example, the ALF technology is used to filter the reconstructed picture to obtain a final decoded picture.

The following is an introduction to the adaptive loop filter (ALF) technology.

ALF is a filter in the loop filter, which is designed based on the principle of the Wiener filter, and it is a filter for minimizing an error between a target sample and an input sample. In the loop filter, the target sample is the original picture, and the input is the reconstructed picture.

Before using ALF for filtering, a filter coefficient is first determined.

Exemplarily, by constructing a Wiener-Hopf equation as shown in Formula (1) and solving this Wiener-Hopf equation, the filter coefficient of the extrapolation filter may be obtained:

$$\begin{bmatrix} \sum_{||\mathcal{R}||} t[r+p_0]t[r+p_0] & \cdots & \sum_{||\mathcal{R}||} t[r+p_{N-1}]t[r+p_0] \\ \vdots & \ddots & \vdots \\ \sum_{||\mathcal{R}||} t[r+p_0]t[r+p_{N-1}] & \cdots & \sum_{||\mathcal{R}||} t[r+p_{N-1}]t[r+p_{N-1}] \end{bmatrix} \begin{bmatrix} c_0 \\ \vdots \\ c_{N-1} \end{bmatrix} = \begin{bmatrix} \sum_{||\mathcal{R}||} o[r]t[r+p_0] \\ \vdots \\ \sum_{||\mathcal{R}||} o[r]t[r+p_{N-1}] \end{bmatrix} \quad (1)$$

Where $\mathcal{R}$ represents a range of the current 2D picture, and for example, if the input of the filter is a reconstructed picture, $\mathcal{R}$ denotes a reconstructed region surrounding the current block in the reconstructed picture. r is a position of a sample within $\mathcal{R}$. Exemplarily, the coordinate of the sample at the position r may be represented as (x, y). $o[r]$ is an original sample value of the sample at the position r, and $t[r]$ is a sample value to be filtered at the position r, and exemplarily, if the input of the filter is a reconstructed picture, $t[r]$ is also referred to as a reconstructed value of the sample at the position r in the reconstructed picture. $\mathbf{c} = [c_0, c_1, \ldots, c_{N-1}]^T$ is the filter coefficient of the adaptive filter, and $\{p_0, p_1, \ldots, p_{N-1}\}$ are relative position differences between N positions corresponding to the position r and the position r.

In the above Formula (1), except for the filter coefficient $\mathbf{c} = [c_0, c_1, \ldots, c_{N-1}]^T$ of the adaptive filter, all other data are known, and thus, the filter coefficient of the filter may be obtained by solving the above Formula (1).

In an example, the filter coefficient of the filter may be obtained by solving the above Wiener-Hopf equation, in the mode of a Cholesky decomposition autocorrelation coefficient matrix.

After determining the filter coefficient of the filter based on the above Formula (1), the sample to be filtered is filtered by the following Formula (2), to obtain the filtered sample:

$$t[r]' = \sum_{n=0}^{N-1} c_n \times t[r+p_n] \qquad (2)$$

Where $t[r]'$ is a sample value filtered at the position r, $p_n$ is a relative position difference between an n-th position among N positions corresponding to the position r and the position r, and $t[r+p_n]$ denotes a sample value to be filtered at a position $r + p_n$.

A convolutional cross component model (CCCM) is a process of predicting a chroma sample by a reconstructed sample of a luma component. Its advantage is that it may acquire the coefficient of the CCCM filter from the decoder side by using the reconstructed sample, thereby eliminating the overhead of storing the filter coefficient into a bitstream, like the ALF. As illustrated in FIG. 9, the coefficient of the CCCM is obtained by calculating reconstructed samples surrounding a current chroma block to be predicted and reconstructed samples surrounding a luma block at a position corresponding to the chroma block.

To enhance compression performance for the video, an extrapolation filter prediction mode is proposed, and this extrapolation filter prediction mode is to determines the filter coefficient of the extrapolation filter by the reconstructed region surrounding the current block, perform extrapolation filter prediction on each point in the current block by using the extrapolation filter based on this filter coefficient, to obtain the prediction value of each point in the current block, and then obtain a prediction block of the current block.

In the related art, when performing extrapolation filter prediction on each sample in the current block by using the extrapolation filter, the extrapolation filter is performed on each sample one by one. That is, after ending the extrapolation filter prediction of a previous sample, extrapolation filter prediction is performed on a next sample, where the prediction value of the previous sample is used when performing extrapolation filter prediction on the next sample. As can be seen, in the related art, prediction is performed point by point when performing extrapolation filter prediction on the current block, and the prediction on only one point can be performed at a time, resulting in low prediction efficiency and thereby affecting the overall encoding and decoding performance of the video.

To address the above technical problems, the embodiments of the present disclosure are to perform parallel prediction on samples in a current block when the current block is predicted by using the extrapolation filter prediction mode, thereby improving prediction efficiency and enhancing the encoding and decoding performance of the video.

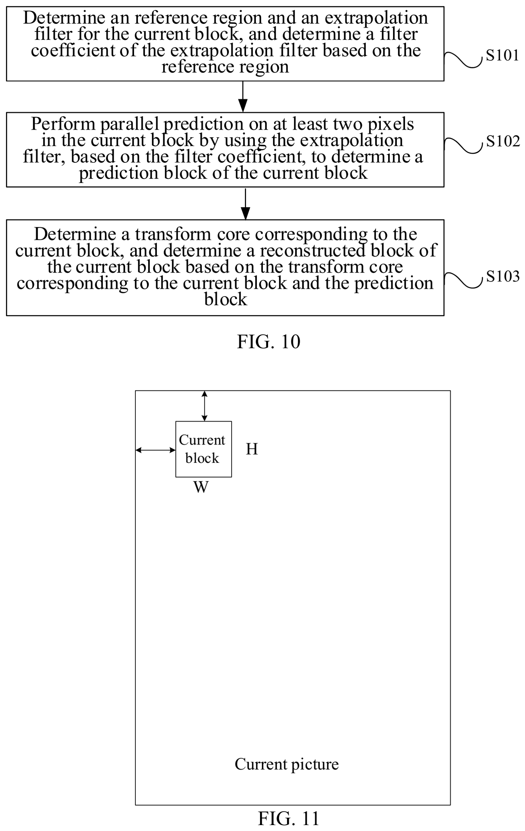

In conjunction with FIG. 10, a video decoding method provided in the embodiments of the present disclosure is introduced below, taking the decoder side as an example.

FIG. 10 is a schematic diagram of a video decoding method provided in an embodiment of the present disclosure, and the embodiment of the present disclosure is applied to the video decoder illustrated in FIG. 1 and FIG. 3. As illustrated in FIG. 10, the method of the embodiments of the present disclosure includes the following.

In S101: a reference region and an extrapolation filter of a current block are determined, and a filter coefficient of the extrapolation filter is determined based on the reference region.

When decoding the current block, the decoder side decodes a bitstream to obtain a quantized coefficient of the current block, performs inverse-quantization on the quantized coefficient to obtain a transform coefficient of the current block, and performs inverse transform on the transform coefficient to obtain a residual value of the current block. Then, a prediction mode of the current block is determined, a prediction value of the current block is determined based on the prediction mode, and a reconstructed value of the current block is obtained based on the prediction value and the residual value of the current block.

In some embodiments, the current block is also referred to as a to-be-predicted block.

In the embodiments of the present disclosure, the decoder side first determines the prediction mode of the current block.

In some embodiments, the decoder side determines the prediction mode of the current block by at least the following schemes.

Scheme 1: The encoder side determines the prediction mode of the current block, and for example, determines, from candidate prediction modes composed of traditional prediction modes and extrapolation filter prediction modes illustrated in FIG. 6 or FIG. 7, a candidate prediction mode with the lowest cost as the prediction mode of the current block. Then, the encoder side adds indication information of the prediction mode of the current block into a bitstream. Thus, the decoder side obtains the indication information of the prediction mode of the current block by decoding the bitstream, and then determines the prediction mode of the current block based on the indication information, and then predicts the current block by using the intra prediction mode, to obtain a prediction value of the current block.

For example, if the terminal device determines that the prediction mode of the current block is a traditional prediction mode, an index of the prediction mode of the current block is used as the indication information of the prediction mode and then signalled (or referred to as written) into the bitstream. The decoder side decodes the bitstream to obtain the index of the prediction mode, and then determines the prediction mode of the current block from the traditional prediction modes illustrated in FIG. 6 or FIG. 7, based on the index.

Scheme 2: The encoder side constructs an intra prediction mode candidate list, and the intra prediction mode of the current block is selected in this intra prediction mode candidate list, and it should be noted that this intra prediction mode candidate list includes extrapolation filter prediction mode(s). Then, the encoder side signals a sequence number (or an index number) of the intra prediction mode of the current block in the intra prediction mode candidate list into the bitstream. Thus, the decoder side determines the sequence number of the intra prediction mode of the current block in the intra prediction mode candidate list, by decoding the bitstream, and meanwhile, constructs an intra prediction mode candidate list based on the same scheme as the encoder side (it should be noted that the constructed intra prediction mode candidate list includes extrapolation filter prediction mode(s)), and then determines the intra prediction mode of the current block from the constructed intra prediction mode candidate list, based on the sequence number of the intra prediction mode of the current block in the intra prediction mode candidate list. Finally, the current block is predicted by using the determined intra prediction mode of the current block, to obtain the prediction value of the current block.

Scheme 3: The encoder side constructs an intra prediction mode candidate list, where the intra prediction mode candidate list includes extrapolation filter prediction mode(s), and then, selects the intra prediction mode of the current block from this intra prediction mode candidate list, and for example, determines a cost of each candidate prediction mode in the intra prediction mode candidate list on a template of the current block, and then determines the intra prediction mode of the current block based on the cost. Correspondingly, the decoder side constructs an intra prediction mode candidate list based on the same scheme as the encoder side, where the list of intra prediction mode candidates also includes extrapolation filter prediction mode(s), and then, determines a cost of each candidate prediction mode in the intra prediction mode candidate list on the template of the current block, and then determines the intra prediction mode of the current block based on the cost. Finally, the current block is predicted by using the determined intra prediction mode of the current block, to obtain the prediction value of the current block.

Scheme 4: The encoder side and decoder side use the extrapolation filter prediction mode by default to predict the current block.

The decoder side, in addition to determining whether the current block is predicted by using the extrapolation filter prediction mode through the schemes in Scheme 1 to Scheme 4 mentioned above, may determine whether the extrapolation filter prediction mode is used for the current block through the following Scheme 5.

Scheme 5: The decoder side decodes the bitstream to obtain third information, and the third information is used to indicate whether the current block is predicted by using the extrapolation filter prediction mode. If the decoder side determines that the current block is predicted by using the extrapolation filter prediction mode based on the third information, it determines the reference region and the extrapolation filter of the current block.

In this Scheme 5, if the encoder side determines that the extrapolation filter prediction mode is used for the current block, it signals the third information into the bitstream, and thus, the decoder side obtains the third information by decoding the bitstream, and then determines whether the current block is predicted by using the extrapolation filter prediction mode, according to the third information. If the third information indicates that the current block is predicted by using the extrapolation filter prediction mode, the decoder side uses this extrapolation filter prediction mode to predict the current block, to obtain the prediction block of the current block. If the third information indicates that the current block is not predicted by using the extrapolation filter prediction mode, the decoder side skips a step of predicting the current block by using the extrapolation filter prediction mode, and further determines the prediction mode of the current block, and predicts the current block by using the determined prediction mode, to obtain the prediction block of the current block.

The specific implementation form of the third information mentioned above is not limited in the embodiments of the present disclosure, and may be any indication information that can indicate whether the current block is predicted by using the extrapolation filter prediction mode.

In an example, the third information may be represented as intra_eip_flag, and thus, whether the current block is predicted by using the extrapolation filter prediction mode may be determined by different values assigned to intra_eip_flag. For example, when intra_eip_flag = 0, it indicates that the current block is not predicted by using the extrapolation filter prediction mode; when intra_eip_flag = 1, it indicates that the current block is predicted by using the extrapolation filter prediction mode. In this way, the encoder side signals the preset flag intra_eip_flag into the bitstream, and the decoder side determines the prediction mode of the current block, by the value of the decoded preset flag intra_eip_flag, and for example, when the preset flag intra_eip_flag = 1, it indicates that the prediction mode of the current block is the extrapolation filter prediction mode, and the decoder side uses the extrapolation filter prediction mode to predict the current block.

In some embodiments, usage condition(s) for the extrapolation filter prediction mode are defined, and based on this, before determining the reference region and the extrapolation filter of the current block, it is implemented to determine whether the extrapolation filter prediction mode is allowed to be used for predicting the current picture block.

The specific scheme for determining whether the extrapolation filter prediction mode is allowed to be used for predicting the current picture block is not limited in the embodiments of the present disclosure. That is, the specific usage condition(s) for the extrapolation filter prediction mode are not limited.

In some embodiments, to improve the prediction accuracy of the extrapolation filter prediction mode, the extrapolation filter prediction mode is used for some blocks that meet requirements, while the extrapolation filter prediction mode is not used for some blocks that do not meet requirements. Based on this, before decoding the bitstream to obtain the third information, the decoder side also needs to determine whether a position of the current block in the current picture meets a preset position requirement and determine whether a size of the current block meets a preset block size, and if it is determined that the position of the current block in the current picture meets the preset position requirement and the size of the current block meets the preset block size, the bitstream is decoded to obtain the third information.

The present disclosure does not impose limitations on the preset position requirement or the preset block size, which are specifically determined according to actual needs.

In an example, as illustrated in FIG. 11, it is assumed that a top-left corner of the current picture is at a position (0, 0), and a top-left corner of the current block is at a position (x, y), where the preset position requirement is that the x of the current block is greater than or equal to a first preset value XX, and the y value of the current block is greater than or equal to a second preset value YY.

The embodiments of the present disclosure do not impose limitations on the specific values of the first preset value and the second preset value mentioned above.

Exemplarily, the first preset value and the second preset value are the same.

Exemplarily, the first preset value and the second preset value are both 13, that is, when a distance from a top side of the current block to a top side of the current picture is greater than or equal to 13 sample rows, and a distance from a left side of the current block to a left side of the current picture is greater than or equal to 13 sample columns, the position of the current block in the current picture meets the preset position requirement.

In an example, continuing to refer to FIG. 11, assuming that a width of the current block is W and a height of the current block is H, the preset block size requirement is that the width W of the current block is less than or equal to a third preset value A, and the height H of the current block is less than or equal to a fourth preset value B.

The specific values of the third preset value and the fourth preset value mentioned above are not limited in the embodiments of the present disclosure.

For example, the third preset value and the fourth preset value are the same.

For example, the third preset value and the fourth preset value are both 32, that is, when the width and the height of the current block are both less than or equal to 32, it means that the current block meets the preset block size requirement.

In the embodiments of the present disclosure, before determining whether the current block is predicted by using the extrapolation filter prediction mode, the decoder side first determines whether the position of the current block in the current picture meets the preset position requirement and determines whether the size of the current block meets the preset block size requirement. If the position of the current block in the current picture meets the preset position requirement and the size of the current block meets the preset block size requirement, it decodes the bitstream to obtain the third information, and determines whether the current block is predicted by using the extrapolation filter prediction mode based on the third information. For example, as illustrated in FIG. 11, if the distance from the top side of the current block to the top side of the current picture is greater than or equal to 13 sample rows, the distance from the left side of the current block to the left side of the current picture is greater than or equal to 13 sample columns, and the width and the height of the current block are both less than or equal to 32, the decoder side decodes the bitstream to obtain the third information.

In some embodiments, the first preset value, the second preset value, the third preset value, and the fourth preset value mentioned above are default values.

In some embodiments, the first preset value, the second preset value, the third preset value, and the fourth preset value mentioned above are values decoded from the bitstream by the decoder side.

In some embodiments, if the position of the current block in the current picture does not meet the preset position requirement, and/or the size of the current block does not meet the preset block size requirement, it is determined that the current block is not predicted by using the extrapolation filter prediction mode.

In some embodiments, before determining whether the position of the current block in the current picture meets the preset position requirement and determining whether the size of the current block meets the preset block size, the decoder side further: decodes the bitstream to obtain second information, where the second information is used to indicate whether the extrapolation filter prediction mode is allowed to be used for predicting a current sequence; and if the second information indicates that the extrapolation filter prediction mode is allowed to be used for predicting the current sequence, determines whether the position of the current block in the current picture meets the preset position requirement, and determines whether the size of the current block meets the preset block size.

In the embodiments of the present disclosure, the high-level syntax element, such as the sequence-level second information, is used to indicate whether the extrapolation filter prediction mode is allowed to be used for predicting the current sequence. If the second information indicates that the extrapolation filter prediction mode is allowed to be used for predicting the current sequence, the decoder side determines whether the position of the current block in the current picture meets the preset position requirement, and determines whether the size of the current block meets the preset block size, and then, if it is determined that the position of the current block in the current picture meets the preset position requirement and it is determined that the size of the current block meets the preset block size requirement, decodes the third information to determine whether the current block is predicted by using the extrapolation filter prediction mode.

In some embodiments, if the second information indicates that the extrapolation filter prediction mode is not allowed to be used for predicting the current sequence, the decoder side skips the steps of determining whether the position of the current block in the current picture meets the preset position requirement and determining whether the size of the current block meets the preset block size requirement, and skips the step of decoding the third information.

The specific indication form of the second information is not limited in the embodiments of the present disclosure, and may be any indication information that can indicate whether the extrapolation filter prediction mode is allowed to be used for predicting the current sequence.

In an example, the second information may be represented as sps_eip_enabled_flag, so that whether the extrapolation filter prediction mode is allowed to be used for predicting the current sequence may be determined by assigning different values to sps_eip_enabled_flag. For example, when sps_eip_enabled_flag = 0, it indicates that the extrapolation filter prediction mode is not allowed to be used for predicting the current sequence, and when sps_eip_enabled_flag = 1, it indicates that the extrapolation filter prediction mode is allowed to be used for predicting the current sequence.

Exemplarily, the second information is carried in a sequence-level parameter set (sequence parameter set, SPS). For example, as shown in Table 1:

Table 1

| seq_parameter_set_rbsp( ) { | Descriptor |
|---|---|
| ... ... | |
| **sps_eip_enabled_flag** | u(1) |
| ... ... | |
| } | |

sps_eip_enabled_flag indicates the second information, and the sps_eip_enabled_flag is carried in seq_parameter_set_rbsp( ). For example, when sps_eip_enabled_flag = 0, it indicates that the extrapolation filter prediction mode is not allowed to be used for predicting the current sequence, and when sps_eip_enabled_flag= 1, it indicates that the extrapolation filter prediction mode is allowed to be used for predicting the current sequence.

In some embodiments, the embodiments of the present disclosure may further include: indicating whether the extrapolation filter prediction technology is used, by a general constraints information (GCI) flag. Exemplarily, the gci_no_eip_constraint_flag indicates whether the extrapolation filter prediction technology is enabled for the current video. Exemplarily, as shown in Table 2, the gci_no_eip_constraint_flag is carried in the general constraints information general_constraints_info( ).

Table 2

| general_constraints_info( ) { | Descriptor |
|---|---|
| **gci_present_flag** | u(1) |
| if( gci_present_flag ) { | |
| ... ... | |
| **gci_no_eip_constraint_flag** | u(1) |
| ... ... | |
| } | |

As shown in Table 2, if gci_no_eip_constraint_flag = 1, it indicates that the extrapolation filter prediction technology is not enabled for the current video, i.e., it is limited that the sequence-level extrapolation filter intra prediction technology must be 0 in all pictures, that is, it indicates that the extrapolation filter intra prediction technology is not allowed to be used for all sequences in the current video. If gci_no_eipconstraint_flag = 0 indicates that the extrapolation filter prediction technology is enabled for the current video, it is not limited that the sequence-level extrapolation filter intra prediction technology must be 0 in all pictures.

As can be seen from the above, if syntax elements of the embodiments of the present disclosure include the high-level syntax elements gci_no_eip_constraint_flag and sps_eip_enabled_flag, as well as the block-level intra_eip_flag. The decoder side first decodes the high-level syntax element, i.e., first decodes gci_no_eip_constraint_flag, and if gci_no_eip_constraint_flag = 0, continues to decode sps_eip_enabled_flag, and if sps_eip_enabled flag = 1, parses the syntax elements of the block.

Exemplarily, block-level syntax elements are shown in Table 3:

Table 3

| if( sps_eip_enabled_flag&& cbWidth <= SIZE_A && cbHeight <= SIZE_B && x0>=XX && y0>=YY ) { |
|---|
| intra_eip_flag |
| } |

In Table 3, cbWidth and cbHeight are the width and the height of the current block, SIZE_A may be understood as the third preset value mentioned above, SIZE_B may be understood as the fourth preset value, XX may be understood as the first preset value, YY may be understood as the second preset value, and x0 and y0 represent coordinate differences between the top-left corner of the current block and the top-left corner of the current picture.

As shown in Table 3, if the sequence-level second information sps_eip_enabled_flag = 1, i.e., indicating that the extrapolation filter prediction mode is allowed to be used for the current sequence, it is to be determined whether the position of the current block in the current picture meets the preset position requirement and it is to be determined whether the size of the current block meets the preset block size requirement. If it is determined that the position of the current block in the current picture meets the preset position requirement and determined that the size of the current block meets the preset block size requirement, the third information intra_eip_flag is decoded, and based on the decoded third information intra_eip_flag, whether the current block is predicted by using the extrapolation filter prediction mode is determined.

As can be seen from the above, determining whether the extrapolation filter prediction mode is used for the current block may be limited by the high-level syntax, for example, by the syntax element such as GCI, sequence-level, frame-level, slice-level, or block-level, etc. It may also be limited by the size of the current block and the position of the current block.

In some embodiments, when the extrapolation filter prediction mode is used for some relatively small blocks, the computational cost and computational complexity will increase. This is because the extrapolation filter prediction mode has a relatively high computational complexity in the present disclosure, and if the extrapolation filter prediction mode is also used for some small blocks, this will increase the number of times that the extrapolation filter prediction mode is used through the entire picture decoding, thereby increasing the computational cost and computational complexity of the picture. Based on this, in the embodiments of the present disclosure, the extrapolation filter prediction mode is only allowed to be used for relatively large blocks. For example, only when the size of the current block is greater than or equal to a preset size, the extrapolation filter prediction mode is allowed to be used. When the size of the current block is less than the preset size, the extrapolation filter prediction mode is not allowed to be used for the current block. The specific value of the preset size is not limited in the embodiments of the present disclosure. For example, the size of the current block being greater than or equal to the preset size may be, the number of samples of the current block being greater than or equal to a preset number, or at least one of the length or width of the current block being greater than or equal to a preset value, or a ratio of the length and width of the current block being greater than or equal to a preset ratio, etc.

In some embodiments, if the current block is in a first row of the current CTU, it is determined that the extrapolation filter prediction mode is not allowed to be used for the current block. That is, if the current block is predicted by using the extrapolation filter prediction mode, the current block is not in the first row of the current CTU.

In some embodiments, determining whether the extrapolation filter prediction mode is allowed to be used for the current block, is also related to a type of the current picture. For example, for an intra prediction picture (i.e., a picture for which the intra prediction is used during prediction), it is specified that the extrapolation filter prediction mode can be used for prediction, and for an inter prediction picture (i.e., a picture for which the inter prediction is used during prediction), the extrapolation filter prediction mode is not allowed for prediction. Based on this, if the current picture in which the current block is located is an intra prediction picture, it is determined that the extrapolation filter prediction mode is allowed to be used for predicting the current block. If the current picture is not an intra prediction picture (e.g., is an inter prediction picture), it is determined that the extrapolation filter prediction mode is not allowed to be used for predicting the current block.

In some embodiments, in the ECM reference software, to enhance encoding and decoding performance, a series of complex intra prediction modes are introduced, such as: template-based intra prediction derivation (TIMD), decoder-side intra prediction derivation (DIMD), template-based multiple reference line intra prediction (TMRL), spatial geometrical partitioning mode (SGPM), and convolutional cross component model (CCCM). These complex intra prediction modes are all intra prediction modes based on the template matching technology, and in the process of using the extrapolation filter prediction mode in the embodiments of the present disclosure, information of the reconstructed region (which can be understood as a template region) is also used. Therefore, in the embodiments of the present disclosure, the extrapolation filter prediction mode may also be classified as an intra prediction mode based on the template matching technology. Based on this, in the embodiments of the present disclosure, a unified identification (e.g., first information) is used to uniformly indicate the above-mentioned intra prediction modes based on the template matching technology. For example, if the first information indicates that the template matching-based technology is not enabled, it means that all the above-mentioned intra prediction modes based on the template matching technology (i.e., TIMD, DIMD, TMRL, SGPM, TMRL, CCCM, and extrapolation filter prediction mode) are not allowed to be used. If the first information indicates that the template matching-based technology is not enabled, it means that these above-mentioned intra prediction modes based on the template matching technology are allowed to be used, and then, an intra prediction mode specifically used for the current block is further determined based on other information.

Based on the above description, in the embodiments of the present disclosure, determining whether the extrapolation filter prediction mode is allowed to be used for the current block, includes: decoding a bitstream, to obtain first information, where the first information is used to indicate whether a template matching-based technology is enabled; and determining whether the extrapolation filter prediction mode is allowed to be used for the current block based on the first information. For example, if the first information indicates that the template matching-based technology is not enabled, it is determined that the extrapolation filter prediction mode is not allowed to be used for predicting the current block. For another example, if the first information indicates that the template matching-based technology is enabled, the decoder side determines whether the current block is predicted by using the extrapolation filter prediction mode by other information.

The specific indication form of the first information mentioned above is not limited in the embodiments of the present disclosure.

Exemplarily, the first information mentioned above may be GCI, sequence-level, frame-level, slice-level, or block-level indication information.

In an example, if the first information mentioned above is sequence-level indication information, the decoder side decodes the bitstream to obtain the first information, and if the first information indicates that the template matching-based technology is enabled, the decoder side continues to decode the bitstream to obtain the second information (sps_eip_enabled_flag) mentioned above, and then, determines whether the extrapolation filter prediction mode is allowed to be used for the current block based on the second information. If the first information indicates that the template matching-based technology is not enabled, the decoder side directly determines that the extrapolation filter prediction mode is not applicable for predicting the current block, and skips the step of decoding the second information.

In some embodiments, a condition for the decoder side to determine whether the extrapolation filter prediction mode can be used for predicting the current block, includes at least one of:

> 1) whether the current picture is an intra prediction picture;
> 2) whether the high-level syntax is allowed; optionally, the high-level syntax includes sequence-level, frame-level, slice-level, block-level, etc., referring to the above description for details;
> 3) whether the size and the shape of the current block are allowed; referring to the above description for details; or
> 4) whether the position of the current block is allowed; referring to the above description for details.

The above introduces the specific process of determining whether the current block is predicted by using the extrapolation filter prediction mode.

In the embodiments of the present disclosure, if the decoder side determines that the current block is predicted by using the extrapolation filter prediction mode, the extrapolation filter prediction mode is used to predict the current block, to obtain the prediction value of the current block.

The following introduces the process of the decoder side to predict the current block by using the extrapolation filter prediction mode.

When the decoder side determines that the current block is predicted by using the extrapolation filter prediction mode, it first determines a reference region and an extrapolation filter of the current block.

The following introduces the specific process of the decoder side to determine the reference region of the current block.

In the embodiments of the present disclosure, the reference region of the current block is part or all of a reconstructed region surrounding the current block.

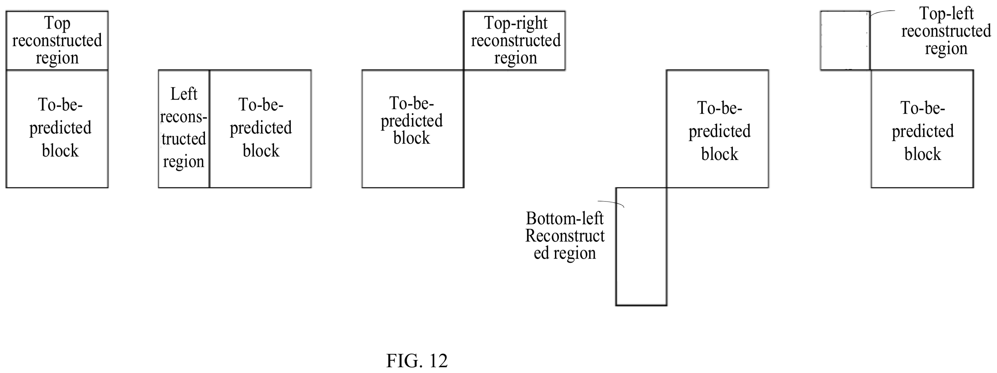

Exemplarily, as illustrated in FIG. 12, the reconstructed region surrounding the current block may include: a top reconstructed region of the current block, a left reconstructed region of the current block, a top-right reconstructed region of the current block, a bottom-left reconstructed region of the current block, and a top-left reconstructed region of the current block. In FIG. 12, the to-be-predicted block is the current block.

The specific shape or size of the reference region of the current block is not limited in the embodiments of the present disclosure.

In an example, the reference region of the current block includes any one of: the top reconstructed region of the current block, the left reconstructed region of the current block, the top-right reconstructed region of the current block, the bottom-left reconstructed region of the current block, and the top-left reconstructed region of the current block. For example, the reference region of the current block is the top reconstructed region of the current block, or the reference region of the current block is the left reconstructed region of the current block.

In an example, the reference region of the current block includes any two of: the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block and the left reconstructed region of the current block. For another example, the reference region of the current block includes the top reconstructed region of the current block and the bottom-left reconstructed region of the current block.

In an example, the reference region of the current block includes any three of: the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, and the top-left reconstructed region of the current block. For another example, the reference block of the current block includes the left reconstructed region of the current block, the top-left reconstructed region of the current block, and the bottom-left reconstructed region of the current block.

In an example, the reference region of the current block includes any four of: the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, the top-left reconstructed region of the current block, and the left reconstructed region of the current block. For another example, the reference block of the current block includes the left reconstructed region of the current block, the top-left reconstructed region of the current block, the bottom-left reconstructed region of the current block, and the top reconstructed region of the current block.

In an example, the reference region of the current block includes five of: the top reconstructed region of the current block, the left reconstructed region of the current block, the top-right reconstructed region of the current block, the bottom-left reconstructed region of the current block, and the top-left reconstructed region of the current block.

In the embodiments of the present disclosure, the decoder side determines the reference region of the current block among P preset reference regions.

In the embodiments of the present disclosure, the specific scheme for the decoder side to determine the reference region of the current block among the P preset reference regions, includes but is not limited to the following schemes.

Scheme 1: The reference region of the current block is a default region, and for example, the encoder side and decoder side default to the reference region of the current block including at least one reconstructed region of the P reference regions: the top reconstructed region of the current block, the left reconstructed region of the current block, the top-right reconstructed region of the current block, the bottom-left reconstructed region of the current block, and the top-left reconstructed region of the current block.

Scheme 2: The decoder side decodes the bitstream to obtain fourth information, where the fourth information is used to indicate a type of the reference region of the current block; determines, based on the type of the reference region, the reference region of the current block among the P preset reference regions, where P is a positive integer greater than 1.

In this implementation, the encoder side determines the reference region of the current block among the P preset reference regions; for example, the encoder side determines encoding costs corresponding to the P reference regions respectively, and determines a reference region with the smallest encoding cost as the reference region of the current block. Then, the type of the determined reference region with the smallest encoding cost is indicated to the decoder side via the fourth information. Thus, the decoder side decodes the bitstream to obtain the fourth information, and then determines the reference region of the current block among the P preset reference regions based on the type of the reference region indicated by the fourth information.

It should be noted that types or shapes of these P preset reference regions are different.

The embodiments of the present disclosure do not impose specific limitations on the specific number or shapes of the P reference regions.

In an example, the P reference regions include at least one of a first reference region, a second reference region, or a third reference region.

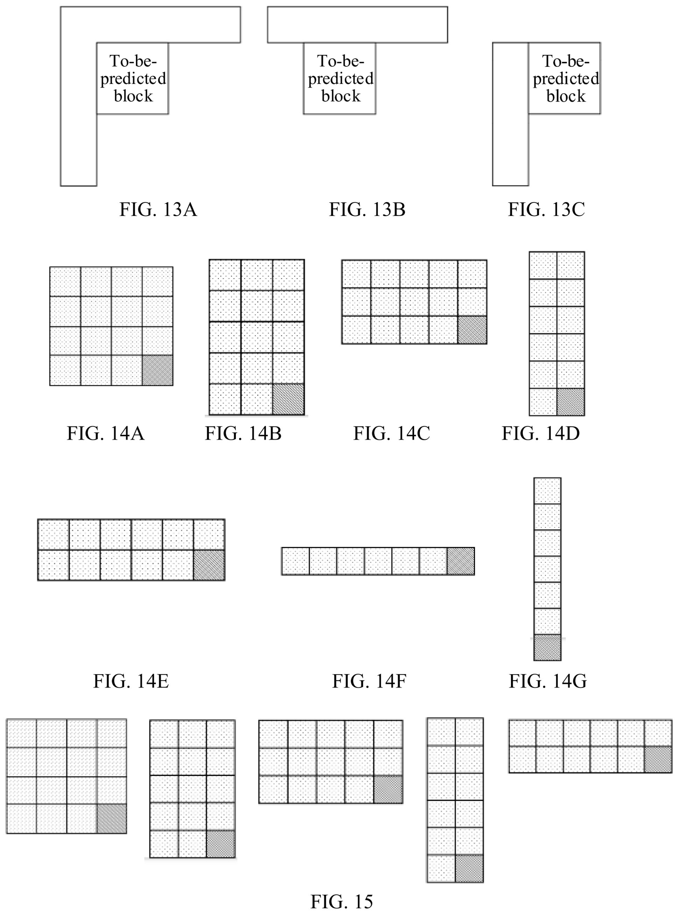

As illustrated in FIG. 13A, the first reference region includes top, top-right, left, top-left, and top-left reconstructed regions of the current block. As illustrated in FIG. 13B, the second reference region includes top, top-right, and top-left reconstructed regions of the current block. As illustrated in FIG. 13C, the third reference region includes left, top-left, and top-left reconstructed regions of the current block. The to-be-predicted block in FIG. 13A to FIG. 13C is the current block.

The specific indication form of the fourth information is not limited in the embodiments of the present disclosure, as long as it may be any indication information that can indicate the type of the reference region of the current block.

In an example, eip_ref_type is used to represent the fourth information; for example, values of eip_ref_type may be used to indicate different types of reference region.

Exemplarily, as shown in Table 4, a corresponding relationship between the three reference regions illustrated in FIG. 13A to FIG. 13B and the values of eip_ref_type is as follows:

Table 4

| Value of eip_ref_type | Reference region |
|---|---|
| 0 | First reference region: top, top-right, left, bottom-left, top-left |
| 1 | Second reference region: top, top-right, top-left |
| 2 | Third reference region: left, bottom-left, top-left |

Based on the above Table 4, the decoder side decodes the bitstream to obtain the fourth information eip_ref_type, and then, according to the value of the fourth information eip_ref_type, determines the reference region of the current block. For example, if eip_ref_type = 0, the reference region of the current block is determined to be the first reference region, and as illustrated in FIG. 13A, the first reference region includes the top, top-right, left, top-left, and top-left reconstructed regions of the current block. If eip_ref_type = 1, the reference region of the current block is determined to be the second reference region, and as illustrated in FIG. 13B, the second reference region includes the top, top-right, and top-left reconstructed regions of the current block. If eip_ref_type = 2, the reference region of the current block is determined to be the third reference region, and as illustrated in FIG. 13C, the third reference region includes the top, top-right, and top-left reconstructed regions of the current block.

It should be noted that the above is described by taking an example in which the P reference regions are the three reference regions illustrated in FIG. 13A to FIG. 13C. The P reference regions in the embodiments of the present disclosure may also include other reference regions in addition to the above-mentioned three reference regions, which are not limited in the embodiments of the present disclosure. The corresponding relationship between the reference regions and the values of eip_ref_type shown in the above Table 4 may be adaptively adjusted according to the number of reference regions.

In some embodiments, the decoder side may use a truncated binary code as a decoding method, to decode and obtain the fourth information from the bitstream.

Exemplarily, the corresponding relationship between truncated binary codes, values of eip_ref_type, and types of the reference region is shown in Table 5:

Table 5

| Truncated binary code | Values of eip_ref_type | Reference region |
|---|---|---|
| 0 | 0 | First reference region: top, top-right, left, bottom-left, top-left |
| 10 | 1 | Second reference region: top, top-right, top-left |
| 11 | 2 | Third reference region: left, bottom-left, top-left |

In the embodiments of the present disclosure, the decoder side may use an equal probability decoding method or use a context model decoding method, to decode a codeword of the truncated binary code.

In addition to using the method of the above-mentioned Scheme 1 or Scheme 2 to determine the reference region of the current block, the decoder side may also use the following Scheme 3 to determine the reference region of the current block.

Scheme 3: The reference region of the current block is determined among the P preset reference regions based on the shape of the current block.

In this Scheme 3, for different shapes of the current block, different reference regions are used for prediction, to improve prediction accuracy.

For example, if the shape of the current block is square, a first type of reference region is used.

For another example, if the shape of the current block is a rectangle with a width greater than a height, a second type of reference region is used.

For another example, if the shape of the current block is a rectangle with a width less than a height, a third type of reference region is used.

That is, in the embodiments of the present disclosure, a corresponding relationship between the P reference regions and the shapes of the current block is preset. Thus, the decoder side may determine, according to the shape of the current block, the reference region of the current block from the P reference regions by the corresponding relationship between the P reference regions and the shapes of the current block.

The following introduces the process of the decoder side to determine the extrapolation filter of the current block.

The specific shape of the extrapolation filter is not limited in the embodiments of the present disclosure.

Exemplarily, the extrapolation filter provided in the embodiments of the present disclosure includes but is not limited to: a square extrapolation filter, and an extrapolation filter with a height less than a width.

For example, the square extrapolation filter includes but is not limited to a $4 \times 4$ extrapolation filter illustrated in FIG. 14A.

For another example, the extrapolation filter with the height greater than the width includes but is not limited to a $5 \times 3$ extrapolation filter illustrated in FIG. 14B, a $6 \times 2$ extrapolation filter illustrated in FIG. 14D, and a $7 \times 1$ extrapolation filter illustrated in FIG. 14G.

For another example, the extrapolation filter with the height less than the width includes but is not limited to a $3 \times 5$ extrapolation filter illustrated in FIG. 14C, a $2 \times 6$ extrapolation filter illustrated in FIG. 14E, and a $1 \times 7$ extrapolation filter illustrated in FIG. 14F.

It should be noted that in the above filters, the dark gray position indicates a current position to be predicted, and the light gray positions represent input positions for the extrapolation filter, i.e., positions $\{p_0, p_1, \ldots, p_{N-1}\}$.

In the embodiments of the present disclosure, the decoder side determines the extrapolation filter of the current block from the Q preset extrapolation filters.

In the embodiments of the present disclosure, the specific schemes for the decoder side to determine the extrapolation filter of the current block from the Q preset extrapolation filters, include but are not limited to the following schemes:

Scheme 1: The extrapolation filter of the current block is a default extrapolation filter; for example, the encoder side and decoder side default to the extrapolation filter of the current block is any one of the Q extrapolation filters illustrated in FIG. 14A to FIG. 14G. For example, the default extrapolation filter is the 4×4 extrapolation filter.

Scheme 2: The decoder side decodes the bitstream to obtain fifth information, where the fifth information used to indicate a shape of the extrapolation filter of the current block; and determines, based on the shape of the extrapolation filter of the current block, the extrapolation filter of the current block from the Q preset extrapolation filters, where Q is a positive integer greater than 1.

In this implementation, the encoder side determines the extrapolation filter of the current block from the Q preset extrapolation filters; for example, the encoder side determines encoding costs corresponding to the Q extrapolation filters respectively, and determines an extrapolation filter with the smallest encoding cost as the extrapolation filter of the current block. Then, the shape of the determined extrapolation filter with the smallest encoding cost is indicated to the decoder side via the fifth information. Thus, the decoder side decodes the bitstream to obtain the fifth information, and then determines the extrapolation filter of the current block from the Q preset extrapolation filters based on the shape of the extrapolation filter indicated by the fifth information.

It should be noted that the shapes of the Q preset extrapolation filters are different.

The specific number and shapes of the Q extrapolation filters are not specifically limited in the embodiments of the present disclosure. For example, the Q extrapolation filters include at least one of a first extrapolation filter, a second extrapolation filter, or a third extrapolation filter, where the first extrapolation filter is a square extrapolation filter, the second extrapolation filter is a rectangular extrapolation filter with a width greater than a height, and the third extrapolation filter is a rectangular extrapolation filter with a height greater than a width.

In an example, the Q extrapolation filters include a plurality of extrapolation filters in FIG. 14A to FIG. 14H.

The specific indication form of the fifth information is not limited in the embodiments of the present disclosure, as long as it may be any indication information that can indicate the shape of the extrapolation filter of the current block.

In an example, eip_filter_type is used to represent the fifth information; for example, values of eip_filter_type are used to indicate different shapes of extrapolation filter.

Exemplarily, if Q extrapolation filters are five extrapolation filters illustrated in FIG. 15, as shown in Table 6, a corresponding relationship between the five extrapolation filters and the values of eip_filter_type is as follows:

Table 6

| Value of eip_filter_type | Shape of the extrapolation filter |
|---|---|
| 0 | 4x4 |
| 1 | 3x5 |
| 2 | 5x3 |
| 3 | 2x6 |
| 4 | 6x2 |

Based on the above Table 5, the decoder side decodes the bitstream to obtain the fifth information eip_filter_type, and then, according to the value of eip_filter_type, determines the extrapolation filter of the current block. For example, if eip_filter_type = 0, the shape of the extrapolation filter of the current block is determined to be 4x4. If eip_filter_type = 1, the shape of the extrapolation filter of the current block is determined to be 3x5. If eip_filter_type = 2, the shape of the extrapolation filter of the current block is determined to be 5x3. If eip_filter_type = 3, the shape of the extrapolation filter of the current block is determined to be 2x6. If eip_filter_type = 4, the shape of the extrapolation filter of the current block is determined to be 6x2.

In some embodiments, the decoder side may use a truncated binary code as a decoding method, to decode and obtain the fifth information from the bitstream.

Exemplarily, if the Q preset extrapolation filters include the 5 extrapolation filters illustrated in FIG. 15, a corresponding relationship between truncated binary codes, values of eip_filter_type, and the shapes of the extrapolation filter is shown in Table 7:

Table 7

| Truncated binary code | Value of eip_filter_type | Shape of the extrapolation filter |
|---|---|---|
| 00 | 0 | 4x4 |
| 01 | 1 | 3x5 |
| 10 | 2 | 5x3 |
| 110 | 3 | 2x6 |
| 111 | 4 | 6x2 |

In this case, the five shapes of the extrapolation filter shown in the above Table 7 and the three types of the reconstructed region shown in the above Table 5 result in a total of 15 combinations of extrapolation filters and reconstructed regions.

In some embodiments, the decoder side may decode the bitstream to obtain the fifth information eip_filter_type, and then determine the extrapolation filter of the current block in the above Table 7, according to the shape of the extrapolation filter indicated by the fifth information eip_filter_type. Similarly, the fourth information is obtained by decoding the bitstream, and then, the reference region of the current block is determined in the above Table 5, according to the value of the fourth information eip_ref_type.

In an example, syntax elements of the embodiments of the present disclosure are shown in Table 8:

Table 8

| coding_unit( x0, y0, cbWidth, cbHeight, cqtDepth, treeType, modeType ) { | Des cri pto r |
|---|---|
| ... ... | |
| if( CuPredMode[ chType ][ x0 ][ y0 ] = = MODE_INTRA ‖ <br>     CuPredMode[ chType ][ x0 ][ y0 ] = = MODE_PLT) { | |
| if( treeType = = SINGLE_TREE ‖ treeType = = DUAL TREE LUMA) { | |
| ... ... // Other intra encoding tools | |
| if( sps_eip_enabled_flag&& cbWidth <= **SIZE_A** && cbHeight <= **SIZE_B** && x0>=**XX** && v0>=**YY** ) { | |
| **intra_eip_flag** | ae(v ) |
| } | |
| if( intra eip_flag) { | |
| **eip_ref_type**[ x0 ][ y0 ] | ae(v ) |
| **eip_filter_type**[ x0 ][ y0 ] | ae(v ) |
| } | |
| else { | |
| ... ... // Other intra encoding tools | |
| } | |
| } | |
| } | |
| } | |

As shown in Table 8, the decoder side decodes the bitstream, to first obtain the sequence-level fifth information sps_eip_enabled_flag, and the fifth information sps_eip_enabled_flag indicates whether the extrapolation filter prediction mode is allowed to be used for predicting the current sequence. Then, it is to be determined whether the position of the current block in the current picture meets the preset position requirement and it is to be determined whether the size of the current block meets the preset block size requirement. If it is determined that the position of the current block in the current picture meets the preset position requirement and it is determined that the size of the current block meets the preset block size requirement, the third information intra_eip_flag is decoded, where the third information intra_eip_flag indicates whether the current block is predicted by using the extrapolation filter prediction mode. If the third information intra_eip_flag = 1 indicates that the current block is predicted by using the extrapolation filter prediction mode, it decodes the bitstream to obtain the fourth information eip_ref_type and the fifth information eip_filter_type. The fourth information eip_ref_type indicates the type of the reference region of the current block, and thus, the decoder side obtains the reference region of the current block by looking up the table, based on the value of the fourth information eip_ref_type. The fifth information eip_filter_type indicates the shape of the extrapolation filter of the current block, and then, the extrapolation filter of the current block is obtained by looking up the table, based on the value of the fifth information eip_filter_type.

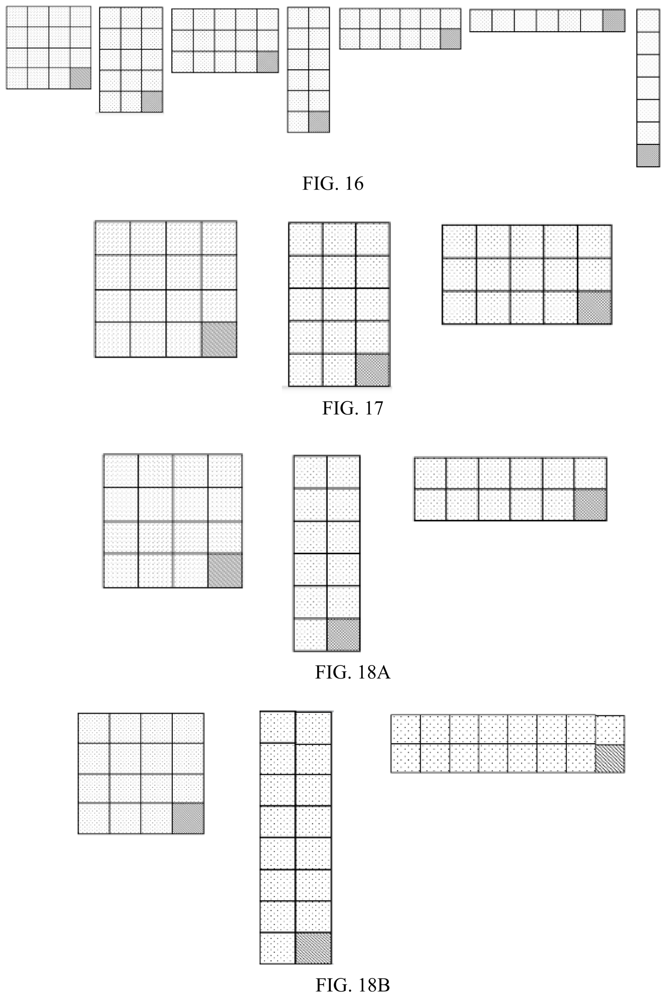

In some embodiments, when the embodiments of the present disclosure include seven extrapolation filters illustrated in FIG. 16, a corresponding relationship between truncated binary codes, values of eip_filter_type, and shapes of the extrapolation filter is shown in Table 9:

Table 9

| Truncated binary code | Value of eip_filter_type | Shape of the extrapolation filter |
|---|---|---|
| 00 | 0 | 4x4 |
| 010 | 1 | 3x5 |
| 011 | 2 | 5x3 |
| 100 | 3 | 2x6 |
| 101 | 4 | 6x2 |
| 110 | 5 | 1x7 |
| 111 | 6 | 7x1 |

In this case, the 7 shapes of the extrapolation filter shown in the above Table 9 and the 3 types of the reconstructed region shown in the above Table 5 result in a total of 21 combinations of extrapolation filters and reconstructed regions.

Similarly, the decoder side may obtain the reference region and the extrapolation filter of the current block by looking up Table 5 and Table 8 above, by decoding the syntax shown in Table 8.

In some embodiments, when the embodiments of the present disclosure include three extrapolation filters illustrated in FIG. 17, a corresponding relationship between truncated binary codes, values of eip_filter_type, and shapes of the extrapolation filter is shown in Table 10:

Table 10

| Truncated binary code | Value of eip_filter_type | Shape of the extrapolation filter |
|---|---|---|
| 0 | 0 | 4x4 |
| 10 | 1 | 3x5 |
| 11 | 2 | 5x3 |

In this case, the three shapes of the extrapolation filter shown in the above Table 10 and the three types of the reconstructed region shown in the above Table 5 result in a total of 9 combinations of extrapolation filters and reconstructed regions.

Similarly, the decoder side may obtain the reference region and the extrapolation filter of the current block by looking up Table 5 and Table 10 above, by decoding the syntax shown in Table 8.

In some embodiments, when the embodiments of the present disclosure include three extrapolation filters illustrated in FIG. 18A, a corresponding relationship between truncated binary codes, values of eip_filter_type, and shapes of the extrapolation filter is shown in Table 11:

Table 11

| Truncated binary code | Value of eip_filter_type | Shape of the extrapolation filter |
|---|---|---|
| 0 | 0 | 4x4 |
| 10 | 1 | 2x6 |

(continued)

| Truncated binary code | Value of eip_filter_type | Shape of the extrapolation filter |
|---|---|---|
| 11 | 2 | 6x2 |

In this case, the three shapes of the extrapolation filter shown in the above Table 11 and the three types of the reconstructed region shown in the above Table 5 result in a total of 9 combinations of extrapolation filters and reconstructed regions.

Similarly, the decoder side may obtain the reference region and the extrapolation filter of the current block by looking up Table 5 and Table 11 above, by decoding the syntax shown in Table 8.

In some embodiments, when the embodiments of the present disclosure include three extrapolation filters illustrated in FIG. 18B, a corresponding relationship between truncated binary codes, values of eip_filter_type, and shapes of the extrapolation filter is shown in Table 12:

Table 12

| Truncated binary code | Value of eip_filter_type | Shape of the extrapolation filter |
|---|---|---|
| 0 | 0 | 4x4 |
| 10 | 1 | 2x8 |
| 11 | 2 | 8x2 |

In this case, the three shapes of the extrapolation filter shown in the above Table 12 and the three types of the reconstructed region shown in the above Table 5 result in a total of 9 combinations of extrapolation filters and reconstructed regions.

Similarly, the decoder side may obtain the reference region and the extrapolation filter of the current block by looking up Table 5 and Table 11 above, by decoding the syntax shown in Table 8.

Generally, using a filter with more taps in a case of the same number of samples may acquire a better extrapolation effect. Compared to the 2x6 and 6x2 extrapolation filters illustrated in FIG. 18A, the number of multiple taps of the filter is increased in FIG. 18B, for example, expanding to 2x8 and 8x2 extrapolation filters, and actually, all the 2x8 and 8x2 filters and the 4x4 filter are a filter that uses 15 samples as the input and has 1 output, so in terms of the complexity, their complexities are similar, and thus, the extrapolation filters illustrated in FIG. 18B increasing the extrapolation effect without increasing the complexity.

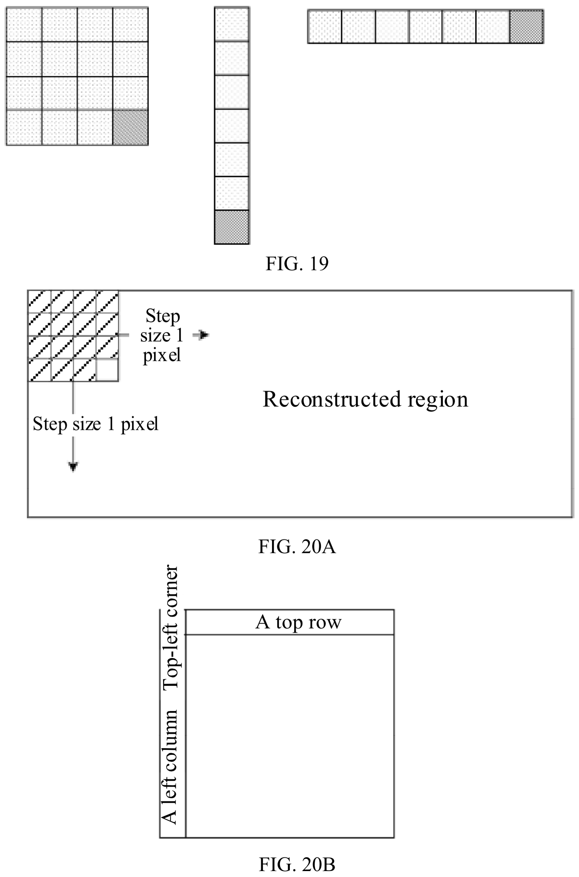

In some embodiments, when the embodiments of the present disclosure include three extrapolation filters illustrated in FIG. 19, a corresponding relationship between truncated binary codes, values of eip_filter_type, and shapes of the extrapolation filter is shown in Table 13:

Table 13

| Truncated binary code | Value of eip_filter_type | Shape of the extrapolation filter |
|---|---|---|
| 0 | 0 | 4x4 |
| 10 | 1 | 1x7 |
| 11 | 2 | 7x1 |

In this case, the three shapes of the extrapolation filter shown in the above Table 13 and the three types of the reconstructed region shown in the above Table 5 result in a total of 9 combinations of extrapolation filters and reconstructed regions.

Similarly, the decoder side may obtain the reference region and the extrapolation filter of the current block by looking up Table 5 and Table 13 above, by decoding the syntax shown in Table 8.

In addition to using the method of the above Scheme 1 or Scheme 2 to determine the extrapolation filter of the current block, the decoder side may also use the following Scheme 3 to determine the extrapolation filter of the current block.

Scheme 3: The extrapolation filter of the current block is determined among the Q preset extrapolation filters based on the shape of the current block.

In this Scheme 3, for different shapes of the current block, different extrapolation filters are used for prediction, to improve prediction accuracy.

For example, if the shape of the current block is square, a first shape of the extrapolation filter is used.

For another example, if the shape of the current block is a rectangle with a width greater than a height, a second shape of extrapolation filter is used.

For another example, if the shape of the current block is a rectangle with a width less than a height, a third shape of extrapolation filter is used.

That is, in the embodiments of the present disclosure, a corresponding relationship between the Q extrapolation filters and the shapes of the current block is preset. Thus, the decoder side may determine, according to the shape of the current block, the extrapolation filter of the current block from the Q extrapolation filters by the corresponding relationship between the Q extrapolation filters and the shapes of the current block.

The following introduces determining the filter coefficient of the extrapolation filter based on the reference region.

In the embodiments of the present disclosure, the decoder side determines the filter coefficient of the extrapolation filter by at least the following several schemes.

Scheme 1: Use the determined extrapolation filter mentioned above to slide in the reference region of the current block, and construct a Wiener-Hopf equation. Then, solve the Wiener-Hopf equation to obtain the filter coefficient of the extrapolation filter.

In the process of using the extrapolation filter to slide in the reference region of the current block, N positions corresponding to each of positions of the reference region are determined according to the shape of the extrapolation filter; for example, for a position r in the reference region, N positions corresponding to the position r are determined in the reference region based on the shape of the extrapolation filter, and sample reconstructed values of these N positions are the input of the extrapolation filter. Phase position differences between these N positions and the position r are $\{p_0, p_1, \ldots, p_{N-1}\}$, where $p_N$ is a two-dimensional representation. $\{c_0, c_1, \ldots, c_{N-1}\}$ are extrapolation filter coefficients at the positions $\{p_0, p_1, \ldots, p_{N-1}\}$.

In an example, the extrapolation filter is slid in the reference region of the current block to construct the Wiener-Hoff equation, as shown in Formula (3):

$$
\begin{bmatrix}
\sum_{\|\mathcal{R}\|} t[r+p_0]t[r+p_0] & \cdots & \sum_{\|\mathcal{R}\|} t[r+p_{N-1}]t[r+p_0] \\
\vdots & \ddots & \vdots \\
\sum_{\|\mathcal{R}\|} t[r+p_0]t[r+p_{N-1}] & \cdots & \sum_{\|\mathcal{R}\|} t[r+p_{N-1}]t[r+p_{N-1}]
\end{bmatrix}
\begin{bmatrix}
c_0 \\
\vdots \\
c_{N-1}
\end{bmatrix}
=
\begin{bmatrix}
\sum_{\|\mathcal{R}\|} t[r]t[r+p_0] \\
\vdots \\
\sum_{\|\mathcal{R}\|} t[r]t[r+p_{N-1}]
\end{bmatrix}
\quad (3)
$$

$\mathcal{R}$ is the reference region of the current block, $t[r+p_n]$ is a sample reconstructed value of a sample at a position $r+p_n$ in the reference region, and $t[r]$ is a sample reconstructed value of a sample at a position r in the reference region.

Since the reference region of the current block is a reconstructed region, all other parameters in the above Formula (3) except for the extrapolation filter coefficient $\begin{bmatrix} c_0 \\ \vdots \\ c_{N-1} \end{bmatrix}$ are known, and thus, the filter coefficient of the extrapolation filter of the current block may be determined by solving the above Formula (3).

In an example, the decoder side may solve the Wiener-Hopf equation shown in the above Formula (3) by means of a Cholesky decomposition autocorrelation coefficient matrix, to obtain the filter coefficient of the filter.

The embodiments of the present disclosure do not limit a sliding step size of the extrapolation filter within the reference region.

In an example, as illustrated in FIG. 20A, a horizontal sliding step size and a vertical sliding step size of the extrapolation filter within the reference region are equal, which are both 1 sample.

In an example, a horizontal sliding step size and a vertical sliding step size of the extrapolation filter within the reference region are not equal. For example, the horizontal sliding step size is 2 samples, and the vertical sliding step size is 1 sample. For another example, the horizontal sliding step size is 1 sample, and the vertical sliding step size is 2 samples.

In an example, at least one of the horizontal sliding step size or the vertical sliding step size of the extrapolation filter within the reference region is greater than a preset step size. For example, the horizontal sliding step size is greater than the preset step size. For another example, the vertical sliding step size is greater than the preset step size. For another example, both the horizontal sliding step size and the vertical sliding step size are greater than the preset step size. The specific values of the preset step size are not limited in the embodiments of the present disclosure. For example, they may be 1, 2, 3, or other values.

Scheme2: The decoder side determines the filter coefficient through steps of the following steps S101-A1 to S101-A4.

In S101-A1: a first reconstructed region surrounding the current block is determined.

In S101-A2: a sample average reconstructed value is determined based on reconstructed values of the first reconstructed region.

In S101-A3: reconstructed values of samples of the reference region are de-averaged based on the sample average reconstructed value.

In S101-A4: de-averaged sample values of the samples in the reference region are used as an input of the extrapolation filter, and the extrapolation filter is slid within the reference region, to obtain the filter coefficient of the extrapolation filter.

In this Scheme 2, the reference region is de-averaged, and the filter coefficient of the extrapolation filter is determined based on the de-averaged reference region. Since the data volume is reduced after the reference region is de-averaged, the efficiency of determining the filter coefficient may be improved when determining the filter coefficient based on the de-averaged reference region.

Specifically, the decoder side first determines a first reconstructed region, and the first reconstructed region may be any part of reconstructed regions surrounding the current block.

In the embodiments of the present disclosure, the decoder side determines the first reconstructed region surrounding the current block in at least the following several schemes.

Scheme 1: The decoder side determines a reconstructed region surrounding the current block as the first reconstructed region by default.

For example, as illustrated in FIG. 20B, the decoder side determines a region composed of a top row of the current block, a left column of the current block, and a sample at a top-left corner of the current block as the first reconstructed region, by default.

Scheme 2: The first reconstructed region is determined based on the shape of the current block.

For example, if the shape of the current block is square, a top row and a left column of reconstructed sample regions of the current block are determined as the first reconstructed region.

For another example: if the shape of the current block is a rectangle with a width greater than a height, a top row of reconstructed sample regions of the current block is determined as the first reconstructed region.

For another example: if the shape of the current block is a rectangle with a height greater than a width, a left column of reconstructed sample regions of the current block is determined as the first reconstructed region.

It should be noted that the scheme for determining the first reconstructed region based on the shape of the current block includes but is not limited to the several examples mentioned above.

After the decoder side determines the first reconstructed region, it determines the sample average reconstructed value m based on reconstructed values of the first reconstructed region.

The specific scheme for determining the sample average reconstructed value m based on the reconstructed values of the first reconstructed region in the above S101-A2 is not limited in the embodiments of the present disclosure.

Scheme 1: The above S101-A2 includes: determining an average value of the reconstructed values of the first reconstructed region as the sample average reconstructed value m.

In an example of Scheme 1, if the first reconstructed region is illustrated in FIG. 20B, the sample average reconstructed value m may be calculated by a method shown in Table 14:

Table 14

| | |
|---|---|
| Sum = 0, numSamples = 0; | |
| for(int i = 0; i < blockWidth; i++) | |
| { | |
|    Sum += aboveBuffer[i]; | Accumulate top reconstructed |
| | values |
|    numSamples++; | Sample number increments automatically |
| } | |
| for(int i = 0; i < blockHeight; i++) | |
| { | |
|    Sum += leftBuffer[i]; | Accumulate left reconstructed values |
|    numSamples++; | Sample number increments automatically |
| } | |
| m = (sum + numSamples / 2) / numSamples | Calculate the average value m |

In another example of Scheme 1, if the first reconstructed region is a top row and/or a left column of the current block, an average value of reconstructed values of the top row and/or the left column may be determined as the sample average reconstructed value m. In this case, the sample average reconstructed value m may be calculated by a method shown in Table 15:

Table 15

| Sum = 0, shift = 0; | |
|---|---|
| if (blockWidth >= blockHeight) | |
| { | |
|   for(int i = 0; i < blockWidth; i++) | |
|   { | |
|     Sum += aboveBuffer[i]; | Accumulate top reconstructed values |
|   } | |
|   shift += log2(blockWidth) | Update the shift value |
| } | |
| if (blockHeight >= blockWidth) | |
| { | |
|   for(int i = 0; i < blockHeight; i++) | |
|   { | |
|     Sum += leftBuffer[i]; | Accumulate left reconstructed values |
|   } | |
|   shift += log2(blockHeight) | Update the shift value |
| } | |
| offset = 1 << (shift - 1) | |
| m = (sum + offset) >> shift | Calculate the average value m |

As shown in Table 15 above, if the first reconstructed region is a top row and/or a left column of the current block, the shift calculation may be used instead of the division operation, to quickly calculate the sample average reconstructed value m.

Scheme 2: The above S101-A2 includes: determining the sample average reconstructed value based on the shape of the current block and reconstructed values of the first reconstructed region.

For example, if the current block is a square, the average value of the entire first reconstructed region determined above is determined as the sample average reconstructed value m.

In an example of Scheme 2, the first reconstructed region includes a top reconstructed region and a left reconstructed region of the current block, and in this case, determining the sample average reconstructed value based on the shape of the current block and the reconstructed values of the first reconstructed region, includes: determining a first region from the top reconstructed region and the left reconstructed region based on the shape of the current block; determining an average reconstructed value of the first region based on reconstructed values of the first region; and determining the sample average reconstructed value based on the average reconstructed value of the first region.

In this example, if the first reconstructed region includes the top reconstructed region and the left reconstructed region of the current block, to reduce computational complexity, the average value is determined by using the same scheme as in the DC prediction mode. Specifically, the first region is determined from the top reconstructed region and the left reconstructed region included in the first reconstructed region based on the shape of the current block.

For example, if the shape of the current block is of a width greater than a height, the top reconstructed region is determined as the first region.

For example, if the shape of the current block is of a height greater than a width, the left reconstructed region is determined as the first region.

For example, if the shape of the current block is of a height equal to a width, the top reconstructed region and the left reconstructed region are determined as the first region.

Then, an average reconstructed value of the first region is determined based on reconstructed values of the selected first region, and then, the sample average reconstructed value m is determined based on the average reconstructed value of the first region; for example, the average reconstructed value of the first region is determined as the sample average reconstructed value m.

That is, in this example, if the shape of the current block is of a width greater than a height, the average reconstructed value of the top reconstructed region of the current block is determined as the sample average reconstructed value m. If the shape of the current block is of a height greater than a width, the average reconstructed value of the left reconstructed region of the current block is determined as the sample average reconstructed value m. If the shape of the current block is of a height equal to a width, the average reconstructed value of the top reconstructed region and the left reconstructed region of the current block is determined as the sample average reconstructed value m.

Exemplarily, the decoder side may calculate the sample average reconstructed value m by a method shown in Table 16:

Table 16

| | |
|---|---|
| Sum = 0, numSamples = 0 | |
| if(blockWidth >= blockHeight) | |
| { | |
|    for(int i = 0; i < blockWidth; i++) | |
|    { | |
|      Sum += aboveBuffer[i] | Accumulate top reconstructed values |
|    } | |
|    numSamples += blockWidth | Calculate the number of samples |
| } | |
| if(blockHeight >= blockWidth) | |
| { | |
|    for(int i = 0; i < blockHeight; i++) | |
|    { | |
|      Sum += leftBuffer[i] | Accumulate left reconstructed values |
|    } | |
|    numSamples += blockHeight | Calculate the number of samples |
| } | |
| Shift = log2(numSamples) | Calculate a shift value corresponding to the sample number |
| Offset = 1 << (Shift - 1) | Calculate an offset value used for rounding when shifting |
| m = (Sum + Offset) >> Shift | Calculate the average value m |

As shown in Table 16 above, the reconstructed region (i.e., the first region) used to calculate the sample average reconstructed value m is determined based on the shape of the current block, and then, the sample average reconstructed value m is calculated quickly based on the determined first region. In the process of calculating the sample average reconstructed value m, the division operation is achieved through the simple shift, thereby avoiding the difference in size between the left reconstructed region and the top reconstructed region due to the difference between the length and the width of the current block, which results in the problem of large computational volumes of the division operation when calculating the average value, thereby improving the calculation speed of the sample average reconstructed value m and enhancing the prediction efficiency and speed of the current block.

After the decoder side determines the sample average reconstructed value, it de-averages reconstructed values of samples in the reference region based on the sample average reconstructed value.

For example, for each sample in the reference region, a reconstructed value of this sample is divided by the above-mentioned sample average reconstructed value, and then by rounding the divided result, a de-averaged sample value of the sample in the reference region is obtained.

For another example, the decoder side subtracts the sample average reconstructed value from reconstructed values of samples in the reference region, to obtain de-averaged sample values of the samples in the reference region. For example, for each sample in the reference region, the above-mentioned sample average reconstructed value is subtracted from a reconstructed value of the sample, to obtain a de-averaged sample value of the sample in the reference region.

The specific scheme for the decoder side to de-average the reconstructed values of the samples in the reference region based on the sample average reconstructed value is not limited in the embodiments of the present disclosure.

After the decoder side de-averages the reconstructed values of the samples in the reference region to obtain the de-averaged sample values of the samples in the reference region, it performs the step of S101-A4 described above, including: using the de-averaged sample values of the samples in the reference region as the input of the extrapolation filter and sliding the extrapolation filter within the reference region, to obtain the filter coefficient of the extrapolation filter.

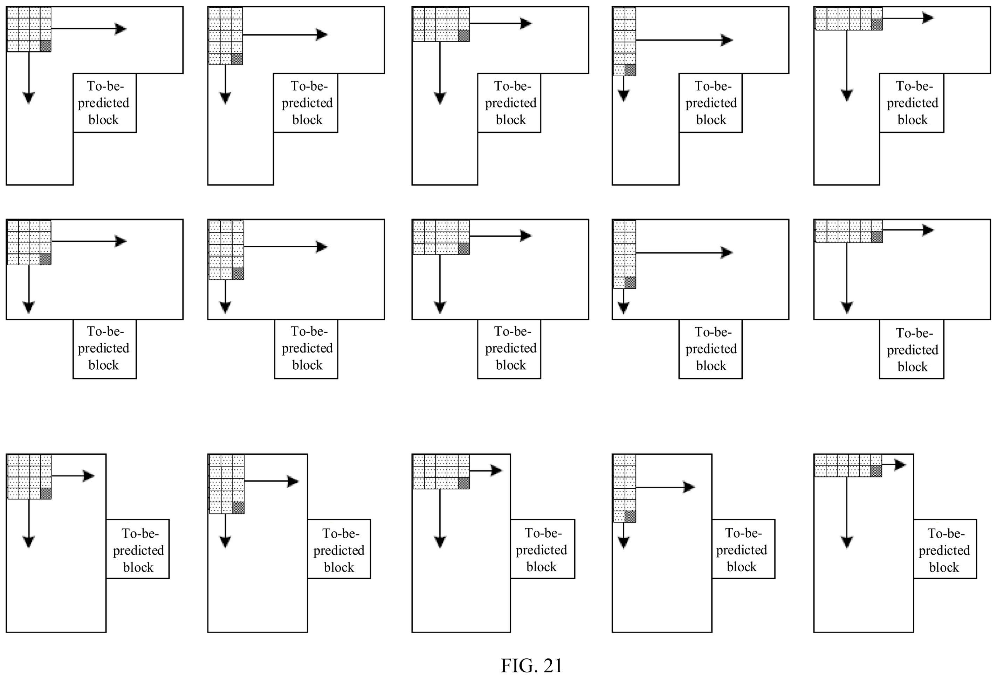

Exemplarily, if the extrapolation filter of the current block is of five extrapolation filters with different shapes and the reference region of the current block is of three reference regions with different types, the process of the extrapolation filter of the current block being slid on the de-averaged reference region of the current block to obtain the filter coefficient of the extrapolation filter is illustrated in FIG. 21. The extrapolation filter may be slid in a horizontal direction row by row or in a vertical direction column by column, on the de-averaged reference region. In FIG. 21, the to-be-predicted block is the current block.

As illustrated in FIG. 21, in the process of using the extrapolation filter to slide in the reference region of the current block, N positions corresponding to each of positions of the reference region are first determined according to the shape of the extrapolation filter. For example, for a position r in the reference region, N positions corresponding to the position r are determined in the reference region based on the shape of the extrapolation filter, and sample reconstructed values of these N positions are the input of the extrapolation filter. The phase position differences between these N positions and the position r are $\{p_0, p_1, \ldots, p_{N-1}\}$, and $p_N$ is a two-dimensional representation. $\{c_0, c_1, \ldots, c_{N-1}\}$ are extrapolation filter coefficients at positions $\{p_0, p_1, \ldots, p_{N-1}\}$.

In an example, the extrapolation filter is slid in the reference region of the current block, and the constructed Wiener-Hoffman equation is shown as Formula (4):

$$
\begin{bmatrix}
\sum_{||\mathcal{R}||}(t[r+p_0]-m)(t[r+p_0]-m) & \cdots & \sum_{||\mathcal{R}||}(t[r+p_{N-1}]-m)(t[r+p_0]-m) \\
\vdots & \ddots & \vdots \\
\sum_{||\mathcal{R}||}(t[r+p_0]-m)(t[r+p_{N-1}]-m) & \cdots & \sum_{||\mathcal{R}||}(t[r+p_{N-1}]-m)(t[r+p_{N-1}]-m)
\end{bmatrix}
\begin{bmatrix} c_0 \\ \vdots \\ c_{N-1} \end{bmatrix} =
$$

$$
\begin{bmatrix}
\sum_{||\mathcal{R}||}(t[r]-m)(t[r+p_0]-m) \\
\vdots \\
\sum_{||\mathcal{R}||}(t[r]-m)(t[r+p_{N-1}]-m)
\end{bmatrix} \qquad (4)
$$

Where $\mathcal{R}$ is the reference region of the current block, $t[r+p_n] - m$ is a sample reconstructed value obtained by de-averaging a sample at a position $r + p_n$ in the reference region, and $t[r] - m$ is a sample reconstructed value obtained by de-averaging a sample at a position $r$ in the reference region.

Since the reference region of the current block is the reconstructed region, all other parameters in the above Formula (4) except for the extrapolation filter coefficient $\begin{bmatrix} c_0 \\ \vdots \\ c_{N-1} \end{bmatrix}$ are known, and thus, the filter coefficient of the extrapolation filter of the current block may be determined by solving the above Formula (4).

In an example, the decoder side may solve the Wiener-Hopf equation shown in the above Formula (4) by means of a Cholesky decomposition autocorrelation coefficient matrix, to obtain the filter coefficient of the filter.

After determining the filter coefficient of the extrapolation filter based on the above steps, the decoder side performs the following step of S102.

In S102: parallel prediction is performed on at least two samples in the current block by using the extrapolation filter based on the filter coefficient, to determine a prediction block of the current block.

The decoder side, after determining the filter coefficient of the extrapolation filter based on the above steps, performs extrapolation filter prediction on the current block by using the extrapolation filter based on the filter coefficient, to obtain the prediction block of the current block.

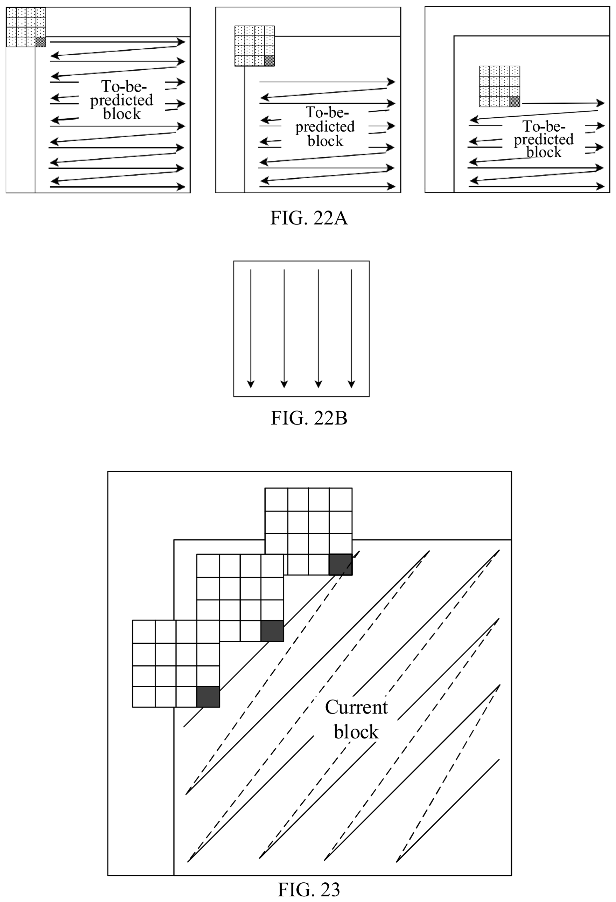

In the related art, when performing extrapolation filter prediction on the current block by using the extrapolation filter, after the prediction of a sample in the current block ends, a next sample is predicted. For example, as illustrated in FIG. 22A, the extrapolation filter performs extrapolation filter prediction on each sample in the current block one by one along a horizontal direction. When predicting, after the prediction of a previous sample in the horizontal direction ends, a prediction value of the previous sample is used as an input sample value of the extrapolation filter for a next sample, and used to predict the next sample. As illustrated in FIG. 22, assuming that the shape of the extrapolation filter of the current block is 4×4, the decoder side uses an extrapolation filter with the known filter coefficient to perform extrapolation prediction on each position in the current block one by one. Specifically, for the r-th point in the current block, sample values of N positions corresponding to the r-th point are first determined according to the shape of the extrapolation filter of the current block; for example, as illustrated in FIG. 22, in the 4×4 extrapolation filter, the dark position is a position of the r-th point to be processed, and 15 light positions are the N positions corresponding to the r-th point. In FIG. 22, the to-be-predicted block is the current block. Then, sample values of the N positions corresponding to the r-th point are determined. For example, for any position of the N positions, if the position is in the reconstructed region surrounding the current block, a reconstructed value of this position is determined as a sample value of this position. If this position is within the current block, a prediction value of this position is determined as a sample value of this position.

For another example, as illustrated in FIG. 22B, the extrapolation filter performs extrapolation filter prediction on each sample in the current block one by one along a vertical direction. When predicting, after the prediction of a previous sample in the vertical direction ends, a prediction value of the previous sample is used as an input sample value of the extrapolation filter for a next sample, and used to predict the next sample. That is, in the related art, when the extrapolation filter is used to perform extrapolation filter prediction on the current block, the prediction on only one point can be completed at a time, resulting in long prediction time-consuming, low prediction efficiency, thereby affecting the decoding efficiency.

To solve the above technical problems, the embodiments of the present disclosure use an extrapolation filter to perform extrapolation filter prediction on the current block, and perform parallel prediction on at least two points in the current block, that is, the decoder side may use the extrapolation filter to perform extrapolation filter prediction on at least two samples in the current block at the same time.

In the embodiments of the present disclosure, using, by the decoder side, the extrapolation filter to perform extrapolation filter prediction on at least two samples in the current block at the same time, includes at least two implementations.

A first implementation is that: for at least two samples in the current block, these at least two samples are neighboring samples. The decoder side first determines input information for the extrapolation filter corresponding to the at least two samples, inputs the input information into the extrapolation filter for extrapolation filter prediction, to obtain a prediction value, and based on the prediction value, determines prediction values of the at least two samples. For example, the prediction value is processed based on related feature information of the at least two samples, to obtain prediction values corresponding to the at least two samples respectively. For another example, the prediction value is determined as prediction values corresponding to the at least two samples respectively.

In this first implementation, the decoder side does not limit the specific scheme for determining the input information for the extrapolation filter corresponding to the at least two samples.

For example, based on the shape of the extrapolation filter, input values for the extrapolation filter that are the same for the at least two samples are determined, and the same input values for the extrapolation filter are used as the input information for the extrapolation filter. For example, the at least two samples include sample 1 and sample 2, and based on the shape of the extrapolation filter, N input values corresponding to sample 1 and N input values corresponding to sample 2 are determined. Same input values among the N input values corresponding to sample 1 and the N input values corresponding to sample 2 are determined, and the same input values are used as the input values for the extrapolation filter. It should be noted that if the N input values corresponding to sample 2 or sample 1 include a value that has not been decoded, the value that has not been decoded is discarded.

For another example, the input values corresponding to a sample with the most decoded input values among the at least two samples are determined as the input information for the extrapolation filter based on the shape of the extrapolation filter. For example, the at least two samples include sample 1 and sample 2, and N input values corresponding to sample 1 and N input values corresponding to sample 2 are determined based on the shape of the extrapolation filter. The N input values corresponding to sample 1 have all been decoded, and the N input values corresponding to sample 2 include an input value that has not been decoded, and thus, the N input values corresponding to sample 1 are used as the input information of the extrapolation filter.

In the above first implementation, the specific process is introduced that the prediction values of the at least two samples in the current block are predicted by extrapolation filter prediction after the decoder side inputs the same input values to the extrapolation filter at a time.

The second implementation is to: perform, at the same time, extrapolation filtering on at least two samples in the current block respectively, by using the extrapolation filter. For example, at time t, the decoder side uses the extrapolation filter to perform extrapolation filter prediction on sample 1 in the current block, to obtain a prediction value of sample 1, and at the same time, uses the extrapolation filter to perform extrapolation filter prediction on sample 2 in the current block, to obtain a prediction value of sample 2.

The prediction direction in which the decoder side uses the extrapolation filter to perform parallel prediction on at least two samples in the current block is not limited in the embodiments of the present disclosure.

In some embodiments, the decoder side may perform parallel prediction on at least two samples in the current block by using the extrapolation filter, along a horizontal direction. Exemplarily, when performing parallel prediction on at least two samples, if one or more input values for the extrapolation filter corresponding to the sample have not been decoded, the input values that have not been decoded are discarded, and the decoded input values are used as input values for the extrapolation filter.

In some embodiments, the decoder side may perform parallel prediction on at least two samples in the current block by using the extrapolation filter, along a vertical direction. Exemplarily, when performing parallel prediction on at least two samples, if one or more input values for the extrapolation filter corresponding to the sample have not been decoded, the input values that have not been decoded are discarded, and the decoded input values are used as input values for the extrapolation filter.

In some embodiments, the decoder side may perform parallel prediction on at least two samples in the current block by using the extrapolation filter, along a diagonal line direction. Based on this, in an example, the above-mentioned S102 includes the step of the following S102-A.

In S102-A: based on the filter coefficient, parallel extrapolation filter prediction is performed on samples on a same diagonal line of the current block by using the extrapolation filter along a diagonal line direction, to obtain the prediction block of the current block.

Exemplarily, as illustrated in FIG. 23, when the decoder side uses the extrapolation filter to predict the samples in the current block, a to-be-predicted sample is located at a corner (e.g., a bottom-right corner or a top-left corner) of the selected region of the extrapolation filter. Thus, for any sample on a same angle line (i.e., samples indicated by the dark block in FIG. 23), based on the shape of the extrapolation filter, N positions corresponding to the selected sample do not include the other sample positions on this diagonal line. That is, N positions corresponding to each of samples on the same diagonal line do not include samples on the diagonal line. For example, taking two neighboring sample a and sample b on the same diagonal line of the current block as an example, as illustrated in FIG. 23, based on the shape of the extrapolation filter, N positions corresponding to sample a and N positions corresponding to sample b are determined respectively, where the N positions corresponding to sample a and the N positions corresponding to sample b that are determined, both do not include the samples on the diagonal line. Based on this, when the decoder side performs extrapolation filter prediction on the current block by using the extrapolation filter, it may perform parallel extrapolation filter prediction on samples on the same diagonal line in the current block, along the diagonal line direction. For example, parallel extrapolation filter prediction is performed on sample a and sample b, etc., located on the same diagonal line. It should be noted that the shape of the extrapolation filter illustrated in FIG. 23 is an example, and the shape of the extrapolation filter in the embodiments of the present disclosure is not limited thereto.

In the embodiments of the present disclosure, the left, bottom-left, top, left, and top-right regions of the current block have been decoded, and thus, a starting point for predicting the current block along the diagonal direction may be determined based on the regions that have been decoded and the shape of the extrapolation filter.

In an example, as illustrated in FIG. 23, the decoder side, starting from a top-left corner of the current block, performs extrapolation filter prediction on the current block along the diagonal direction. The above S102-A includes the step of the following S102-A1.

In S102-A1: the decoder side performs, based on the filter coefficient, parallel extrapolation filter prediction on samples on the same diagonal line of the current block by using the extrapolation filter along the diagonal line direction starting from a top-left corner of the current block, to obtain the prediction block of the current block. In this example, the to-be-predicted sample is located at the bottom-right corner of the selected region of the extrapolation filter.

The specific orientation of the diagonal line direction is not limited in the embodiments of the present disclosure.

In some embodiments, as illustrated in FIG. 23, when the decoder side, starting from the top-left corner of the current block, performs parallel prediction on samples on the same diagonal line in the current block, the diagonal line direction includes at least one of: a direction from top-right to bottom-left, or a direction from bottom-left to top-right.

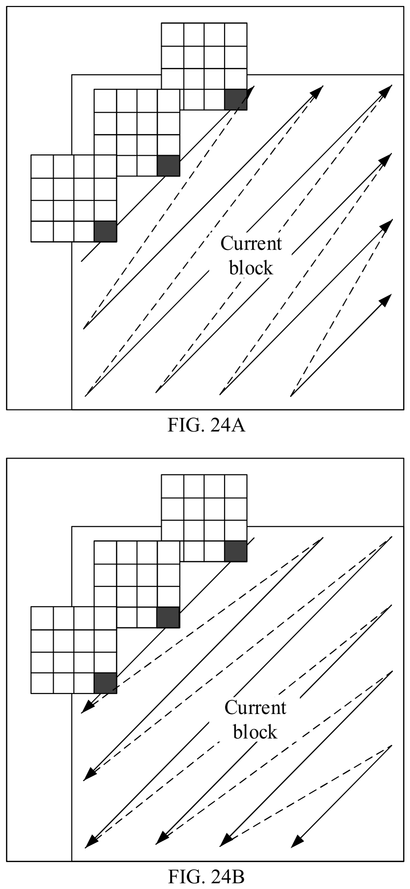

In an example, as illustrated in FIG. 24A, the diagonal line direction includes the direction from top-right to bottom-left, and in this case, as illustrated by the arrows in FIG. 24A, directions of diagonal lines of the current block are all the direction from top-right to bottom-left.

In an example, as illustrated in FIG. 24B, the diagonal line direction includes the direction from bottom-left to top-right, and in this case, as illustrated by the arrows in FIG. 24B, directions of diagonal lines of the current block are all the direction from bottom-left to top-right.

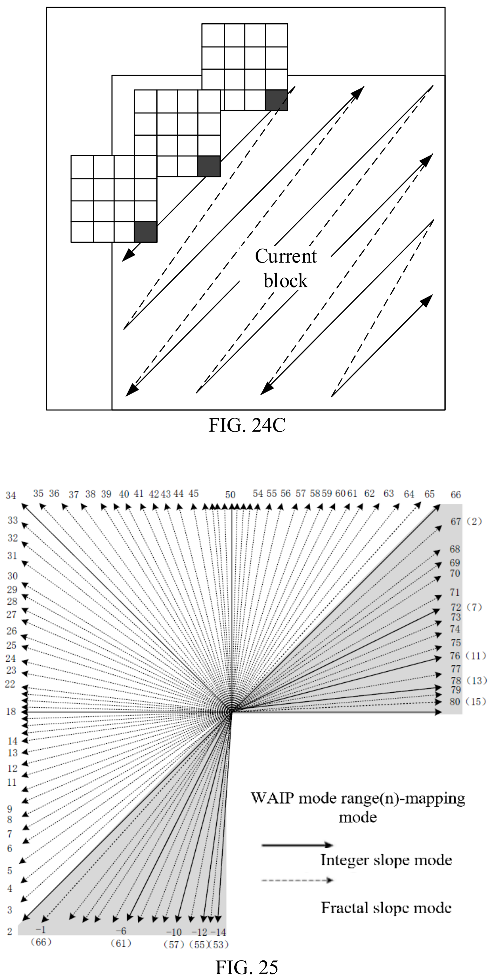

In an example, as illustrated in FIG. 24C, the diagonal line direction includes the direction from top-right to bottom-left and the direction from bottom-left to top-right, and in this case, as illustrated by the arrows in FIG. 24C, directions of diagonal lines of the current block include two directions: the direction from top-right to bottom-left and the direction from bottom-left to top-right.

It should be noted that, in the embodiments of the present disclosure, the decoder side performs parallel prediction on samples on the same diagonal line in the current block, so the specific orientation of the diagonal line direction does not constitute a limitation on the technical solutions of the embodiments of the present disclosure.

In the embodiments of the present disclosure, at each prediction, the decoder side performs prediction per samples on a diagonal line in the current block, and the process of the decoder side performing parallel prediction on samples on each diagonal line in the current block is the same, and for the sake of description, a k-th diagonal line in the current block is used as an example for illustration. In this case, the above S102-A1 includes steps of the following S102-A11 and S102-A12.

In S102-A11: for M samples on a k-th diagonal line of the current block, prediction values of the M samples are determined in parallel by using the extrapolation filter based on the filter coefficient, k and M being both positive integers.

In S102-A12: the prediction value of the current block is obtained based on prediction values of samples on each diagonal line of the current block.

The k-th diagonal line may be understood as any diagonal line in the current block illustrated in FIG. 23, and the k-th diagonal includes M samples. The decoder side determines the prediction values of these M samples in parallel, by using the extrapolation filter based on the filter coefficient. That is, the decoder side may determine the prediction values of the M samples on the k-th diagonal line at the same time, which greatly increases the prediction speed.

For example, as illustrated in FIG. 24A, assuming that the k-th diagonal line in the current block includes 3 samples, the decoder side determines prediction values of these 3 samples in parallel. For example, these 3 samples are denoted as sample 1, sample 2 and sample 3, respectively, and the decoder side performs, at the same time, extrapolation filter prediction on sample 1 by using the extrapolation filter based on the filter coefficient, to obtain a prediction value of sample 1, and performs, at the same time, extrapolation filter prediction on sample 2 by using the extrapolation filter based on the filter coefficient, to obtain a prediction value of sample 2, and performs, at the same time, extrapolation filter prediction on sample 3 by using the extrapolation filter based on the filter coefficient, to obtain a prediction value of sample 3. Thus, in a single extrapolation filter prediction process, the decoder side determines, in parallel, the prediction values of the three samples on the k-th diagonal line in the current block, which greatly improves the speed of extrapolation filter prediction. The decoder side may determine prediction values of samples on the other diagonal lines in the current block by referring to the method for determining the prediction values of the samples on the k-th diagonal line, to obtain the prediction block of the current block, thereby improving the prediction speed of the current block, and enhancing the decoding efficiency.

The specific scheme for the decoder side to determine the prediction values of M samples in parallel by using the extrapolation filter based on the filter coefficient is not limited in the embodiments of the present disclosure.

In some embodiments, since the M samples are points on the k-th diagonal line of the current block, these M samples may be understood as neighboring samples with similar features, and thus, to reduce the computational complexity, input values for the extrapolation filter corresponding to one or several samples of the M samples are determined based on the shape of the extrapolation filter. Then, input values for the extrapolation filter corresponding to other samples in the M samples other than the one or several samples are determined based on the input values for the extrapolation filter corresponding to the one or several samples, for example, by calculating an average value or calculating a weighted value or calculating in other ways. Finally, the prediction values of the M samples are determined in parallel based on the filter coefficient and the input values for the extrapolation filter corresponding to each sample of the M samples.

In some embodiments, determining the prediction values of the M samples in parallel by using the extrapolation filter based on the filter coefficient in the above S102-A11 includes the following steps.

In S102-A11-a1: sample values of N positions corresponding to each of the M samples are determined in parallel based on a shape of the extrapolation filter.

In S102-A11-a2: the prediction values of the M samples are determined in parallel based on the filter coefficient and the sample values of the N positions corresponding to each of the M samples.

In this embodiment, when the decoder side determines the prediction values of the M samples on the k-th diagonal line of the current block in parallel, it determines sample values of N positions corresponding to each of the M samples in parallel based on the shape of the extrapolation filter, where the sample values of the N positions corresponding to each sample may be understood as input values for the extrapolation filter corresponding to this sample. Then, the decoder side determines the prediction values of the M samples in parallel based on the filter coefficient and the sample values of the N positions corresponding to each of the M samples.

For example, as illustrated in FIG. 24, it is assumed that the k-th diagonal line of the current block includes 3 samples, and the 3 samples are denoted as sample 1, sample 2, and sample 3, respectively. It is assumed that the extrapolation filter of the current block is a 4 × 4 extrapolation filter. When the decoder side determines the prediction values of these 3 samples in parallel, the decoder side determines sample values of 15 positions corresponding to sample 1 based on the shape of the extrapolation filter, and uses these sample values of 15 positions as the input of the extrapolation filter, and based on the above determined filter coefficient, determines a prediction value of sample 1. At the same time, the decoder side determines sample values of 15 positions corresponding to sample 2 based on the shape of the extrapolation filter, and uses these sample values of 15 positions as the input of the extrapolation filter, and based on the above determined filter coefficient, determines a prediction value of sample 2. At the same time, the decoder side determines sample values of 15 positions corresponding to sample 3 based on the shape of the extrapolation filter, and uses these sample values of 15 positions as the input of the extrapolation filter, and based on the above determined filter coefficient, determines a prediction value of sample 3. That is, in this embodiment, the decoder side determines the prediction values of 3 samples in the current block in parallel at the same time, which greatly improves the prediction speed and then enhances the decoding efficiency.

The following introduces the specific process of determining the prediction values of the M samples in parallel based on the filter coefficient and the sample values of the N positions corresponding to each of the M samples in the above S102-A11-a2.

In some embodiments, for each sample of the M samples, the decoder side directly multiplies the sample values of the N positions corresponding to the sample by the filter coefficient to obtain a prediction value of the sample.

Exemplarily, the decoder side obtains the prediction value of each sample of the M samples based on the following Formula (5):

$$pred_{ri} = \sum_{n=0}^{N-1} c_n \times t[ri + p_n] \qquad (5)$$

Where $p_n$ is a relative position difference between the n-th position among N positions corresponding to a position ri in the current block and the position $ri$, and $c_n$ is the n-th filter coefficient in the filter coefficients. $t[ri + p_n]$ is a sample value at a position $ri + p_n$, and if the position $ri + p_n$ is in the current block, $t[ri + p_n]$ is a prediction value of a sample at the position $ri + p_n$. If the position $ri + p_n$ is in the reconstructed region surrounding the current block, $t[ri + p_n]$ is a reconstructed value of the sample at the position $ri + p_n$. $pred_{ri}$ is a prediction value of the sample at the position $ri$ in the current block.

The decoder side may determine the prediction value of each of samples on the same diagonal line in the current block in parallel, based on this Formula (5).

In some embodiments, if the decoder side determines the filter coefficient of the extrapolation filter based on the above Formula (4), the filter coefficient is determined by using the de-averaged reference region in the above Formula (4), and thus when determining the prediction value of the current block based on the filter coefficient, the influence of the sample average reconstructed value m needs to be considered.

In a possible implementation of this embodiment, the extrapolation filter coefficient determined by using the above Formula (4) are substituted into the above Formula (5), to obtain the prediction value of each point in the current block, and then, the prediction value of each point are added to the sample average reconstructed value m, to obtain a final prediction value of each point in the current block, thereby obtaining the prediction block of the current block.

In another possible implementation of this embodiment, the above-mentioned S102-A11-a2 includes the following steps.

In S102-A11-a21: the sample values of the N positions corresponding to each of the M samples are de-averaged in parallel based on the sample average reconstructed value, to obtain de-averaged sample values of the N positions corresponding to each of the M samples.

In S102-A11-a22: the prediction values of the M samples are determined in parallel based on the filter coefficient and the de-averaged sample values of the N positions corresponding to each of the M samples.

Since the above-mentioned filter coefficient is determined based on the de-averaged reference region, the decoder side de-averages the sample values of the N positions corresponding to each of the M samples on the k-th diagonal line of the current block based on the sample average reconstructed value, to obtain the de-averaged sample values of the N positions corresponding to each of the M samples. For example, for any sample of the M samples, the sample average reconstructed value is subtracted from the sample values of the N positions of the sample, to obtain the de-averaged sample values of the N positions of the sample.

Then, the prediction values of the M samples are determined in parallel based on the filter coefficient and the de-averaged sample values of the N positions corresponding to each of the M samples.

The specific scheme for determining the prediction values of the M samples in parallel based on the filter coefficient and the de-averaged sample values of the N positions corresponding to each of the M samples is not limited in the embodiments of the present disclosure.

In an implementation, for each sample of the M samples, the decoder side substitutes the de-averaged sample values of the N positions of the sample and the filter coefficient into the above Formula (5), and in this case, $t[ri + p_n]$ in Formula (5) is a de-averaged sample value of a sample at a position $ri + p_n$. After determining a prediction value of the r-th point based on the above Formula (5), the sample average reconstructed value m is added to this prediction value, to obtain a final prediction value of the r-th point.

In another implementation, the above S102-A11-a22 includes the following steps.

In S102-A11-a221: a second reconstructed region surrounding the current block is determined, and a maximum reconstructed value and a minimum reconstructed value of the second reconstructed region are determined.

In S102-A11-a222: first prediction values of the M samples are obtained in parallel based on the de-averaged sample values of the N positions corresponding to each of the M samples, the filter coefficient and the sample average reconstructed value.

In S102-All-a223: the prediction values of the M samples are determined in parallel based on the first prediction values of the M samples, the maximum reconstructed value and the minimum reconstructed value.

In this implementation, the decoder side limits the prediction value of the current block to a range. Specifically, a second reconstructed region is determined, and a maximum reconstructed value *max* and a minimum reconstructed value *min* of samples in the second reconstructed region are determined.

The specific scheme for determining the second reconstructed region surrounding the current block is not limited in the embodiments of the present disclosure.

In an example, the second reconstructed region of the current block is consistent with the reference region of the current block.

In an example, the second reconstructed region of the current block is consistent with the first reconstructed region of the current block.

In an example, top, left, top-right, top-left, and bottom-left reconstructed regions of the current block are determined as the second reconstructed region. For example, the reconstructed regions of 13 top rows, 13 left columns, 13 top-right rows, 13 top-left rows and 13 top-left columns, and 13 bottom-left columns of the current block are determined as the second reconstructed region.

It should be noted that the above S102-A11-a221 and the above S102-A11-a222 have no sequential order in the process of the specific implementation; for example, the above S102-A11-a221 may be performed before the above S102-A11-a222, or performed after the above S102-A11-a222, or performed with the above S102-A11-a222 simultaneously.

The specific scheme for the decoder side to obtain first prediction values of the M samples in parallel based on the de-averaged sample values of the N positions corresponding to each of the M samples, the filter coefficient and the sample average reconstructed value is not limited in the embodiments of the present disclosure.

For example, for any sample of the M samples, the de-averaged sample values of the N positions of the sample are multiplied by the filter coefficient, to obtain a second prediction value of the sample; and the second prediction value is added to the sample average reconstructed value to obtain a first prediction value of the sample.

Exemplarily, the decoder side obtains the first prediction value of the sample based on the following Formula (6):

$$pred_r = m + \sum((t_{r+p_n} - m) \times c_n) \qquad (6)$$

Where $(t_{r+pn} - m)$ is the de-averaged sample value of a sample at a position $r + p_n$, $pred_r$ is the first prediction value of the r-th point among M samples, and $\sum((t_{r+pn} - m) \times c_n)$ is the second prediction value of the r-th point.

For another example, after the decoder side obtains a prediction value of the sample based on the above Formula (6), it performs preset processing on the prediction value to obtain a first prediction value of the sample.

The decoder side, after determining first prediction values of M samples based on the above steps, determines prediction values of M samples in parallel based on the first prediction values, the maximum reconstructed value, and the minimum reconstructed value.

For example, for any sample of the M samples, if the first prediction value of the sample is greater than the minimum reconstructed value and less than the maximum reconstructed value, the first prediction value is determined as a prediction value of the sample.

For another example, if the first prediction value of the sample is less than or equal to the minimum reconstructed value, the minimum reconstructed value is determined as a prediction value of the sample.

For another example, if the first prediction value of the sample is greater than or equal to the maximum reconstructed value, the maximum reconstructed value is determined as a prediction value of the sample.

In an example, the decoder determines the prediction value of the sample by the following Formula (7):

$$pred_r = Clip(min, max, (m + \sum((t_{r+p_n} - m) \times c_n))) \qquad (7)$$

Where Clip represents that a first prediction value $(m + \sum((t_{r+pn} - m) \times c_n))$ of the r-th point among M samples is limited between the maximum reconstructed value *max* and the minimum reconstructed value *min*.

The above takes an example of determining the prediction values of the M samples on the k-th diagonal line in the current block, and the decoder side may, with reference to the above method, determine prediction values of samples on each diagonal line in the current block in parallel, to obtain the prediction value of each point of the current block, to form the prediction block of the current block.

Based on the above steps, the decoder side performs extrapolation filter prediction on the current block to obtain the prediction block of the current block, and then performs the following step.

In S103: a transform core corresponding to the current block is determined, and a reconstructed block of the current block is determined based on the transform core corresponding to the current block and the prediction block.

As can be seen from the above, when decoding the current block, the decoder side decodes the bitstream to obtain the quantized coefficient of the current block, and then, performs inverse quantization on the quantized coefficient to obtain the transform coefficient of the current block, and then, performs inverse transform on the transform coefficient of the current block to obtain the residual block (or residual value) of the current block. Meanwhile, it determines the prediction mode of the current block, and predicts the current block by using the prediction mode to obtain the prediction block of the current block, and adds the prediction block and the residual block to obtain the reconstructed block of the current block.

When performing the inverse transform on the transform coefficient of the current block, it is necessary to determine a transform core, and based on the transform core, perform inverse transform on the transform coefficient of the current block to obtain the residual value of the current block.

The specific scheme for the decoder side to determine the transform core corresponding to the current block is not limited in the embodiments of the present disclosure.

In some embodiments, the encoder side and decoder side use a default transform core as the transform core of the current block.

In some embodiments, after the encoder side determines a transform core of the current block, it signals indicator information of the transform core into a bitstream. Thus, the decoder side determines the transform core of the current block by decoding the bitstream.

In some embodiments, the decoder side determines the transform core of the current block by steps of the following S103-A and S103-A.

In S103-A: an intra prediction mode corresponding to the prediction block is determined.

In S103-B: the transform core corresponding to the current block is determined based on the intra prediction mode corresponding to the prediction block.

In the embodiments of the present disclosure, after determining the prediction block of the current block by using the extrapolation filter prediction mode, a traditional intra prediction mode corresponding to the prediction block is determined, and then, the transform core corresponding to the current block is determined based on the traditional intra prediction mode.

The following introduces the specific process of the decoder side to determine the intra prediction mode corresponding to the prediction block.

In an example, as illustrated in FIG. 7, traditional intra prediction modes included in the current VVC are:

a PLANAR mode: an intra prediction mode index is 0,
a DC mode: an intra prediction mode index is 1, and
angle modes: intra prediction mode indexes are 2 to 66.

In an example, as illustrated in FIG. 25, orientations of the arrows in the figure are directions of angle mode predictions in VVC, whose prediction mode indexes used when decoding are 2 to 66. When the current block is not a square block, some angle directions will be replaced with wide angles, such as -1 to -14 and 67 to 80 as illustrated in FIG. 25.

In some embodiments, the above-mentioned intra prediction mode corresponding to the prediction block is a default intra prediction mode. That is, if the current block is predicted by using the extrapolation filter prediction mode, when the prediction block is obtained, an intra prediction mode among the traditional intra prediction modes is determined as the intra prediction mode corresponding to the prediction block by default.

In some embodiments, the decoder side determines the intra prediction mode corresponding to the prediction block by steps of the following S103-A1 and S103-A2.

In S103-A1: angle values of R points in the prediction block are determined, R being a positive integer.

In S103-A2: the intra prediction mode corresponding to the prediction block is determined based on the angle values of the R points.

In the embodiments of the present disclosure, the intra prediction mode corresponding to the prediction block is determined by statistics of intra prediction modes corresponding to the angle values of the R points in the prediction block.

The specific positions or number of the R points used to determine the angle values in the prediction block is not limited in the embodiments of the present disclosure. For example, the R points may be a point in the prediction block or a plurality of points in the prediction block.

For example, if the above-mentioned R points are a point, the decoder side determines an angle value of a point in the prediction block (e.g., a center point of the prediction block), determines an intra prediction mode corresponding to the point based on the angle value of the point, and then, determine this intra prediction mode as the intra prediction mode corresponding to the prediction block.

For another example, if the above-mentioned R points are a plurality of points, the decoder side determines angle values of the plurality of points, determines an intra prediction mode corresponding to each point of the plurality of points based on the angle values of the plurality of points, and then, determines the same intra prediction mode with the highest number among the plurality of points as the intra prediction mode corresponding to the prediction block.

In some embodiments, when determining the angle values of the R points in the prediction block by means of a sliding window, the selection for the R points is related to a shape and a size of the sliding window. For example, each point of the R points is a center point in the sliding window when the sliding window is sliding in the prediction block.

In the embodiments of the present disclosure, the method for determining the angle value of each point of the R points is the same, and for the sake of description, the determination of an angle value of an i-th point among the R points is taken as an example for illustration.

The specific scheme for determining the angle value of the point is not limited in the embodiments of the present disclosure.

In some embodiments, the above-mentioned S103-A1 includes steps of S103-A11 and S103-A12.

In S103-A11: for the i-th point among the R points, a horizontal gradient and a vertical gradient of the i-th point are determined, where i is a positive integer less than or equal to R.

In S103-A12: an angle value of the i-th point is determined based on the horizontal gradient and the vertical gradient of the i-th point.

In this embodiment, for each point of the R points, e.g., the i-th point, the decoder side first determines the horizontal gradient and vertical gradient of the i-th point, and then determines the angle value of the i-th point based on the horizontal gradient and the vertical gradient.

The specific scheme for determining the horizontal gradient and the vertical gradient of the i-th point is not limited in the embodiments of the present disclosure.

In an example, the horizontal gradient value of the i-th point is determined according to prediction values of points surrounding the i-th point in the prediction block and changes of the prediction value of the i-th point in the horizontal direction, and the vertical gradient value of the i-th point is determined according to prediction values of points surrounding the i-th point in the prediction block and changes of the prediction value of the i-th point in the vertical direction.

In another example, the decoder side determines prediction values of points within the sliding window centered on the i-th point, in the prediction block; and obtains the horizontal gradient and the vertical gradient of the i-th point based on the prediction values of the points within the sliding window and a horizontal gradient operator and a vertical gradient operator.

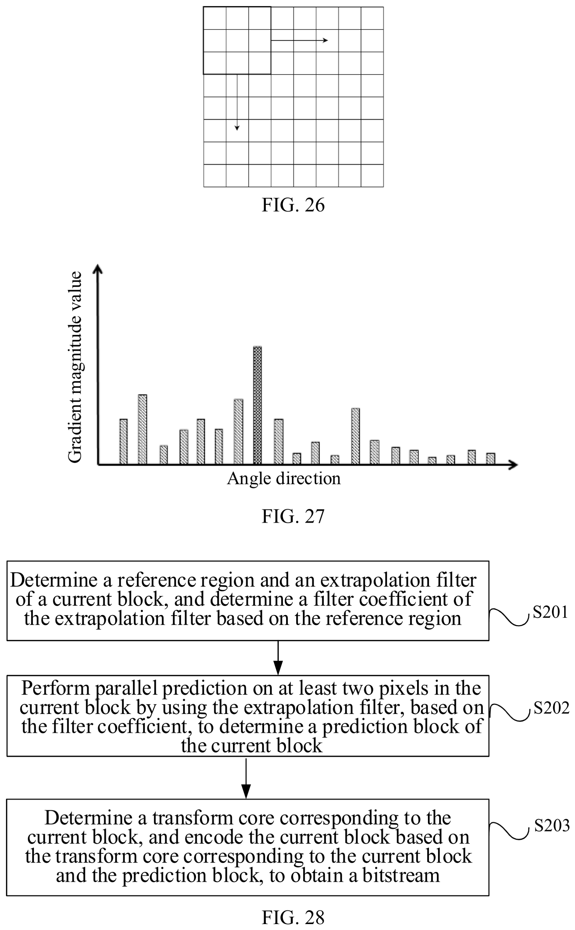

In this example, a sliding window is first determined, e.g., as illustrated in FIG. 26, a 3×3 size of sliding window is determined, the sliding window is slid in the prediction block, and each time when sliding, a horizontal gradient and a vertical gradient of a center point of the sliding window are determined. Taking the center point of the current sliding window as the i-th point as an example, prediction values of respective points within the current sliding window are first acquired, for example, prediction values of 3×3 = 9 points may be obtained. Then, the horizontal gradient and vertical gradient of the i-th point are determined according to the prediction values of the 9 points, and a preset horizontal gradient operator and a preset vertical gradient operator.

For example, the product of the prediction values of the points within the sliding window and the horizontal gradient operator is determined as the horizontal gradient $G_x$ of the i-th point; and the product of the prediction values of the points within the sliding window and the vertical gradient operator is determined as the vertical gradient of the i-th point.

For another example, the prediction values of the points within the sliding window are multiplied by the horizontal gradient operator, then a preset operation is performed on the multiplied result with a preset value, to obtain the horizontal gradient $G_x$ of the i-th point; and the prediction values of the points within the sliding window are multiplied by the vertical gradient operator, then a preset operation is performed on the multiplied result with a preset value, to obtain the vertical gradient of the i-th point.

The specific values of the horizontal gradient operator and the vertical gradient operator are not limited in the embodiments of the present disclosure.

For example, the horizontal gradient operator $M_x$ and the vertical gradient operator $M_y$ are:

$$M_x = \begin{bmatrix} -1 & 0 & 1 \\ -2 & 0 & 2 \\ -1 & 0 & 1 \end{bmatrix}, \text{ and } M_y = \begin{bmatrix} -1 & -2 & -1 \\ 0 & 0 & 0 \\ 1 & 2 & 1 \end{bmatrix}.$$

The decoder side, after determining the horizontal gradient and vertical gradient of the i-th point based on the above steps, may determine the angle value of the i-th point according to the horizontal gradient and the vertical gradient of the i-th point.

For example, an arctangent value of a ratio value of the vertical gradient to the horizontal gradient of the i-th point is determined as the angle value of the i-th point. An example is shown in Formula (8):

$$O = atan\left(\frac{G_y}{G_x}\right) \qquad (8)$$

Where $G_x$ is the horizontal gradient of the i-th point, $G_y$ is the vertical gradient of the i-th point, $O$ is the angle value of the i-th point, and *atan*() is an arctangent function.

The decoder side, in addition to determining the angle value of the i-th point by using the above Formula (8), may also determine the angle value of the i-th point by using other schemes. For example, the decoder side may adjust the angle value determined by the above Formula (8) to obtain the angle value of the i-th point.

The decoder side uses the above method for each point of the R points, to determine the angle value of each point of the R points, and then performs the above S103-A2 to determine the intra prediction mode corresponding to the prediction block based on the angle values of the R points.

The specific scheme for determining the intra prediction mode corresponding to the prediction block based on the angle values of the R points is not limited in the embodiments of the present disclosure.

In some embodiments, the decoder side selects a same angle value 1 with the highest number, from the angle values of the R points, matches the angle value 1 with the prediction angles of the traditional intra prediction modes, to obtain an intra prediction mode corresponding to the angle value 1, and determines the intra prediction mode corresponding to the angle value 1 as the intra prediction mode corresponding to the prediction block.

In some embodiments, the above-mentioned S103-A2 includes steps of the following S103-A21 and S103-A22.

In S103-A21: intra prediction modes corresponding to the R points are determined based on the angle values of the R point.

S103-A22: the intra prediction mode corresponding to the prediction block is determined based on the intra prediction modes corresponding to the R points.

In this implementation, the decoder side determines an intra prediction mode corresponding to each point of the R points based on the angle value of the each point. For example, for each point of the R points, the angle value of the point is matched with the prediction angles of the traditional intra prediction modes, to obtain an intra prediction mode corresponding to the angle value of the point. Thus, the intra prediction mode corresponding to each point of the R points may be obtained.

Then, the intra prediction mode corresponding to the prediction block is determined based on the intra prediction mode corresponding to each point of the R points.

In a possible implementation, an intra prediction mode with the highest repetition number, among the intra prediction modes corresponding to the R points respectively, is determined as the intra prediction mode corresponding to the prediction block.

In another possible implementation, the above S103-A22 includes the following steps.

In S103-A221: gradient magnitude values corresponding to the R points are determined based on horizontal gradients and vertical gradients of the R points.

In S103-A222: the intra prediction mode corresponding to the prediction block is determined based on the gradient magnitude values and the intra prediction modes corresponding to the R points.

In this implementation, the decoder side determines the gradient magnitude value corresponding to each point of the R points based on the above-determined horizontal gradient and vertical gradient of each point of the R points.

In the embodiments of the present disclosure, the specific scheme for the decoder side to determine the gradient magnitude value corresponding to each point of the R points is the same. For the sake of description, the determination of the gradient magnitude value corresponding to the i-th point among the R points is taken as an example.

The specific scheme for the decoder side to determine the gradient magnitude value corresponding to the i-th point based on the horizontal gradient and the vertical gradient of the i-th point, is not limited in the embodiments of the present disclosure.

For example, the decoder side multiplies the horizontal gradient of the i-th point by the vertical gradient of the i-th point, to obtain the gradient magnitude value corresponding to the i-th point.

For another example, the decoder side adds an absolute value of the horizontal gradient of the i-th point and an absolute value of the vertical gradient of the i-th point, to obtain the gradient magnitude value corresponding to the i-th point.

Exemplarily, the decoder side determines the gradient magnitude value corresponding to the i-th point based on the following Formula (9):

$$G = |G_x| + |G_y| \quad (9)$$

Where $G$ is the gradient magnitude value corresponding to the i-th point, $G_x$ is the horizontal gradient of the i-th point, and $G_y$ is the vertical gradient of the i-th point.

The decoder side may determine the gradient magnitude value corresponding to each point of the R points based on the above steps. Then, the decoder side performs the above S103-A222, to determine the intra prediction mode corresponding to the prediction block based on the gradient magnitude values and the intra prediction modes corresponding to the R points.

In an example, an intra prediction mode corresponding to a point with the largest gradient magnitude value among the R points is determined as the intra prediction mode corresponding to the prediction block.

In another example, for any point of the R points, the gradient magnitude value corresponding to the point is accumulated on the intra prediction mode corresponding to the point, to obtain the accumulated gradient magnitude values of the intra prediction modes corresponding to the R points; and an intra prediction mode with the largest accumulated gradient magnitude value among the intra prediction modes corresponding to the R points is determined as the intra prediction mode corresponding to the prediction block.

Exemplarily, as illustrated in FIG. 27, the gradient magnitude value corresponding to each point of the R points is accumulated on the corresponding intra prediction mode; for example, if the intra prediction modes corresponding to a point 1 and a point 2 among the R points are both an intra prediction mode 1, the gradient magnitude values corresponding to the point 1 and the point 2 are accumulated to the gradient magnitude value corresponding to the intra prediction mode 1. Similarly, a histogram of the gradient magnitude values illustrated in FIG. 27 may be obtained. Thus, an intra prediction mode with the largest accumulated gradient magnitude value in the histogram of the gradient magnitude values may be determined as the intra prediction mode corresponding to the prediction block. For example, in FIG. 27, the intra prediction mode corresponding to the dark accumulated gradient magnitude value is determined as the intra prediction mode corresponding to the prediction block.

In some embodiments, if the gradient magnitude values of the R points are all 0, a first intra prediction mode is determined as the intra prediction mode corresponding to the prediction block. That is, if the gradient magnitude values corresponding to all points among the R points are 0, it indicates that the horizontal gradient and the vertical gradient of each point of the R points are both 0, and in this case, the preset first intra prediction mode may be determined as the intra prediction mode corresponding to the prediction block.

The type of the first intra prediction mode mentioned above is not limited in the embodiments of the present disclosure.

Exemplarily, the first intra prediction mode mentioned above is the PLANAR mode.

The decoder side, after determining the intra prediction mode corresponding to the prediction block based on the above steps, determines the transform core corresponding to the current block based on the intra prediction mode corresponding to the prediction block.

The specific scheme for the decoder side to determine the transform core corresponding to the current block based on the intra prediction mode corresponding to the prediction block is not limited in the embodiments of the present disclosure.

In some embodiments, the decoder side searches for a picture block with an intra prediction mode same as the intra prediction mode corresponding to the prediction block among decoded picture blocks surrounding the prediction block based on the intra prediction mode corresponding to the prediction block, and then determines a transform core corresponding to the picture block as the transform core corresponding to the current block.

In some embodiments, determining the transform core corresponding to the current block based on the intra prediction mode corresponding to the prediction block in the above S103-B includes the following steps.

In S103-B1: a corresponding relationship between intra prediction modes and transform core groups is acquired, where a transform core group includes at least one type of transform core.

S103-B2: a first transform core group corresponding to the intra prediction mode of the prediction block is searched in the corresponding relationship.

S103-B3: the transform core corresponding to the current block is determined from the first transform core group.

In the embodiments of the present disclosure, there is a corresponding relationship between intra prediction modes and transform core groups. Based on this, after determining the intra prediction mode corresponding to the prediction block, the decoder side acquires the preset corresponding relationship between intra prediction modes and transform core groups.

In an example, the corresponding relationship between intra prediction modes and transform core groups is shown in Table 17:

Table 17

| Traditional intra prediction mode | Planar mode | DC mode | -14 to -1 67 to 80, 2 and 66 angle directions | 3 and 65 angle directions | 4 and 64 angle directions | 5 and 63 angle directions | 6 and 62 angle directions | 7 and 61 angle directions | 8 and 60 angle directions |
|---|---|---|---|---|---|---|---|---|---|
| Transform core group type | 0 | 1 | 2 | 3 | 4 | 5 | 6 | 7 | 8 |
| 9 and 59 angle directions | 10 and 58 angle directions | 11 and 57 angle directions | 12 and 56 angle directions | 13 and 55 angle directions | 14 and 54 angle directions | 15 and 53 angle directions | 16 and 52 angle directions | 17 and 51 angle directions | 18 and 50 angle directions |
| 9 | 10 | 11 | 12 | 13 | 14 | 15 | 16 | 17 | 18 |
| 19 and 49 angle directions | 20 and 48 angle directions | 21 and 47 angle directions | 22 and 46 angle directions | 23 and 45 angle directions | 24 and 44 angle directions | 25 and 43 angle directions | 26 and 42 angle directions | 27 and 41 angle directions | 28 and 40 angle directions |
| 19 | 20 | 21 | 22 | 23 | 24 | 25 | 26 | 27 | 28 |
| 29 and 39 angle directions | 30 and 38 angle directions | 31 and 37 angle directions | 32 and 36 angle directions | 33 and 35 angle directions | 34 angle direction | | | | |
| 29 | 30 | 31 | 32 | 33 | 34 | | | | |
| Traditional intra prediction mode | Planar mode | DC mode | -14 to -1 67 to 80, 2 and 66 angle directions | 3 and 65 angle directions | 4 and 64 angle directions | 5 and 63 angle directions | 6 and 62 angle directions | 7 and 61 angle directions | 8 and 60 angle directions |
| Transform core group type | 0 | 1 | 2 | 3 | 4 | 5 | 6 | 7 | 8 |
| 9 and 59 angle directions | 10 and 58 angle directions | 11 and 57 angle directions | 12 and 56 angle directions | 13 and 55 angle directions | 14 and 54 angle directions | 15 and 53 angle directions | 16 and 52 angle directions | 17 and 51 angle directions | 18 and 50 angle directions |
| 9 | 10 | 11 | 12 | 13 | 14 | 15 | 16 | 17 | 18 |
| 19 and 49 angle directions | 20 and 48 angle directions | 21 and 47 angle directions | 22 and 46 angle directions | 23 and 45 angle directions | 24 and 44 angle directions | 25 and 43 angle directions | 26 and 42 angle directions | 27 and 41 angle directions | 28 and 40 angle directions |
| 19 | 20 | 21 | 22 | 23 | 24 | 25 | 26 | 27 | 28 |

| Traditional intra prediction mode | Planar mode | DC mode | -14 to -1 67 to 80, 2 and 66 angle directions | 3 and 65 angle directions | 4 and 64 angle directions | 5 and 63 angle direction | 6 and 62 angle directions | 7 and 61 angle directions | 8 and 60 angle directions |
|---|---|---|---|---|---|---|---|---|---|
| 29 and 39 angle directions | 30 and 38 angle directions | 31 and 37 angle directions | 32 and 36 angle directions | 33 and 35 angle directions | 34 angle direction | | | | |
| 29 | 30 | 31 | 32 | 33 | 34 | | | | |

It should be noted that the above Table 17 merely illustrates a corresponding relationship between intra prediction modes and transform core groups involved in the embodiments of the present disclosure, and the corresponding relationship between intra prediction modes and transform core groups in the embodiments of the present disclosure includes but is not limited to that shown in Table 17.

Each transform core group includes at least one type of transform core.

After acquiring the corresponding relationship between intra prediction modes and transform core groups as shown in Table 17, the decoder side searches for a transform core group corresponding to the intra prediction mode corresponding to the prediction block, in the corresponding relationship between intra prediction modes and transform core groups, and denotes the transform core group as the first transform core group. For example, if the intra prediction mode corresponding to the prediction block is an angle prediction mode of the 64-angle direction, the above Table 17 may be searched to obtain a transform core group 4 corresponding to the angle prediction mode of the 64-angle direction. Thus, the decoder side determines the transform core corresponding to the current block, from at least one type of transform core included in the transform core group 4.

For example, if the first transform core group includes a transform core, this transform core is determined as the transform core corresponding to the current block.

For another example, if the first transform core group includes multiple types of transform cores, the decoder side determines a transform core type corresponding to the current block, and then determines a transform core with this transform core type in the first transform core group as the transform core corresponding to the current block.

The method for the decoder side to determine the type of transform core corresponding to the current block includes but is not limited to the following several methods.

In an example, the transform core type corresponding to the current block is a default type. Thus, the decoder side determines the default type as the transform core type corresponding to the current block.

In another example, the encoder side signals the transform core type corresponding to the current block into a bitstream. Thus, the decoder side obtains the transform core type corresponding to the current block by decoding the bitstream.

As can be seen from the above, in the embodiments of the present disclosure, the decoder side determines a prediction block of the current block by using the extrapolation filter prediction mode, and then determines a traditional intra prediction mode corresponding to the prediction block, and determines a transform core corresponding to the current block based on the traditional intra prediction mode corresponding to the prediction block. That is, the traditional intra prediction mode derived based on the extrapolation filter prediction in the embodiments of the present disclosure is used to select transform core group types of a non-separable primary transform (NSPT) and a non-separable secondary transform core (Low Frequency non-separable secondary transform, LFNST), so that the determined transform core better conforms the characteristics of the current block, which improves the accuracy of the determination of the transform core, and when using the accurately-determined transform core to determine the reconstructed value of the current block, the determination precision of the reconstructed value may be enhanced, thereby improving the decoding accuracy of the current block. Additionally, in the embodiments of the present disclosure, when determining the transform core of the current block by the traditional prediction mode corresponding to the prediction block, there is no need to separately indicate the transform core, thereby saving codewords and further enhancing the video encoding and decoding effect.

The decoder side, after determining the transform core corresponding to the current block based on the above steps, performs inverse transform on the transform coefficient of the current block based on the transform core corresponding to the current block, to obtain the residual block of the current block, and based on the prediction block and the residual block of the current block, obtains the reconstructed block of the current block.

In the embodiments of the present disclosure, the decoder side determines the prediction block of the current block and the transform core corresponding to the current block based on the above steps. Thus, the decoder side may decode the bitstream to obtain the quantized coefficient of the current block, and then, perform inverse quantization on the quantized coefficient, to obtain the transform coefficient of the current block, and use the transform core corresponding to the current block determined above to perform inverse transform on the transform coefficient of the current block, to obtain the residual block (or residual value) of the current block. Finally, the decoder side adds the prediction block and the residual block of the current block, to obtain the reconstructed block of the current block.

In some embodiments, the above-mentioned current block is a luma block or a chroma block, that is, in the embodiments of the present disclosure, both the luma block and the chroma block may be predicted by using the extrapolation filter prediction mode provided in the embodiments of the present disclosure.

In some embodiments, if the current block is a luma block, the prediction mode of the current block is the extrapolation filter prediction mode, and the direct derivation mode DM is used for a chroma block corresponding to the current block, the PLANAR mode or the intra prediction mode corresponding to the prediction block mentioned above is determined as a prediction mode of the chroma block.

In the video decoding method provided in the embodiments of the present disclosure, when predicting the current block, a reference region and an extrapolation filter of the current block are first determined, the filter coefficient is determined based on the reference region, parallel prediction is performed on at least two samples in the current block by using the extrapolation filter based on the filter coefficient, to obtain a prediction block of the current block; and a transform core corresponding to the current block is determined, and based on the transform core and the prediction block, a reconstructed value of the current block is determined. That is, in the embodiments of the present disclosure, when performing extrapolation filter prediction on the current block by using the extrapolation filter, parallel prediction is performed on at least two points in the current block, thereby improving the prediction speed and then enhancing the decoding efficiency.

The above introduces the prediction method of the present disclosure by taking the decoder side as an example, and the following describes by taking an encoder side as an example.

FIG. 28 is a schematic flowchart of a prediction method provided in an embodiment of the present disclosure, and the embodiment of the present disclosure is applied to the video encoder illustrated in FIG. 1 and FIG. 2. As illustrated in FIG. 28, the method of the embodiment of the present disclosure includes the following.

In S201: a reference region and an extrapolation filter of a current block are determined, and a filter coefficient of the extrapolation filter is determined based on the reference region.

When encoding the current block, the encoder side first determines a prediction mode of the current block and uses the prediction mode to predict the current block, to obtain a prediction block (or a prediction value) of the current block. It subtracts the prediction block of the current block from the current block, to obtain a residual block (or a residual value) of the current block. Then, it transforms the residual block of the current block to obtain a transform coefficient, quantizes the transform coefficient to obtain a quantized coefficient, and encodes the quantized coefficient to obtain a bitstream.

In the embodiments of the present disclosure, the encoder side first determines the prediction mode of the current block.

In some embodiments, the encoder side determines the prediction mode of the current block by at least the following schemes:

Scheme 1: the encoder side determines, from a plurality of candidate prediction modes composed of traditional prediction modes and extrapolation filter prediction modes illustrated in FIG. 6 or FIG. 7, a candidate prediction mode with the lowest cost as the prediction mode of the current block. Then, the encoder side adds indication information of the prediction mode of the current block into a bitstream. Thus, the decoder side obtains the indication information of the prediction mode of the current block by decoding the bitstream, and then determines the prediction mode of the current block based on the indication information.

Scheme 2: The encoder side constructs an intra prediction mode candidate list, and the intra prediction mode of the current block is selected in this intra prediction mode candidate list, and it should be noted that this intra prediction mode candidate list includes extrapolation filter prediction mode(s). Then, the encoder side signals a sequence number (or an index number) of the intra prediction mode of the current block in the intra prediction mode candidate list into the bitstream.

Scheme 3: The encoder side constructs an intra prediction mode candidate list, where the intra prediction mode candidate list includes extrapolation filter prediction mode(s), and then, selects the intra prediction mode of the current block from this intra prediction mode candidate list, and for example, determines a cost of each candidate prediction mode in the intra prediction mode candidate list on a template of the current block, and then determines the intra prediction mode of the current block based on the cost.

As can be seen from the above methods, when determining the prediction mode of the current block, the encoder side first determines a plurality of candidate prediction modes, and then determines the prediction mode of the current block from the plurality of candidate prediction modes, where the plurality of candidate prediction modes include the extrapolation filter prediction mode.

The specific scheme for determining the prediction mode of the current block from the plurality of candidate prediction modes may be that: the encoder side determines any one of the plurality of candidate prediction modes as the prediction mode of the current block. That is, the encoder side uses the plurality of candidate prediction modes to predict the current block respectively, determines a cost corresponding to each candidate prediction mode, where the cost may be RDO (Rate Distortion Optimization) or SATD, etc., and then determines the candidate prediction mode with the smallest cost as the prediction mode of the current block.

The encoder side, based on the above method, determines the prediction mode of the current block, and if the determined prediction mode of the current block is the extrapolation filter prediction mode, it performs the step of the above S201.

In some embodiments, usage condition(s) for the extrapolation filter prediction mode are defined, and based on this, before determining the reference region and the extrapolation filter of the current block, it is implemented to determine whether the extrapolation filter prediction mode is allowed to be used for predicting the current picture block.

The specific scheme for determining whether the extrapolation filter prediction mode is allowed to be used for predicting the current picture block is not limited in the embodiments of the present disclosure. That is, the specific usage condition(s) for the extrapolation filter prediction mode are not limited.

In some embodiments, before determining the prediction mode of the current block from the plurality of candidate prediction modes, the encoder side also needs to determine whether a position of the current block in the current picture meets a preset position requirement and determine whether a size of the current block meets a requirement of a preset block size.

The present disclosure does not impose limitations on the preset position or the preset block size, which are specifically determined according to actual needs.

In an example, as illustrated in FIG. 11, it is assumed that a top-left corner of the current picture is at a position (0, 0), and a top-left corner of the current block is at a position (x, y), where the preset position requirement is that the x of the current block is greater than or equal to a first preset value XX, and the y value of the current block is greater than or equal to a second preset value YY.

The embodiments of the present disclosure do not impose limitations on the specific values of the first preset value and the second preset value mentioned above.

Exemplarily, the first preset value and the second preset value are the same.

Exemplarily, the first preset value and the second preset value are both 13, that is, when a distance from a top side of the current block to a top side of the current picture is greater than or equal to 13 sample rows, and a distance from a left side of the current block to a left side of the current picture is greater than or equal to 13 sample columns, the position of the current block in the current picture meets the preset position requirement.

In an example, continuing to refer to FIG. 11, assuming that a width of the current block is W and a height of the current block is H, the preset block size requirement is that the width W of the current block is less than or equal to a third preset value A, and the height H of the current block is less than or equal to a fourth preset value B.

The specific values of the third preset value and the fourth preset value mentioned above are not limited in the embodiments of the present disclosure.

For example, the third preset value and the fourth preset value are the same.

For example, the third preset value and the fourth preset value are both 32, that is, when the width and the height of the current block are both less than or equal to 32, it means that the current block meets the preset block size requirement.

In the embodiments of the present disclosure, before determining whether the current block is predicted by using the extrapolation filter prediction mode, the encoder side first determines whether the position of the current block in the current picture meets the preset position requirement and determines whether the size of the current block meets the preset block size requirement. If the position of the current block in the current picture meets the preset position requirement and the size of the current block meets the preset block size requirement, the prediction mode of the current block is determined from the plurality of candidate prediction modes including the extrapolation filter prediction mode mentioned above. For example, as illustrated in FIG. 11, if the distance from the top side of the current block to the top side of the current picture is greater than or equal to 13 sample rows, the distance from the left side of the current block to the left side of the current picture is greater than or equal to 13 sample columns, and the width and the height of the current block are both less than or equal to 32, the prediction mode of the current block is determined from the plurality of candidate prediction modes including the extrapolation filter prediction mode mentioned above.

In some embodiments, the first preset value, the second preset value, the third preset value, and the fourth preset value mentioned above are default values.

In some embodiments, if the position of the current block in the current picture does not meet the preset position requirement, and/or the size of the current block does not meet the preset block size requirement, the encoder side determines that the prediction mode of the current block is not the extrapolation filter prediction mode, and in this case, the encoder side determines the prediction mode of the current block from the candidate prediction modes excluding the extrapolation filter prediction mode.

In some embodiments, before determining whether the position of the current block in the current picture meets the preset position requirement and determining whether the size of the current block meets the preset block size, the encoder side further: determines whether the extrapolation filter prediction mode is allowed to be used for predicting the current sequence; and if the extrapolation filter prediction mode is allowed to be used for predicting the current sequence, determines whether the position of the current block in the current picture meets the preset position requirement, and determines whether the size of the current block meets the preset block size.

In the embodiments of the present disclosure, the high-level syntax element is used to indicate whether the extrapolation filter prediction mode is allowed to be used for predicting the current sequence. If the extrapolation filter prediction mode is used for predicting the current sequence, the encoder side determines whether the position of the current block in the current picture meets the preset position requirement, and determines whether the size of the current block meets the preset block size. If it is determined that the position of the current block in the current picture meets the preset position requirement and it is determined that the size of the current block meets the preset block size requirement, the encoder side determines the prediction mode of the current block from the candidate prediction modes excluding the extrapolation filter prediction mode.

In some embodiments, if the encoder side determines that the extrapolation filter prediction mode is not allowed to be used for predicting the current sequence, the encoder side skips the step of the above S201.

In some embodiments, the encoder side signals second information into the bitstream, and the second information is used to indicate whether the extrapolation filter prediction mode is allowed to be used for predicting the current sequenceextrapolation.

The specific indication form of the second information is not limited in the embodiments of the present disclosure, and may be any indication information that may indicate whether the extrapolation filter prediction mode is allowed to be used for predicting the current sequenceextrapolation.

In an example, the second information may be represented as sps_eip_enabled flag, so that whether the extrapolation filter prediction mode is allowed to be used for predicting the current sequence may be indicated by assigning different values to sps_eip _enabled _flag. For example, when sps_eip_enabled_flag = 0, it indicates that the extrapolation filter prediction mode is not allowed to be used for predicting the current sequence, and when sps_eip_enabled_flag = 1, it indicates that the extrapolation filter prediction mode is allowed to be used for predicting the current sequence.

Exemplarily, the second information is carried in a sequence-level parameter set (sequence parameter set, SPS).

In some embodiments, the embodiments of the present disclosure may further include: indicating whether the extrapolation filter prediction technology is used, by a general constraints information (GCI) flag. Exemplarily, the gci_no_eip_constraint_flag indicates whether the extrapolation filter prediction technology is enabled for the current video. Exemplarily, as shown in Table 2, the gci_no_eip_constraint_flag is carried in the general constraints information general_constraints_info().

As can be seen from the above, determining whether the extrapolation filter prediction mode is used for the current block may be limited by the high-level syntax, for example, by the syntax element such as GCI, sequence-level, frame-level, slice-level, or block-level, etc. It may also be limited by the size of the current block and the position of the current block.

In some embodiments, when the extrapolation filter prediction mode is used for some relatively small blocks, the computational cost and computational complexity will increase. This is because the extrapolation filter prediction mode has a relatively high computational complexity in the present disclosure, and if the extrapolation filter prediction mode is also used for some small blocks, this will increase the number of times that the extrapolation filter prediction mode is used through the entire picture decoding, thereby increasing the computational cost and computational complexity of the picture. Based on this, in the embodiments of the present disclosure, the extrapolation filter prediction mode is only allowed to be used for relatively large blocks. For example, only when the size of the current block is greater than or equal to a preset size, the extrapolation filter prediction mode is allowed to be used. When the size of the current block is less than the preset size, the extrapolation filter prediction mode is not allowed to be used for the current block. The specific value of the preset size is not limited in the embodiments of the present disclosure. For example, the size of the current block being greater than or equal to the preset size may be, the number of samples of the current block being greater than or equal to a preset number, or at least one of the length or width of the current block being greater than or equal to a preset value, or a ratio of the length and width of the current block being greater than or equal to a preset ratio, etc.

In some embodiments, if the current block is in a first row of the current CTU, it is determined that the extrapolation filter prediction mode is not allowed to be used for the current block. That is, if the current block is predicted by using the extrapolation filter prediction mode, the current block is not in the first row of the current CTU.

In some embodiments, determining whether the extrapolation filter prediction mode is used for the current block, is also related to a type of the current picture. For example, for an intra prediction picture, it is specified that the extrapolation filter prediction mode can be used for prediction, and for an inter prediction picture, the extrapolation filter prediction mode is not allowed for prediction. Based on this, if the current picture in which the current block is located is an intra prediction picture, it is determined that the extrapolation filter prediction mode is allowed to be used for predicting the current block. If the current picture is not an intra prediction picture (e.g., is an inter prediction picture), it is determined that the extrapolation filter prediction mode is not allowed to be used for predicting the current block.

In some embodiments, in the ECM reference software, to improve encoding and decoding performance, a series of complex intra prediction modes are introduced, such as: template-based intra prediction derivation (TIMD), decoder-side intra prediction derivation (DIMD), template-based multiple reference line intra prediction (TMRL), spatial geometrical partitioning mode (SGPM), and convolutional cross component model (CCCM). These complex intra prediction modes are all intra prediction modes based on the template matching technology, and in the process of using the extrapolation filter prediction mode in the embodiments of the present disclosure, information of the reconstructed region (which can be understood as a template region) is also used. Therefore, in the embodiments of the present disclosure, the extrapolation filter prediction mode may also be classified as an intra prediction mode based on the template matching technology. Based on this, in the embodiments of the present disclosure, a unified identification (e.g., first information) is used to uniformly indicate the above-mentioned intra prediction modes based on the template matching technology. For example, if the first information indicates that the template matching-based technology is not enabled, it means that all the above-mentioned intra prediction modes based on the template matching technology (i.e., TIMD, DIMD, TMRL, SGPM, TMRL, CCCM, and extrapolation filter prediction mode) are not allowed to be used. If the first information indicates that the template matching-based technology is not enabled, it means that these above-mentioned intra prediction modes based on the template matching technology are allowed to be used, and then, an intra prediction mode specifically used for the current block is further determined based on other information.

Based on the above description, in the embodiments of the present disclosure, determining whether the extrapolation filter prediction mode is allowed to be used for the current block, includes: determine and obtain first information, where the first information is used to indicate whether a template matching-based technology is enabled; and determining whether the extrapolation filter prediction mode is allowed to be used for the current block based on the first information. For example, if the first information indicates that the template matching-based technology is not enabled, it is determined that the extrapolation filter prediction mode is not allowed to be used for predicting the current block. For another example, if the first information indicates that the template matching-based technology is enabled, whether the current block is predicted by using the extrapolation filter prediction mode is determined by other information.

The specific indication form of the first information mentioned above is not limited in the embodiments of the present disclosure.

Exemplarily, the first information mentioned above may be GCI, sequence-level, frame-level, slice-level, or block-level indication information.

In an example, if the first information mentioned above is sequence-level indication information, the first information is determined, and if the first information indicates that the template matching-based technology is enabled, the second information (sps_eip _enabled _flag) mentioned above continues to be determined, and then, determines whether the extrapolation filter prediction mode is allowed to be used for the current block based on the second information. If the first information indicates that the template matching-based technology is not enabled, it is directly determined that the extrapolation filter prediction mode is not applicable for predicting the current block, and the step of determining the second information is skipped.

In some embodiments, a condition for the encoder side to determine whether the extrapolation filter prediction mode can be used for predicting the current block, includes at least one of:

1) whether the current picture is an intra prediction picture;
2) whether the high-level syntax is allowed; optionally, the high-level syntax includes sequence-level, frame-level, slice-level, block-level, etc., referring to the above description for details;
3) whether the size and the shape of the current block are allowed; referring to the above description for details; or
4) whether the position of the current block is allowed; referring to the above description for details.

In some embodiments, if the encoder side determines that the extrapolation filter prediction mode is allowed to be used for predicting the current sequence, it signals the third information into the bitstream, and the third information is used to indicate whether the current block is predicted by using the extrapolation filter prediction mode.

The specific implementation form of the third information mentioned above is not limited in the embodiments of the present disclosure, and may be any indication information that can indicate whether the current block is predicted by using the extrapolation filter prediction mode.

In an example, the third information may be represented as intra_eip_flag, and thus, whether the current block is predicted by using the extrapolation filter prediction mode may be indicated by different values assigned to intra_eip_flag. For example, when intra_eip_flag = 0, it indicates that the current block is not predicted by using the extrapolation filter prediction mode; when intra_eip_flag = 1, it indicates that the current block is predicted by using the extrapolation filter prediction mode. In this way, the encoder side signals the preset flag intra_eip_flag into the bitstream, and the decoder side determines the prediction mode of the current block, by the value of the decoded preset flag intra_eip_flag, and for example, when the preset flag intra_eip_flag = 1, it indicates that the prediction mode of the current block is the extrapolation filter prediction mode, and the decoder side uses the extrapolation filter prediction mode to predict the current block.

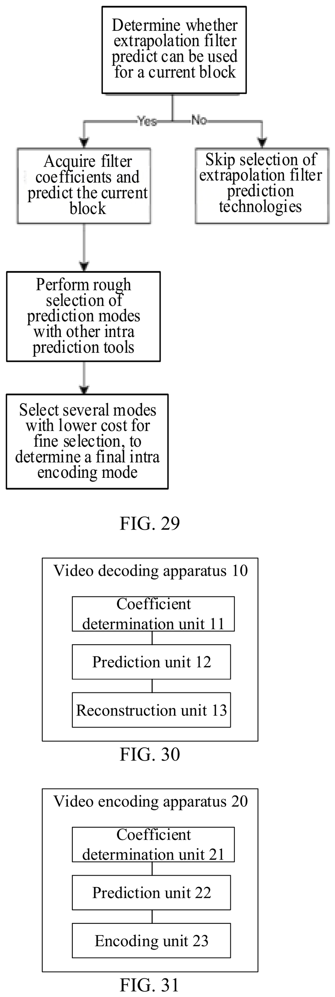

In some embodiments, as illustrated in FIG. 29, the process of determining the prediction mode of the current block in the embodiments of the present disclosure may include: first determining whether the current block is predicted by using the extrapolation filter prediction mode, for example, where the sequence-level second information mentioned above indicates that the extrapolation filter prediction mode is allowed to be used for the current sequence; and if it is determined that the position of the current block in the current picture meets the preset position requirement and it is determined that the size of the current block meets the preset block size requirement, determining that the current block can be predicted by using the extrapolation filter prediction mode. Next, the filter coefficient is acquired and the current block is predicted according to the filter coefficient, to obtain the prediction value of the current block. Meanwhile, a coarse selection of prediction modes is performed with other intra prediction mode tools, to select several prediction modes with lower cost for a further fine selection, to determine a final intra prediction mode as the prediction mode of the current block. If it is determined that the current block cannot be predicted by using the extrapolation filter prediction mode, the selection of the extrapolation filter prediction mode is skipped.

Exemplarily, during a stage of the coarse selection of the prediction mode of the current block, the encoder side calculates a cost of each candidate intra prediction mode (including the extrapolation filter prediction mode), and a calculation formula for the cost is shown in Formula (10):

$$cost = D + \lambda R \qquad (10)$$

Where $R$ represents a predicted bit overhead required for encoding the intra prediction mode, $\lambda$ is a Lagrange multiplier, which is related to a quantization parameter used in the current encoding, and $D$ represents a distortion value between the prediction block and the original block in the current prediction mode.

In an example, the calculation of the distortion value D is shown in Formula (11):

$$D = min(SAD \times 2, SATD) \qquad (11)$$

*SAD* (The sum of absolute differences) and *SATD* (The sum of transform difference) represent an algorithm of a sum of absolute errors and an algorithm of a sum of Hadamard transform errors between the prediction block and the original block, respectively.

After determining the cost of each candidate prediction mode, the encoder side selects several candidate prediction modes for the fine selection, from the plurality of candidate prediction modes.

The full residual transform, quantization, inverse quantization, inverse transform, and reconstruction will further performed on the above-mentioned prediction modes on which the coarse selection has been performed, and the rate distortion cost comparison for each mode (prediction mode + transform mode + quantization mode) combination is performed, to determine a final prediction mode, a transform mode, and a quantized residual value. The rate distortion cost calculation is still $D$ + AR, but here, $D$ represents an SSE (the sum of squared error) between the reconstructed block and the original block, and $R$ denotes a total bit overhead for encoding the mode identification, coefficient(s) of the current block, etc.

The encoder side determines a candidate prediction mode with the lowest cost in the fine selection process as the prediction mode of the current block.

If the encoder side determines that the prediction mode of the current block is the extrapolation filter prediction mode, it performs the step of the above S201.

The following introduces the process of the encoder side to predict the current block by using the extrapolation filter prediction mode.

When the encoder side determines that the current block is predicted by using the extrapolation filter prediction mode, it first determines a reference region and an extrapolation filter of the current block.

The following introduces the specific process of the encoder side to determine the reference region of the current block.

In the embodiments of the present disclosure, the reference region of the current block is part or all of a reconstructed region surrounding the current block.

Exemplarily, as illustrated in FIG. 12, the reconstructed region surrounding the current block may include: a top reconstructed region of the current block, a left reconstructed region of the current block, a top-right reconstructed region of the current block, a bottom-left reconstructed region of the current block, and a top-left reconstructed region of the current block.

The specific shape or size of the reference region of the current block is not limited in the embodiments of the present disclosure.

In an example, the reference region of the current block includes any one of: the top reconstructed region of the current block, the left reconstructed region of the current block, the top-right reconstructed region of the current block, the bottom-left reconstructed region of the current block, and the top-left reconstructed region of the current block. For example, the reference region of the current block is the top reconstructed region of the current block, or the reference region of the current block is the left reconstructed region of the current block.

In an example, the reference region of the current block includes any two of: the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block and the left reconstructed region of the current block. For another example, the reference region of the current block includes the top reconstructed region of the current block and the bottom-left reconstructed region of the current block.

In an example, the reference region of the current block includes any three of: the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, and the top-left reconstructed region of the current block. For another example, the reference block of the current block includes the left reconstructed region of the current block, the top-left reconstructed region of the current block, and the bottom-left reconstructed region of the current block.

In an example, the reference region of the current block includes any four of: the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, the top-left reconstructed region of the current block, and the left reconstructed region of the current block. For another example, the reference block of the current block includes the left reconstructed region of the current block, the top-left reconstructed region of the current block, the bottom-left reconstructed region of the current block, and the top reconstructed region of the current block.

In an example, the reference region of the current block includes five of: the top reconstructed region of the current block, the left reconstructed region of the current block, the top-right reconstructed region of the current block, the bottom-left reconstructed region of the current block, and the top-left reconstructed region of the current block.

In the embodiments of the present disclosure, the specific scheme for the encoder side to determine the reference region of the current block includes but is not limited to the following schemes.

Scheme 1: The reference region of the current block is a default region, and for example, the encoder side and decoder side default to the reference region of the current block including at least one reconstructed region of: the top reconstructed region of the current block, the left reconstructed region of the current block, the top-right reconstructed region of the current block, the bottom-left reconstructed region of the current block, and the top-left reconstructed region of the current block.

Scheme 2: first costs of predicting the current block are determined based on P reference regions, respectively; and a reference region with the smallest first cost among the P reference regions is determined as the reference region of the current block.

In this implementation, the encoder side predicts the current block based on these P reference regions, respectively, determines a first cost corresponding to each reference region, and then determines a reference region with the lowest first cost among these P reference regions as the reference region of the current block.

In some embodiments, the encoder side signals fourth information into the bitstream, where the fourth information indicates a type of the reference region of the current block. That is, in this Scheme 2, the encoder side also indicates the type of the determined reference region of the current block to the decoder side via the fourth information.

It should be noted that types or shapes of these P preset reference regions are different.

The embodiments of the present disclosure do not impose specific limitations on the specific number or shapes of the P reference regions.

In an example, the P reference regions include at least one of a first reference region, a second reference region, or a third reference region.

As illustrated in FIG. 13A, the first reference region includes top, top-right, left, top-left, and top-left reconstructed regions of the current block. As illustrated in FIG. 13B, the second reference region includes top, top-right, and top-left reconstructed regions of the current block. As illustrated in FIG. 13C, the third reference region includes left, top-left, and top-left reconstructed regions of the current block.

The specific indication form of the fourth information is not limited in the embodiments of the present disclosure, as long as it may be any indication information that can indicate the type of the reference region of the current block.

In an example, eip_ref_type is used to represent the fourth information; for example, values of eip_ref type may be used to indicate different types of reference region.

Exemplarily, a corresponding relationship between the three reference regions illustrated in FIG. 13A to FIG. 13B and the values of eip_ref_type is shown in Table 4.

Based on the above Table 4, the encoder side determines the value of the fourth information eip_ref_type based on the type of the reference region of the current block. For example, if it is determined that the reference region of the current block is the first reference region, it is determined that eip_reC_type = 0. If it is determined that the reference region of the current block is the second reference region, it is determined that eip_ref_type = 1. If it is determined that the reference region of the current block is the third reference region, it is obtained that eip_ref_type = 2.

It should be noted that the above is described by taking an example in which the P reference regions are the three reference regions illustrated in FIG. 13A to FIG. 13C. The P reference regions in the embodiments of the present disclosure may also include other reference regions in addition to the above-mentioned three reference regions, which are not limited in the embodiments of the present disclosure. The corresponding relationship between the reference regions and the values of eip_ref_type shown in the above Table 4 may be adaptively adjusted according to the number of reference regions.

In some embodiments, the encoder side may use a truncated binary code as an encoding method, to signal the fourth information into the bitstream.

Exemplarily, the corresponding relationship between truncated binary codes, values of eip_ref_ type, and types of the reference region is shown in Table 5.

In the embodiments of the present disclosure, the encoder side may use an equal probability encoding method or use a context model encoding method, to encode codewords of the truncated binary code.

In addition to using the methods of Scheme 1 or Scheme 2 mentioned above to determine the reference region of the current block, the encoder side may also use the following Scheme 3 to determine the reference region of the current block.

Scheme 3: the reference region of the current block is determined among the P preset reference regions based on the shape of the current block.

In this Scheme 3, for different shapes of the current block, different reference regions are used for prediction, to improve prediction accuracy.

For example, if the shape of the current block is square, a first type of reference region is used.

For another example, if the shape of the current block is a rectangle with a width greater than a height, a second type of reference region is used.

For another example, if the shape of the current block is a rectangle with a width less than a height, a third type of reference region is used.

That is, in the embodiments of the present disclosure, a corresponding relationship between the P reference regions and the shapes of the current block is preset. Thus, the encoder side may determine, according to the shape of the current block, the reference region of the current block from the P reference regions by the corresponding relationship between the P reference regions and the shapes of the current block.

The following introduces the process of the encoder side to determine the extrapolation filter of the current block.

The specific shape of the extrapolation filter is not limited in the embodiments of the present disclosure.

Exemplarily, the extrapolation filter provided in the embodiments of the present disclosure includes but is not limited to: a square extrapolation filter, and an extrapolation filter with a height less than a width.

For example, the square extrapolation filter includes but is not limited to a $4 \times 4$ extrapolation filter illustrated in FIG. 14A.

For another example, the extrapolation filter with the height greater than the width includes but is not limited to a $5 \times 3$ extrapolation filter illustrated in FIG. 14B, a $6 \times 2$ extrapolation filter illustrated in FIG. 14D, and a $7 \times 1$ extrapolation filter illustrated in FIG. 14G.

For another example, the extrapolation filter with the height less than the width includes but is not limited to a $3 \times 5$ extrapolation filter illustrated in FIG. 14C, a $2 \times 6$ extrapolation filter illustrated in FIG. 14E, and a $1 \times 7$ extrapolation filter illustrated in FIG. 14F.

It should be noted that in the above filters, the dark gray position indicates a current position to be predicted, and the light gray positions represent input positions for the extrapolation filter, i.e., positions $\{p_0, p_1, ..., p_{N-1}\}$.

In the embodiments of the present disclosure, the specific scheme for the encoder side to determine the extrapolation filter of the current block includes but is not limited to the following several schemes.

Method 1: The extrapolation filter of the current block is a default extrapolation filter; for example, the encoder side and decoder side default to the extrapolation filter of the current block is any extrapolation filter illustrated in FIG. 14A to FIG. 14G. For example, the default extrapolation filter is the $4 \times 4$ extrapolation filter.

Method 2: The encoder side determines the extrapolation filter of the current block from Q preset extrapolation filters.

For example, the encoder side randomly selects an extrapolation filter from the Q extrapolation filters as the extrapolation filter of the current block.

For another example, the encoder side determines second costs of predicting the current block by using the Q extrapolation filters respectively; determines an extrapolation filter with the smallest second cost among the Q extrapolation filters as the extrapolation filter of the current block.

In some embodiments, the encoder side signals fifth information into the bitstream, where the fifth information is used to indicate the shape of the extrapolation filter of the current block.

In this implementation, the encoder side determines the extrapolation filter of the current block from the Q preset extrapolation filters; for example, the encoder side determines second costs corresponding to the Q extrapolation filters respectively, and determines an extrapolation filter with the smallest second cost as the extrapolation filter of the current block. Then, the shape of the determined extrapolation filter with the smallest second cost is indicated to the encoder side via the fifth information. Thus, the decoder side decodes the bitstream to obtain the fifth information, and then determines the extrapolation filter of the current block from the Q preset extrapolation filters based on the shape of the extrapolation filter indicated by the fifth information.

It should be noted that the shapes of the Q preset extrapolation filters are different.

The specific number and shapes of the Q extrapolation filters are not specifically limited in the embodiments of the present disclosure. For example, the Q extrapolation filters include at least one of a first extrapolation filter, a second extrapolation filter, or a third extrapolation filter, where the first extrapolation filter is a square extrapolation filter, the second extrapolation filter is a rectangular extrapolation filter with a width greater than a height, and the third extrapolation filter is a rectangular extrapolation filter with a height greater than a width.

In an example, the Q extrapolation filters include a plurality of extrapolation filters in FIG. 14A to FIG. 14H.

The specific indication form of the fifth information is not limited in the embodiments of the present disclosure, as long as it may be any indication information that can indicate the shape of the extrapolation filter of the current block.

In an example, eip_filter_type is used to represent the fifth information; for example, values of eip_filter_type are used to indicate different shapes of extrapolation filter.

Exemplarily, if Q extrapolation filters are five extrapolation filters illustrated in FIG. 15, a corresponding relationship between the five extrapolation filters and the values of eip_filter_type is shown in Table 6.

Based on the above Table 5, the encoder side determines the value of the fifth information eip_filter_type based on the determined shape of the extrapolation filter of the current block. For example, if the shape of the extrapolation filter of the current block is determined to be 4x4, it is determined that eip_filter_type = 0. If the shape of the extrapolation filter of the current block is determined to be 3x5, it is determined that eip_filter_type = 1. If the shape of the extrapolation filter of the current block is determined to be 5x3, it is determined that eip_filter_type = 2. If the shape of the extrapolation filter of the current block is determined to be 2x6, it is determined that eip_filter type = 3. If the shape of the extrapolation filter of the current block is determined to be 6x2, it is determined that eip_filter_type = 4.

In some embodiments, the encoder side may use an encoding method of the truncated binary code to encode the fifth information into the bitstream.

Exemplarily, if the Q preset extrapolation filters include the 5 extrapolation filters illustrated in FIG. 15, a corresponding relationship between truncated binary codes, values of eip_filter_type, and the shapes of the extrapolation filter is shown in Table 7.

In this case, the five shapes of the extrapolation filter shown in the above Table 7 and the three types of the reconstructed region shown in the above Table 5 result in a total of 15 combinations of extrapolation filters and reconstructed regions.

In some embodiments, when the embodiments of the present disclosure include seven extrapolation filters illustrated in FIG. 16, a corresponding relationship between truncated binary codes, values of eip_filter_type, and shapes of the extrapolation filter is shown in Table 9.

In this case, the 7 shapes of the extrapolation filter shown in the above Table 9 and the 3 types of the reconstructed region shown in the above Table 5 result in a total of 21 combinations of extrapolation filters and reconstructed regions.

In some embodiments, when the embodiments of the present disclosure include three extrapolation filters illustrated in FIG. 17, a corresponding relationship between truncated binary codes, values of eip_filter_type, and shapes of the extrapolation filter is shown in Table 10.

In this case, the three shapes of the extrapolation filter shown in the above Table 10 and the three types of the reconstructed region shown in the above Table 5 result in a total of 9 combinations of extrapolation filters and reconstructed regions.

In some embodiments, when the embodiments of the present disclosure include three extrapolation filters illustrated in FIG. 18A, a corresponding relationship between truncated binary codes, values of eip_filter_type, and shapes of the extrapolation filter is shown in Table 11.

In this case, the three shapes of the extrapolation filter shown in the above Table 11 and the three types of the reconstructed region shown in the above Table 5 result in a total of 9 combinations of extrapolation filters and reconstructed regions.

In some embodiments, when the embodiments of the present disclosure include three extrapolation filters illustrated in FIG. 18B, a corresponding relationship between truncated binary codes, values of eip _filter_type, and shapes of the extrapolation filter is shown in Table 12.

In this case, the three shapes of the extrapolation filter shown in the above Table 12 and the three types of the reconstructed region shown in the above Table 5 result in a total of 9 combinations of extrapolation filters and reconstructed regions.

In some embodiments, when the embodiments of the present disclosure include three extrapolation filters illustrated in FIG. 19, a corresponding relationship between truncated binary codes, values of eip_filter_type, and shapes of the extrapolation filter is shown in Table 13.

In this case, the three shapes of the extrapolation filter shown in the above Table 13 and the three types of the reconstructed region shown in the above Table 5 result in a total of 9 combinations of extrapolation filters and reconstructed regions.

In addition to using the method of the above Scheme 1 or Scheme 2 to determine the extrapolation filter of the current block, the encoder side may also use the following Scheme 3 to determine the extrapolation filter of the current block.

Scheme 3: the extrapolation filter of the current block among the Q preset extrapolation filters is determined based on the shape of the current block.

In this Scheme 3, for different shapes of the current block, different extrapolation filters are used for prediction, to improve prediction accuracy.

For example, if the shape of the current block is square, a first shape of the extrapolation filter is used.

For another example, if the shape of the current block is a rectangle with a width greater than a height, a second shape of the extrapolation filter is used.

For another example, if the shape of the current block is a rectangle with a width less than a height, a third shape of extrapolation filter is used.

That is, in the embodiments of the present disclosure, a corresponding relationship between the Q extrapolation filters and the shapes of the current block is preset. Thus, the encoder side may determine, according to the shape of the current block, the extrapolation filter of the current block from the Q extrapolation filters by the corresponding relationship between the Q extrapolation filters and the shapes of the current block.

In the embodiments of the present disclosure, after determining the reference region and the extrapolation filter of the current block based on the above steps, the encoder side determines the prediction block of the current block based on the reference region and the extrapolation filter.

The following introduces determining the filter coefficient of the extrapolation filter based on the reference region.

In the embodiments of the present disclosure, determining the filter coefficient of the extrapolation filter includes at least the following several schemes.

Scheme 1: Use the determined extrapolation filter mentioned above to slide in the reference region of the current block, and construct a Wiener-Hopf equation. Then, solve the Wiener-Hopf equation to obtain the filter coefficient of the extrapolation filter.

In the process of using the extrapolation filter to slide in the reference region of the current block, N positions corresponding to each of positions of the reference region are determined according to the shape of the extrapolation filter; for example, for a position r in the reference region, N positions corresponding to the position r are determined in the reference region based on the shape of the extrapolation filter, and sample reconstructed values of these N positions are the input of the extrapolation filter. Phase position differences between these N positions and the position r are $\{p_0, p_1, ..., p_{N-1}\}$, where $p_N$ is a two-dimensional representation. $\{c_0, c_1, ..., c_{N-1}\}$ are extrapolation filter coefficients at the positions $\{p_0, p_1, ..., p_{N-1}\}$.

In an example, the extrapolation filter is slid in the reference region of the current block to construct the Wiener-Hoff equation, as shown in Formula (3).

Since the reference region of the current block is a reconstructed region, all other parameters in the above Formula (3) except for the extrapolation filter coefficient are known, and thus, the filter coefficient of the extrapolation filter of the current block may be determined by solving the above Formula (3).

In an example, the encoder side may solve the Wiener-Hopf equation shown in the above Formula (3) by means of a Cholesky decomposition autocorrelation coefficient matrix, to obtain the filter coefficient of the filter.

The embodiments of the present disclosure do not limit a sliding step size of the extrapolation filter within the reference region.

In an example, as illustrated in FIG. 20A, a horizontal sliding step size and a vertical sliding step size of the extrapolation filter within the reference region are equal, which are both 1 sample.

In an example, a horizontal sliding step size and a vertical sliding step size of the extrapolation filter within the reference region are not equal. For example, the horizontal sliding step size is 2 samples, and the vertical sliding step size is 1 sample. For another example, the horizontal sliding step size is 1 sample, and the vertical sliding step size is 2 samples.

In an example, at least one of the horizontal sliding step size or the vertical sliding step size of the extrapolation filter within the reference region is greater than a preset step size. For example, the horizontal sliding step size is greater than the preset step size. For another example, the vertical sliding step size is greater than the preset step size. For another example, both the horizontal sliding step size and the vertical sliding step size are greater than the preset step size. The specific value of the preset step size is not limited in the embodiments of the present disclosure. For example, they may be 1, 2, 3, or other values.

Scheme 2: The encoder side determines the filter coefficient through steps of the following steps S201-A1 to S201-A4.

In S201-AI: a first reconstructed region surrounding the current block is determined.

In S201-A2: a sample average reconstructed value is determined based on reconstructed values of the first reconstructed region;

In S201-A3: reconstructed values of samples of the reference region are de-averaged based on the sample average reconstructed value.

In S201-A4: de-averaged sample values of the samples in the reference region are used as an input of the extrapolation filter, and the extrapolation filter is slid within the reference region, to obtain the filter coefficient of the extrapolation filter.

In this Scheme 2, the reference region is de-averaged, and the filter coefficient of the extrapolation filter is determined based on the de-averaged reference region. Since the data volume is reduced after the reference region is de-averaged, the efficiency of determining the filter coefficient may be improved when determining the filter coefficient based on the de-averaged reference region.

Specifically, the encoder side first determines a first reconstructed region, and the first reconstructed region may be any part of reconstructed regions surrounding the current block.

In the embodiments of the present disclosure, the encoder side determines the first reconstructed region surrounding the current block in at least the following several schemes.

Scheme 1: The encoder side determines a reconstructed region surrounding the current block as the first reconstructed region by default.

For example, as illustrated in FIG. 20B, the encoder side determines a region composed of a top row of the current block, a left column of the current block, and a sample at a top-left corner of the current block as the first reconstructed region, by default.

Scheme 2:The first reconstructed region is determined based on the shape of the current block.

For example, if the shape of the current block is square, a top row and a left column of reconstructed sample regions of the current block are determined as the first reconstructed region.

For another example: if the shape of the current block is a rectangle with a width greater than a height, a top row of reconstructed sample regions of the current block is determined as the first reconstructed region.

For another example: if the shape of the current block is a rectangle with a height greater than a width, a left column of reconstructed sample regions of the current block is determined as the first reconstructed region.

It should be noted that the scheme for determining the first reconstructed region based on the shape of the current block includes but is not limited to the several examples mentioned above.

After the encoder side determines the first reconstructed region, it determines the sample average reconstructed value m based on reconstructed values of the first reconstructed region.

The specific scheme for determining the sample average reconstructed value m based on the reconstructed values of the first reconstructed region in the above S201 -A2 is not limited in the embodiments of the present disclosure.

Scheme 1: The above S201-A2 includes: determining an average value of the reconstructed values of the first reconstructed region as the sample average reconstructed value m.

In an example of Scheme 1, if the first reconstructed region is illustrated in FIG. 20B, the sample average reconstructed value m may be calculated by a method shown in Table 13.

In an example of Scheme 1, if the first reconstructed region is a top row and/or a left column of the current block, an average value of reconstructed values of the top row and/or the left column may be determined as the sample average reconstructed value m. In this case, the sample average reconstructed value m may be calculated by a method shown in Table 15.

As shown in Table 15 above, if the first reconstructed region is a top row and/or a left column of the current block, the shift calculation may be used instead of the division operation, to quickly calculate the sample average reconstructed value m.

Scheme 2: The above S201-A2 includes: determining the sample average reconstructed value based on the shape of the current block and reconstructed values of the first reconstructed region.

For example, if the current block is a square, the average value of the entire first reconstructed region determined above is determined as the sample average reconstructed value m.

In an example of Scheme 2, the first reconstructed region includes a top reconstructed region and a left reconstructed region of the current block, and in this case, determining the sample average reconstructed value based on the shape of the current block and the reconstructed values of the first reconstructed region, includes: determining a first region from the top reconstructed region and the left reconstructed region based on the shape of the current block; determining an average reconstructed value of the first region based on reconstructed values of the first region; and determining the sample average reconstructed value based on the average reconstructed value of the first region.

In this example, if the first reconstructed region includes the top reconstructed region and the left reconstructed region of the current block, to reduce computational complexity, the average value is determined by using the same scheme as in the DC prediction mode. Specifically, the first region is determined from the top reconstructed region and the left reconstructed region included in the first reconstructed region based on the shape of the current block.

For example, if the shape of the current block is of a width greater than a height, the top reconstructed region is determined as the first region.

For example, if the shape of the current block is of a height greater than a width, the left reconstructed region is determined as the first region.

For example, if the shape of the current block is of a height equal to a width, the top reconstructed region and the left reconstructed region are determined as the first region.

Then, an average reconstructed value of the first region is determined based on reconstructed values of the selected first region, and then, the sample average reconstructed value m is determined based on the average reconstructed value of the first region; for example, the average reconstructed value of the first region is determined as the sample average reconstructed value m.

That is, in this example, if the shape of the current block is of a width greater than a height, the average reconstructed value of the top reconstructed region of the current block is determined as the sample average reconstructed value m. If the shape of the current block is of a height greater than a width, the average reconstructed value of the left reconstructed region of the current block is determined as the sample average reconstructed value m. If the shape of the current block is of a height equal to a width, the average reconstructed value of the top reconstructed region and the left reconstructed region of the current block is determined as the sample average reconstructed value m.

After the encoder side determines the sample average reconstructed value, it de-averages reconstructed values of samples in the reference region based on the sample average reconstructed value.

For example, for each sample in the reference region, a reconstructed value of this sample is divided by the above-mentioned sample average reconstructed value, and then by rounding the divided result, a de-averaged sample value of the sample in the reference region is obtained.

For another example, the encoder side subtracts the sample average reconstructed value from reconstructed values of samples in the reference region, to obtain de-averaged sample values of the samples in the reference region. For example, for each sample in the reference region, the above-mentioned sample average reconstructed value is subtracted from a reconstructed value of the sample, to obtain a de-averaged sample value of the sample in the reference region.

The specific scheme for the encoder side to de-average the reconstructed values of the samples in the reference region based on the sample average reconstructed value is not limited in the embodiments of present disclosure.

The encoder side de-averages the reconstructed values of the samples in the reference region to obtain the de-average sample values of the samples in the reference region based on the above methods, and then performs the step of S201-A4 described above, including: using the de-average sample values of the samples in the reference region as the input of the extrapolation filter and sliding the extrapolation filter within the reference region, to obtain the filter coefficient of the extrapolation filter.

Exemplarily, if the extrapolation filter of the current block is of five extrapolation filters with different shapes and the reference region of the current block is of three reference regions with different types, the process of the extrapolation filter of the current block being slid on the de-averaged reference region of the current block to obtain the filter coefficient of the extrapolation filter is illustrated in FIG. 21. The extrapolation filter may be slid in a horizontal direction row by row or in a vertical direction column by column, on the de-averaged reference region.

As illustrated in FIG. 21, in the process of using the extrapolation filter to slide in the reference region of the current block, N positions corresponding to each of positions of the reference region are first determined according to the shape of the extrapolation filter. For example, for a position r in the reference region, N positions corresponding to the position r are determined in the reference region based on the shape of the extrapolation filter, and sample reconstructed values of these N positions are the input of the extrapolation filter. The phase position differences between these N positions and the position r are $\{p_0, p_1, ..., p_{N-1}\}$, and $p_N$ is a two-dimensional representation. $\{c_0, c_1, ..., c_{N-1}\}$ are extrapolation filter coefficients at positions $\{p_0, p_1, ..., p_{N-1}\}$.

In an example, the extrapolation filter is slid in the reference region of the current block, and the constructed Wiener-Hoffman equation is shown as Formula (4).

Since the reference region of the current block is the reconstructed region, all other parameters in the above Formula (4) except for the extrapolation filter coefficient are known, and thus, the filter coefficient of the extrapolation filter of the current block may be determined by solving the above Formula (4).

In an example, the encoder side may solve the Wiener-Hopf equation shown in the above Formula (4) by means of a Cholesky decomposition autocorrelation coefficient matrix, to obtain the filter coefficient of the filter.

After determining the filter coefficient of the extrapolation filter based on the above steps, the encoder side performs the following step of S202.

In S202: parallel prediction is performed on at least two samples in the current block by using the extrapolation filter based on the filter coefficient, to determine a prediction block of the current block.

The encoder side, after determining the filter coefficient of the extrapolation filter based on the above steps, performs extrapolation filter prediction on the current block by using the extrapolation filter based on the filter coefficient, to obtain the prediction block of the current block.

In the related art, when performing extrapolation filter prediction on the current block by using the extrapolation filter, after the prediction of a sample in the current block ends, a next sample is predicted. For example, as illustrated in FIG. 22A, the extrapolation filter performs extrapolation filter prediction on each sample in the current block one by one along a horizontal direction. When predicting, after the prediction of a previous sample in the horizontal direction ends, a prediction value of the previous sample is used as an input sample value of the extrapolation filter for a next sample, and used to predict the next sample. As illustrated in FIG. 22, assuming that the shape of the extrapolation filter of the current block is $4 \times 4$, the encoder side uses an extrapolation filter with the known filter coefficient to perform extrapolation prediction on each position in the current block one by one. Specifically, for the r-th point in the current block, sample values of N positions corresponding to the r-th point are first determined according to the shape of the extrapolation filter of the current block; for example, as illustrated in FIG. 22, in the $4 \times 4$ extrapolation filter, the dark position is a position of the r-th point to be processed, and 15 light positions are the N positions corresponding to the r-th point. In FIG. 22, the to-be-predicted block is the current block. Then, sample values of the N positions corresponding to the r-th point are determined. For example, for any position of the N positions, if the position is in the reconstructed region surrounding the current block, a reconstructed value of this position is determined as a sample value of this position. If this position is within the current block, a prediction value of this position is determined as a sample value of this position.

For example, as illustrated in FIG. 22B, the extrapolation filter performs extrapolation filter prediction on each sample in the current block one by one along a vertical direction. When predicting, after the prediction of a previous sample in the vertical direction ends, a prediction value of the previous sample is used as an input sample value of the extrapolation filter for a next sample, and used to predict the next sample. That is, in the related art, when the extrapolation filter is used to perform extrapolation filter prediction on the current block, the prediction on only one point can be completed at a time, resulting in long prediction time-consuming, low prediction efficiency, thereby affecting the encoding efficiency.

To solve the above technical problems, the embodiments of the present disclosure use an extrapolation filter to perform extrapolation filter prediction on the current block, and perform parallel prediction on at least two points in the current block, that is, the encoder side may use the extrapolation filter to perform extrapolation filter prediction on at least two samples in the current block at the same time.

In the embodiments of the present disclosure, using, by the encoder side, the extrapolation filter to perform extrapolation filter prediction on at least two samples in the current block at the same time, includes at least two implementations.

A first implementation is that: for at least two samples in the current block, these at least two samples are neighboring samples. The encoder side first determines input information for the extrapolation filter corresponding to the at least two samples, inputs the input information into the extrapolation filter for extrapolation filter prediction, to obtain a prediction value, and based on the prediction value, determines prediction values of the at least two samples. For example, the prediction value is processed based on related feature information of the at least two samples, to obtain prediction values corresponding to the at least two samples respectively. For another example, the prediction value is determined as prediction values corresponding to the at least two samples respectively.

In this first implementation, the encoder side does not limit the specific scheme for determining the input information for the extrapolation filter corresponding to the at least two samples.

For example, based on the shape of the extrapolation filter, input values for the extrapolation filter that are the same for the at least two samples are determined, and the same input values for the extrapolation filter are used as the input information for the extrapolation filter. For example, the at least two samples include sample 1 and sample 2, and based on the shape of the extrapolation filter, N input values corresponding to sample 1 and N input values corresponding to sample 2 are determined. Same input values among the N input values corresponding to sample 1 and the N input values corresponding to sample 2 are determined, and the same input values are used as the input values for the extrapolation filter. It should be noted that if the N input values corresponding to sample 2 or sample 1 include a value that has not been encoded, the value that has not been encoded is discarded.

For another example, the input values corresponding to a sample with the most encoded input values among the at least two samples are determined as the input information for the extrapolation filter based on the shape of the extrapolation filter. For example, the at least two samples include sample 1 and sample 2, and N input values corresponding to sample 1 and N input values corresponding to sample 2 are determined based on the shape of the extrapolation filter. The N input values corresponding to sample 1 have all been encoded, and the N input values corresponding to sample 2 include an input value that has not been encoded, and thus, the N input values corresponding to sample 1 are used as the input information of the extrapolation filter.

In the above first implementation, the specific process is introduced that the prediction values of the at least two samples in the current block are predicted by extrapolation filter prediction after the encoder side inputs the same input values to the extrapolation filter at a time.

The second implementation is to: perform, at the same time, extrapolation filtering on at least two samples in the current block respectively, by using the extrapolation filter. For example, at time t, the encoder side uses the extrapolation filter to perform extrapolation filter prediction on sample 1 in the current block, to obtain a prediction value of sample 1, and at the same time, uses the extrapolation filter to perform extrapolation filter prediction on sample 2 in the current block, to obtain a prediction value of sample 2.

The prediction direction in which the encoder side uses the extrapolation filter to perform parallel prediction on at least two samples in the current block is not limited in the embodiments of the present disclosure.

In some embodiments, the encoder side may perform parallel prediction on at least two samples in the current block by using the extrapolation filter, along a horizontal direction. Exemplarily, when performing parallel prediction on at least two samples, if one or more input values for the extrapolation filter corresponding to the sample have not been encoded, the input values that have not been encoded are discarded, and the encoded input values are used as input values for the extrapolation filter.

In some embodiments, the encoder side may perform parallel prediction on at least two samples in the current block by using the extrapolation filter, along a vertical direction. Exemplarily, when performing parallel prediction on at least two samples, if one or more input values for the extrapolation filter corresponding to the sample have not been encoded, the input values that have not been encoded are discarded, and the encoded input values are used as input values for the extrapolation filter.

In some embodiments, the encoder side may perform parallel prediction on at least two samples in the current block by using the extrapolation filter, along a diagonal line direction. Based on this, in an example, the above-mentioned S202 includes the step of the following S202-A.

In S202-A: parallel extrapolation filter prediction is performed on samples on a same diagonal line of the current block by using the extrapolation filter along a diagonal line direction based on the filter coefficient, to obtain the prediction block of the current block.

Exemplarily, as illustrated in FIG. 23, when the encoder side uses the extrapolation filter to predict the samples in the current block, a to-be-predicted sample is located at a corner (e.g., a bottom-right corner or a top-left corner) of the selected region of the extrapolation filter. Thus, for any sample on a same angle line, based on the shape of the extrapolation filter, N positions corresponding to the selected sample do not include the other sample positions on this diagonal line. That is, N positions corresponding to each of samples on the same diagonal line do not include samples on the diagonal line. For example, taking two neighboring sample a and sample b on the same diagonal line of the current block as an example, as illustrated in FIG. 23, based on the shape of the extrapolation filter, N positions corresponding to sample a and N positions corresponding to sample b are determined respectively, where the N positions corresponding to sample a and the N positions corresponding to sample b that are determined, both include the samples on the diagonal line. Based on this, when the encoder side performs extrapolation filter prediction on the current block by using the extrapolation filter, it may perform parallel extrapolation filter prediction on samples on the same diagonal line in the current block, along the diagonal line direction. For example, parallel extrapolation filter prediction is performed on sample a and sample b, etc., located on the same diagonal line.

In the embodiments of the present disclosure, the left, bottom-left, top, left, and top-right regions of the current block have been encoded, and thus a starting point for predicting the current block along the diagonal direction may be determined based on the regions that have been encoded and the shape of the extrapolation filter.

In an example, as illustrated in FIG. 23, the encoder side, starting from a top-left corner of the current block, performs extrapolation filter prediction on the current block along the diagonal direction. The above S202-A includes the step of the following S202-A1.

S202-A1: The encoder side performs, based on the filter coefficient, parallel extrapolation filter prediction on samples on the same diagonal line of the current block by using the extrapolation filter along the diagonal line direction starting from a top-left corner of the current block, to obtain the prediction block of the current block. In this example, the to-be-predicted sample is located at the bottom-right corner of the selected region of the extrapolation filter.

The specific orientation of the diagonal line direction is not limited in the embodiments of the present disclosure.

In some embodiments, as illustrated in FIG. 23, when the encoder side, starting from the top-left corner of the current block, performs parallel prediction on samples on the same diagonal line in the current block, the diagonal line direction includes at least one of: a direction from top-right to bottom-left, or a direction from bottom-left to top-right.

In an example, as illustrated in FIG. 24A, the diagonal line direction includes the direction from top-right to bottom-left, and in this case, as illustrated by the arrows in FIG. 24A, directions of diagonal lines of the current block are all the direction from top-right to bottom-left.

In an example, as illustrated in FIG. 24B, the diagonal line direction includes the direction from bottom-left to top-right, and in this case, as illustrated by the arrows in FIG. 24B, directions of diagonal lines of the current block are all the direction from bottom-left to top-right.

In an example, as illustrated in FIG. 24C, the diagonal line direction includes the direction from top-right to bottom-left and the direction from bottom-left to top-right, and in this case, as illustrated by the arrows in FIG. 24C, directions of diagonal lines of the current block include two directions: the direction from top-right to bottom-left and the direction from bottom-left to top-right.

It should be noted that, in the embodiments of the present disclosure, the encoder side performs parallel prediction on samples on the same diagonal line in the current block, so the specific orientation of the diagonal line direction does not constitute a limitation on the technical solutions of the embodiments of the present disclosure.

In the embodiments of the present disclosure, at each prediction, the encoder side performs prediction per samples on a diagonal line in the current block, and the process of the encoder side performing parallel prediction on samples on each diagonal line in the current block is the same, and for the sake of description, a k-th diagonal line in the current block is used as an example for illustration. In this case, the above S202-A1 includes steps of the following S202-A11 and S202-A12.

In S202-A11: for M samples on a k-th diagonal line of the current block, prediction values of the M samples are determined in parallel by using the extrapolation filter based on the filter coefficient, k and M being both positive integers.

In S202-A12: the prediction value of the current block is obtained based on prediction values of samples on each diagonal line of the current block.

The k-th diagonal line may be understood as any diagonal line in the current block illustrated in FIG. 23, and the k-th diagonal includes M samples. The encoder side determines the prediction values of these M samples in parallel, by using the extrapolation filter based on the filter coefficient. That is, the encoder side may determine the prediction values of the M samples on the k-th diagonal line at the same time, which greatly increases the prediction speed.

For example, as illustrated in FIG. 23, assuming that the k-th diagonal line in the current block includes 3 samples, the encoder side determines prediction values of these 3 samples in parallel. For example, these 3 samples are denoted as sample 1, sample 2, and sample 3, respectively, and the encoder side performs, at the same time, extrapolation filter prediction on sample 1 by using the extrapolation filter based on the filter coefficient, to obtain a prediction value of sample 1, and performs, at the same time, extrapolation filter prediction on sample 2 by using the extrapolation filter based on the filter coefficient, to obtain a prediction value of sample 2, and performs, at the same time, extrapolation filter prediction on sample 3 by using the extrapolation filter based on the filter coefficient, to obtain a prediction value of sample 3. Thus, in a single extrapolation filter prediction process, the encoder side determines, in parallel, the prediction values of the three samples on the k-th diagonal line in the current block, which greatly improves the speed of extrapolation filter prediction. The encoder side may determine prediction values of samples on the other diagonal lines in the current block by referring to the method for determining the prediction values of the samples on the k-th diagonal line, to obtain the prediction block of the current block, thereby improving the prediction speed of the current block, and enhancing the encoding efficiency.

The specific scheme for the encoder side to determine the prediction values of M samples in parallel by using the extrapolation filter based on the filter coefficient is not limited in the embodiments of the present disclosure.

In some embodiments, since the M samples are points on the k-th diagonal line of the current block, these M samples may be understood as neighboring samples with similar features, and thus, to reduce the computational complexity, input values for the extrapolation filter corresponding to one or several samples of the M samples are determined based on the shape of the extrapolation filter. Then, input values for the extrapolation filter corresponding to other samples in the M samples other than the one or several samples are determined based on the input values for the extrapolation filter corresponding to the one or several samples, for example, by calculating an average value or calculating a weighted value or calculating in other ways. Finally, the prediction values of the M samples are determined in parallel based on the filter coefficient and the input values for the extrapolation filter corresponding to each sample of the M samples.

In some embodiments, determining the prediction values of the M samples in parallel by using the extrapolation filter based on the filter coefficient in the above S202-A11 includes the following steps.

In S202-A11-a1: sample values of N positions corresponding to each of the M samples are determined in parallel based on a shape of the extrapolation filter.

In S202-A11-a2: the prediction values of the M samples are determined in parallel based on the filter coefficient and the sample values of the N positions corresponding to each of the M samples.

In this embodiment, when the encoder side determines the prediction values of the M samples on the k-th diagonal line of the current block in parallel, it determines sample values of N positions corresponding to each of the M samples in parallel based on the shape of the extrapolation filter, where the sample values of the N positions corresponding to each sample may be understood as input values for the extrapolation filter corresponding to this sample. Then, the encoder side determines the prediction values of the M samples in parallel based on the filter coefficient and the sample values of the N positions corresponding to each of the M samples.

For example, as illustrated in FIG. 24B, It is assumed that the k-th diagonal line of the current block includes 3 samples, and the 3 samples are denoted as sample 1, sample 2, and sample 3, respectively. It is assumed that the extrapolation filter of the current block is a $4 \times 4$ extrapolation filter. When the encoder side determines the prediction values of these 3 samples in parallel, the encoder side determines sample values of 15 positions corresponding to sample 1 based on the shape of the extrapolation filter, and uses these sample values of 15 positions as the input of the extrapolation filter, and based on the above determined filter coefficient, determines a prediction value of sample 1. At the same time, the encoder side determines sample values of 15 positions corresponding to sample 2 based on the shape of the extrapolation filter, and uses these sample values of 15 positions as the input of the extrapolation filter, and based on the above determined filter coefficient, determines a prediction value of sample 2. At the same time, the encoder side determines sample values of 15 positions corresponding to sample 3 based on the shape of the extrapolation filter, and uses these sample values of 15 positions as the input of the extrapolation filter, and based on the above determined filter coefficient, determines a prediction value of sample 3. That is, in this embodiment, the encoder side determines the prediction values of 3 samples in the current block in parallel at the same time, which greatly improves the prediction speed and then enhances the encoding efficiency.

The following introduces the specific process of determining the prediction values of the M samples in parallel based on the filter coefficient and the sample values of the N positions corresponding to each of the M samples in the above S202-A11-a2.

In some embodiments, for each sample of the M samples, the encoder side directly multiplies the sample values of the N positions corresponding to the sample by the filter coefficient to obtain a prediction value of the sample.

Exemplarily, the encoder side obtains the prediction value of each sample of the M samples based on the above Formula (5).

The encoder side may determine the prediction value of each of samples on the same diagonal line in the current block in parallel, based on this Formula (5).

In some embodiments, if the encoder side determines the filter coefficient of the extrapolation filter based on the above Formula (4), the filter coefficient is determined by using the de-averaged reference region in the above Formula (4), and thus when determining the prediction value of the current block based on the filter coefficient, the influence of the sample average reconstructed value m needs to be considered.

In a possible implementation of this embodiment, the extrapolation filter coefficient determined by using the above Formula (4) are substituted into the above Formula (5), to obtain the prediction value of each point in the current block, and then, the prediction value of each point are added to the sample average reconstructed value m, to obtain a final prediction value of each point in the current block, thereby obtaining the prediction block of the current block.

In another possible implementation of this embodiment, the above-mentioned S202-A11-a2 includes the following steps.

In S202-A11-a21: the sample values of the N positions corresponding to each of the M samples are de-averaged in parallel based on the sample average reconstructed value, to obtain de-averaged sample values of the N positions corresponding to each of the M samples.

In S202-A11-a22: the prediction values of the M samples are determined in parallel based on the filter coefficient and the de-averaged sample values of the N positions corresponding to each of the M samples.

Since the above-mentioned filter coefficient is determined based on the de-averaged reference region, the encoder side de-averages the sample values of the N positions corresponding to each of the M samples on the k-th diagonal line of the current block based on the sample average reconstructed value, to obtain the de-averaged sample values of the N positions corresponding to each of the M samples. For example, for any sample of the M samples, the sample average reconstructed value is subtracted from the sample values of the N positions of the sample, to obtain the de-averaged sample values of the N positions of the sample.

Then, the prediction values of the M samples are determined in parallel based on the filter coefficient and the de-averaged sample values of the N positions corresponding to each of the M samples.

The specific scheme for determining the prediction values of the M samples in parallel based on the filter coefficient and the de-averaged sample values of the N positions corresponding to each of the M samples, is not limited in the embodiments of the present disclosure.

In an implementation, for each sample of the M samples, the encoder side substitutes the de-averaged sample values of the N positions of the sample and the filter coefficient into the above Formula (5), and in this case, $t[ri + p_n]$ in Formula (5) is a de-averaged sample value of a sample at a position $ri + p_n$. After determining a prediction value of the r-th point based on the above Formula (5), the sample average reconstructed value m is added to this prediction value, to obtain a final prediction value of the r-th point.

In another implementation, the above S202-A11-a22 includes the following steps.

In S202-A11-a221: a second reconstructed region surrounding the current block is determined, and a maximum reconstructed value and a minimum reconstructed value of the second reconstructed region are determined.

In S202-A11-a222: first prediction values of the M samples are obtained in parallel based on the de-averaged sample values of the N positions corresponding to each of the M samples, the filter coefficient and the sample average reconstructed value.

In S202-A11-a223: the prediction values of the M samples are determined in parallel based on the first prediction values of the M samples, the maximum reconstructed value and the minimum reconstructed value.

In this implementation, the encoder side limits the prediction value of the current block to a range. Specifically, a second reconstructed region is determined, and a maximum reconstructed value *max* and a minimum reconstructed value *min* of samples in the second reconstructed region are determined.

The specific scheme for determining the second reconstructed region surrounding the current block is not limited in the embodiments of the present disclosure.

In an example, the second reconstructed region of the current block is consistent with the reference region of the current block.

In an example, the second reconstructed region of the current block is consistent with the first reconstructed region of the current block.

In an example, top, left, top-right, top-left, and bottom-left reconstructed regions of the current block are determined as the second reconstructed region. For example, the reconstructed regions of 13 top rows, 13 left columns, 13 top-right rows, 13 top-left rows and 13 top-left columns, and 13 bottom-left columns of the current block are determined as the second reconstructed region.

It should be noted that the above S202-A11-a221 and the above S202-A11-a222 have no sequential order in the process of the specific implementation; for example, the above S202-A11-a221 may be performed before the above S202-A11-a222, or performed after the above S202-A11-a222, or performed with the above S202-A11-a222 simultaneously.

The specific scheme for the encoder side to obtain first prediction values of the M samples in parallel based on the de-averaged sample values of the N positions corresponding to each of the M samples, the filter coefficient and the sample average reconstructed value, is not limited in the embodiments of the present disclosure.

For example, for any sample of the M samples, the de-averaged sample values of the N positions of the sample are multiplied by the filter coefficient, to obtain a second prediction value of the sample; and the second prediction value is added to the sample average reconstructed value to obtain a first prediction value of the sample.

For illustrative purposes, the encoder side obtains the first prediction value for the sample based on the above Formula (6).

For another example, after the encoder side obtains a prediction value of the sample based on the above Formula (6), it performs preset processing on the prediction value to obtain a first prediction value of the sample.

The encoder side, after determining first prediction values of M samples based on the above steps, determines prediction values of M samples in parallel based on the first prediction values, the maximum reconstructed value, and the minimum reconstructed value.

For example, for any sample of the M samples, if the first prediction value of the sample is greater than the minimum reconstructed value and less than the maximum reconstructed value, the first prediction value is determined as a prediction value of the sample.

For another example, if the first prediction value of the sample is less than or equal to the minimum reconstructed value, the minimum reconstructed value is determined as a prediction value of the sample.

For another example, if the first prediction value of the sample is greater than or equal to the maximum reconstructed value, the maximum reconstructed value is determined as a prediction value of the sample.

In an example, the encoder side determines the prediction value of the sample by the above Formula (7).

The above takes an example of determining the prediction values of the M samples on the k-th diagonal line in the current block, and the encoder side may, with reference to the above method, determine prediction values of samples on each diagonal line in the current block in parallel, to obtain the prediction value of each point of the current block, to form the prediction block of the current block.

Based on the above steps, the encoder side performs extrapolation filter prediction on the current block to obtain the prediction block of the current block, and then performs the following step.

In S203: a transform core corresponding to the current block is determined, and the current block is encoded based on the transform core corresponding to the current block and the prediction block, to obtain a bitstream.

As can be seen from the above, when encoding the current block, the encoder side determines the prediction block of the current block based on the above steps. Then, the prediction block of the current block is subtracted from the current block to obtain the residual block of the current block. Then, the residual block of the current block is transformed to obtain the transform coefficient, the transform coefficient is quantized to obtain the quantized coefficient, and the quantized coefficient is encoded to obtain the bitstream.

When transforming the residual value of the current block to obtain the transform coefficient, it is necessary to determine a transform core, and transform the residual value of the current block based on the transform core to obtain the transform coefficient.

The specific scheme for the encoder side to determine the transform core corresponding to the current block is not limited in the embodiments of the present disclosure.

In some embodiments, the encoder side and decoder side use a default transform core as the transform core of the current block.

In some embodiments, the encoder side determines the transform core of the current block by steps of the following S203-A and S203-A.

In S203-A: an intra prediction mode corresponding to the prediction block is determned.

In S203-B: the transform core corresponding to the current block is determined based on the intra prediction mode corresponding to the prediction block.

The following introduces the specific process of the encoder side to determine the intra prediction mode corresponding to the prediction block.

In an example, as illustrated in FIG. 7, traditional intra prediction modes included in the current VVC are:

a PLANAR mode: an intra prediction mode index is 0,
a DC mode: an intra prediction mode index is 1, and
angle modes: intra prediction mode indexes are 2 to 66.

In an example, as illustrated in FIG. 25, orientations of the arrows in the figure are directions of angle mode predictions in VVC, whose prediction mode indexes used when encoding are 2 to 66. When the current block is not a square block, some angle directions will be replaced with wide angles, such as -1 to -14 and 67 to 80 as illustrated in FIG. 25.

In some embodiments, the above-mentioned intra prediction mode corresponding to the prediction block is a default intra prediction mode. That is, if the current block is predicted by using the extrapolation filter prediction mode, when the prediction block is obtained, an intra prediction mode among the traditional intra prediction modes is determined as the intra prediction mode corresponding to the prediction block by default.

In some embodiments, the encoder side determines the intra prediction mode corresponding to the prediction block by steps of the following S203-A1 and S203-A2.

In S203-A1: angle values of R points in the prediction block are determined, R being a positive integer.

In S203-A2: the intra prediction mode corresponding to the prediction block is determined based on the angle values of the R points.

In the embodiments of the present disclosure, the intra prediction mode corresponding to the prediction block is determined by statistics of intra prediction modes corresponding to the angle values of the R points in the prediction block.

The specific positions or number of the R points used to determine the angle values in the prediction block is not limited in the embodiments of the present disclosure. For example, the R points may be a point in the prediction block or a plurality of points in the prediction block.

For example, if the above-mentioned R points are a point, the encoder side determines an angle value of a point in the prediction block (e.g., a center point of the prediction block), determines an intra prediction mode corresponding to the point based on the angle value of the point, and then, determine this intra prediction mode as the intra prediction mode corresponding to the prediction block.

For another example, if the above-mentioned R points are a plurality of points, the encoder side determines angle values of the plurality of points, determines an intra prediction mode corresponding to each point of the plurality of points based on the angle values of the plurality of points, and then, determines the same intra prediction mode with the highest number among the plurality of points as the intra prediction mode corresponding to the prediction block.

In some embodiments, when determining the angle values of the R points in the prediction block by means of a sliding window, the selection for the R points is related to a shape and a size of the sliding window. For example, each point of the R points is a center point in the sliding window when the sliding window is sliding in the prediction block.

In the embodiments of the present disclosure, the method for determining the angle value of each point of the R points is the same, and for the sake of description, the determination of an angle value of an i-th point among the R points is taken as an example for illustration.

The specific scheme for determining the angle value of the point is not limited in the embodiments of the present disclosure.

In some embodiments, the above-mentioned S203-A1 includes steps of S202-A11 and S203-A12.

In S203-A11: for the i-th point among the R points, a horizontal gradient and a vertical gradient of the i-th point are determined, where i is a positive integer less than or equal to R.

In S203-A12: an angle value of the i-th point is determined based on the horizontal gradient and the vertical gradient of the i-th point.

In this embodiment, for each point of the R points, e.g., the i-th point, the encoder side first determines the horizontal gradient and vertical gradient of the i-th point, and then determines the angle value of the i-th point based on the horizontal gradient and the vertical gradient.

The specific scheme for determining the horizontal gradient and the vertical gradient of the i-th point is not limited in the embodiments of the present disclosure.

In an example, the horizontal gradient value of the i-th point is determined according to prediction values of points surrounding the i-th point in the prediction block and changes of the prediction value of the i-th point in the horizontal direction, and the vertical gradient value of the i-th point is determined according to prediction values of points surrounding the i-th point in the prediction block and changes of the prediction value of the i-th point in the vertical direction.

In another example, the encoder side determines prediction values of points within the sliding window centered on the i-th point, in the prediction block; and obtains the horizontal gradient and the vertical gradient of the i-th point based on the prediction values of the points within the sliding window and a horizontal gradient operator and a vertical gradient operator.

In this example, a sliding window is first determined, e.g., as illustrated in FIG. 26, a $3 \times 3$ size of sliding window is determined, the sliding window is slid in the prediction block, and each time when sliding, a horizontal gradient and a vertical gradient of a center point of the sliding window are determined. Taking the center point of the current sliding window as the i-th point as an example, prediction values of respective points within the current sliding window are first acquired, for example, prediction values of $3 \times 3 = 9$ points may be obtained. Then, the horizontal gradient and vertical gradient of the i-th point are determined according to the prediction values of the 9 points, and a preset horizontal gradient operator and a preset vertical gradient operator.

For example, the product of the prediction values of the points within the sliding window and the horizontal gradient operator is determined as the horizontal gradient $G_x$ of the i-th point; and the product of the prediction values of the points within the sliding window and the vertical gradient operator is determined as the vertical gradient of the i-th point.

For another example, the prediction values of the points within the sliding window are multiplied by the horizontal gradient operator, then a preset operation is performed on the multiplied result with a preset value, to obtain the horizontal gradient $G_x$ of the i-th point; and the prediction values of the points within the sliding window are multiplied by the vertical gradient operator, then a preset operation is performed on the multiplied result with a preset value, to obtain the vertical gradient of the i-th point.

The specific values of the horizontal gradient operator and the vertical gradient operator are not limited in the embodiments of the present disclosure.

The encoder side, after determining the horizontal gradient and vertical gradient of the i-th point based on the above steps, may determine the angle value of the i-th point according to the horizontal gradient and the vertical gradient of the i-th point.

For example, an arctangent value of a ratio value of the vertical gradient to the horizontal gradient of the i-th point is determined as the angle value of the i-th point. For example, the angle value of the i-th point is determined according to Formula (8).

The encoder side, in addition to determining the angle value of the i-th point by using the above Formula (8), may also determine the angle value of the i-th point by using other schemes. For example, the encoder side may adjust the angle value determined by the above Formula (8) to obtain the angle value of the i-th point.

The encoder side uses the above method for each point of the R points, to determine the angle value of each point of the R points, and then performs the above S203-A2 to determine the intra prediction mode corresponding to the prediction block based on the angle values of the R points.

The specific scheme for determining the intra prediction mode corresponding to the prediction block based on the angle values of the R points is not limited in the embodiments of the present disclosure.

In some embodiments, the encoder side selects a same angle value 1 with the highest number, from the angle values of the R points, matches the angle value 1 with the prediction angles of the traditional intra prediction modes, to obtain an intra prediction mode corresponding to the angle value 1, and determines the intra prediction mode corresponding to the angle value 1 as the intra prediction mode corresponding to the prediction block.

In some embodiments, the above-mentioned S203-A2 includes steps of the following S203-A21 and S203-A22.

In S203-A21: intra prediction modes corresponding to the R points are determined based on the angle values of the R point.

In S203-A22: the intra prediction mode corresponding to the prediction block is determined based on the intra prediction modes corresponding to the R points.

In this implementation, the encoder side determines an intra prediction mode corresponding to each point of the R points based on the angle value of the each point. For example, for each point of the R points, the angle value of the point is matched with the prediction angles of the traditional intra prediction modes, to obtain an intra prediction mode corresponding to the angle value of the point. Thus, the intra prediction mode corresponding to each point of the R points may be obtained.

Then, the intra prediction mode corresponding to the prediction block is determined based on the intra prediction mode corresponding to each point of the R points.

In a possible implementation, an intra prediction mode with the highest repetition number, among the intra prediction modes corresponding to the R points respectively, is determined as the intra prediction mode corresponding to the prediction block.

In another possible implementation, the above S203-A22 includes the following steps.

In S203-A221: gradient magnitude values corresponding to the R points are determined based on horizontal gradients and vertical gradients of the R points; and

In S203-A222: the intra prediction mode corresponding to the prediction block is determines based on the gradient magnitude values and the intra prediction modes corresponding to the R points.

In this implementation, the encoder side determines the gradient magnitude value corresponding to each point of the R points based on the above-determined horizontal gradient and vertical gradient of each point of the R points.

In the embodiments of the present disclosure, the specific scheme for the encoder side to determine the gradient magnitude value corresponding to each point of the R points is the same. For the sake of description, the determination of the gradient magnitude value corresponding to the i-th point among the R points is taken as an example.

The specific scheme for the encoder side to determine the gradient magnitude value corresponding to the i-th point based on the horizontal gradient and the vertical gradient of the i-th point, is not limited in the embodiments of the present disclosure.

For example, the encoder side multiplies the horizontal gradient of the i-th point by the vertical gradient of the i-th point, to obtain the gradient magnitude value corresponding to the i-th point.

For another example, the encoder side adds an absolute value of the horizontal gradient of the i-th point and an absolute value of the vertical gradient of the i-th point, to obtain the gradient magnitude value corresponding to the i-th point.

Exemplarily, the encoder side determines the gradient magnitude value corresponding to the i-th point based on the above Formula (9).

The encoder side may determine the gradient magnitude value corresponding to each point of the R points based on the above steps. Then, the encoder side performs the above S203-A222, to determine the intra prediction mode corresponding to the prediction block based on the gradient magnitude values and the intra prediction modes corresponding to the R points.

In an example, an intra prediction mode corresponding to a point with the largest gradient magnitude value among the R points is determined as the intra prediction mode corresponding to the prediction block.

In another example, for any point of the R points, the gradient magnitude value corresponding to the point is accumulated on the intra prediction mode corresponding to the point, to obtain the accumulated gradient magnitude values of the intra prediction modes corresponding to the R points; and an intra prediction mode with the largest accumulated gradient magnitude value among the intra prediction modes corresponding to the R points is determined as the intra prediction mode corresponding to the prediction block.

Exemplarily, as illustrated in FIG. 27, the gradient magnitude value corresponding to each point of the R points is accumulated on the corresponding intra prediction mode; for example, if the intra prediction modes corresponding to a point 1 and a point 2 among the R points are both an intra prediction mode 1, the gradient magnitude values corresponding to the point 1 and the point 2 are accumulated to the gradient magnitude value corresponding to the intra prediction mode 1. Similarly, a histogram of the gradient magnitude values illustrated in FIG. 27 may be obtained. Thus, an intra prediction mode with the largest accumulated gradient magnitude value in the histogram of the gradient magnitude values may be determined as the intra prediction mode corresponding to the prediction block. For example, in FIG. 27, the intra prediction mode corresponding to the dark accumulated gradient magnitude value is determined as the intra prediction mode corresponding to the prediction block.

In some embodiments, if the gradient magnitude values of the R points are all 0, a first intra prediction mode is determined as the intra prediction mode corresponding to the prediction block. That is, if the gradient magnitude values corresponding to all points among the R points are 0, it indicates that the horizontal gradient and the vertical gradient of each point of the R points are both 0, and in this case, the preset first intra prediction mode may be determined as the intra prediction mode corresponding to the prediction block.

The type of the first intra prediction mode mentioned above is not limited in the embodiments of the present disclosure.

Exemplarily, the first intra prediction mode mentioned above is the PLANAR mode.

The encoder side, after determining the intra prediction mode corresponding to the prediction block based on the above steps, determines the transform core corresponding to the current block based on the intra prediction mode corresponding to the prediction block.

The specific scheme for the encoder side to determine the transform core corresponding to the current block based on the intra prediction mode corresponding to the prediction block is not limited in the embodiments of the present disclosure.

In some embodiments, the encoder side searches for a picture block with an intra prediction mode same as the intra prediction mode corresponding to the prediction block among encoded picture blocks surrounding the prediction block based on the intra prediction mode corresponding to the prediction block, and then determines a transform core corresponding to the picture block as the transform core corresponding to the current block.

In some embodiments, determining the transform core corresponding to the current block based on the intra prediction mode corresponding to the prediction block in the above S203-B includes the following steps.

In S203-B1: a corresponding relationship between intra prediction modes and transform core groups is acquired, where a transform core group includes at least one type of transform core.

In S203-B2: a first transform core group corresponding to the intra prediction mode of the prediction block is searched in the corresponding relationship.

In S203-B3: the transform core corresponding to the current block is determined from the first transform core group.

In the embodiments of the present disclosure, there is a corresponding relationship between intra prediction modes and transform core groups. Based on this, after determining the intra prediction mode corresponding to the prediction block, the encoder side acquires the preset corresponding relationship between intra prediction modes and transform core groups.

In an example, the corresponding relationship between intra prediction modes and transform core groups is shown in Table 17.

It should be noted that the above Table 17 merely illustrates a corresponding relationship between intra prediction modes and transform core groups involved in the embodiments of the present disclosure, and the corresponding relationship between intra prediction modes and transform core groups in the embodiments of the present disclosure includes but is not limited to that shown in Table 16.

Each transform core group includes at least one type of transform core.

After acquiring the corresponding relationship between intra prediction modes and transform core groups as shown in Table 17, the encoder side searches for a transform core group corresponding to the intra prediction mode corresponding to the prediction block, in the corresponding relationship between intra prediction modes and transform core groups, and denotes the transform core group as the first transform core group. For example, if the intra prediction mode corresponding to the prediction block is an angle prediction mode of the 64-angle direction, the above Table 16 may be searched to obtain a transform core group 4 corresponding to the angle prediction mode of the 64-angle direction. Thus, the encoder side determines the transform core corresponding to the current block, from at least one type of transform core included in the transform core group 4.

For example, if the first transform core group includes a transform core, this transform core is determined as the transform core corresponding to the current block.

For another example, if the first transform core group includes multiple types of transform cores, the encoder side determines a transform core type corresponding to the current block, and then determines a transform core with this transform core type in the first transform core group as the transform core corresponding to the current block.

The method for the encoder side to determine the type of transform core corresponding to the current block includes but is not limited to the following several methods.

In an example, the transform core type corresponding to the current block is a default type. Thus, the encoder side determines the default type as the transform core type corresponding to the current block.

In another example, the encoder side signals the transform core type corresponding to the current block into a bitstream. Thus, the encoder side obtains the transform core type corresponding to the current block by encoding the bitstream.

As can be seen from the above, in the embodiments of the present disclosure, the encoder side determines a prediction block of the current block by using the extrapolation filter prediction mode, and then determines a traditional intra prediction mode corresponding to the prediction block, and determines a transform core corresponding to the current block based on the traditional intra prediction mode corresponding to the prediction block. That is, the traditional intra prediction mode derived based on the extrapolation filter prediction in the embodiments of the present disclosure is used to select transform core group types of a non-separable primary transform (NSPT) and a non-separable secondary transform core (Low Frequency non-separable secondary transform, LFNST), so that the determined transform core better conforms the characteristics of the current block, which improves the accuracy of the determination of the transform core, and when using the accurately-determined transform core to determine the reconstructed value of the current block, the determination precision of the reconstructed value may be enhanced, thereby improving the encoding accuracy of the current block. Additionally, in the embodiments of the present disclosure, when determining the transform core of the current block by the traditional prediction mode corresponding to the prediction block, there is no need to separately indicate the transform core, thereby saving codewords and further enhancing the video encoding effect.

In the embodiments of the present disclosure, the encoder side determines the prediction block of the current block and the transform core corresponding to the current block based on the above steps. Thus, the encoder side may obtain the residual block of the current block based on the prediction block of the current block and the current block, for example, by subtracting the prediction block of the current block from the current block, to obtain the residual block of the current block. Then, the residual block of the current block is transformed based on the above-determined transform core, to obtain the transform coefficient of the current block. Then, the transform coefficient is directly encoded to obtain the bitstream. Alternatively, the transform coefficient is quantized to obtain the quantized coefficient, and the quantized coefficient is encoded to obtain the bitstream.

In some embodiments, the above-mentioned current block is a luma block or a chroma block, that is, in the embodiments of the present disclosure, both the luma block and the chroma block may be predicted by using the extrapolation filter prediction mode provided in the embodiments of the present disclosure.

In some embodiments, if the current block is a luma block, the prediction mode of the current block is the extrapolation filter prediction mode, and the direct derivation mode DM is used for a chroma block corresponding to the current block, the PLANAR mode or the intra prediction mode corresponding to the prediction block mentioned above is determined as a prediction mode of the chroma block.

In the video encoding method provided in the embodiments of the present disclosure, when predicting the current block, a reference region and an extrapolation filter of the current block are first determined, the filter coefficient is determined based on the reference region, parallel prediction is performed on at least two samples in the current block by using the extrapolation filter based on the filter coefficient, to obtain a prediction block of the current block; and a transform core corresponding to the current block is determined, and based on the transform core and the prediction block, the current block is encoded to obtain the bitstream. That is, in the embodiments of the present disclosure, when performing extrapolation filter prediction on the current block by using the extrapolation filter, parallel prediction is performed on at least two points in the current block, thereby improving the prediction speed and then enhancing the encoding efficiency.

It should be understood that FIGS. 10 to 29 are merely examples of the present disclosure and should not be construed as limitations to the present disclosure.

The preferred implementations of the present disclosure are described in detail above in connection with the accompanying drawings. However, the present disclosure is not limited to the specific details in the implementations described above. Within the scope of the technical concept of the present disclosure, a variety of simple modifications may be made to the technical solutions of the present disclosure, and these simple modifications all fall within the protection scope of the present disclosure. For example, the various specific technical features described in the specific implementations described above may be combined in any suitable manner without conflict. In order to avoid unnecessary repetition, the various possible combinations are not otherwise described in the present disclosure. For another example, any combination between the various different implementations of the present disclosure is also possible, as long as they do not contradict with the idea of the present disclosure, they should also be regarded as the content disclosed in the present disclosure.

It should also be understood that in the various method embodiments of the present disclosure, the sizes of the serial numbers of the processes described above do not mean an order of execution. The execution order of each process should be determined by its function and internal logic, and should not constitute any limitation on the implementing process of the embodiments of the present disclosure. In addition, in the embodiments of the present disclosure, the term "and/or" is merely used to describe an association relationship between associated objects, which represents that three types of relationships may exist. Specifically, A and/or B may mean three cases where: A exists alone, both A and B exist, and B exists alone. In addition, a character "/" in the present disclosure generally means that associated objects before and after "/" are in an "or" relationship.

The method embodiments of the present disclosure are described in detail above with reference to FIG. 10 to FIG. 29. Apparatus embodiments of the present disclosure are described in detail below with reference to FIG. 30 to FIG. 31.

FIG. 30 is a schematic block diagram of a video decoding apparatus provided in an embodiment of the present disclosure. The video decoding apparatus 10 is applied to the above-mentioned video decoder.

As illustrated in FIG. 30, the video decoding apparatus 10 includes:

a coefficient determination unit 11, configured to determine a reference region and an extrapolation filter of a current block, and determine a filter coefficient of the extrapolation filter based on the reference region;
a prediction unit 12, configured to perform, based on the filter coefficient, parallel prediction on at least two samples in the current block by using the extrapolation filter, to determine a prediction block of the current block; and
a reconstruction unit 13, configured to determine a transform core corresponding to the current block, and determine a reconstructed block of the current block based on the transform core corresponding to the current block and the prediction block.

In some embodiments, the prediction unit 12 is specifically configured to: perform, based on the filter coefficient, parallel extrapolation filter prediction on samples on a same diagonal line of the current block by using the extrapolation filter along a diagonal line direction, to obtain the prediction block of the current block.

In some embodiments, the prediction unit 12 is specifically configured to: perform, based on the filter coefficient, parallel extrapolation filter prediction on samples on the same diagonal line of the current block by using the extrapolation filter along the diagonal line direction starting from a top-left corner of the current block, to obtain the prediction block of the current block.

In some embodiments, the diagonal line direction includes at least one of: a direction from top-right to bottom-left, or a direction from bottom-left to top-right.

In some embodiments, the prediction unit 12 is specifically configured to: for M samples on a k-th diagonal line of the current block, determine prediction values of the M samples in parallel by using the extrapolation filter based on the filter coefficient, k and M being both positive integers; and obtain the prediction value of the current block based on prediction values of samples on each diagonal line of the current block.

In some embodiments, the prediction unit 12 is specifically configured to: determine sample values of N positions corresponding to each of the M samples in parallel based on a shape of the extrapolation filter; and determine the prediction values of the M samples in parallel based on the filter coefficient and the sample values of the N positions corresponding to each of the M samples.

In some embodiments, the coefficient determination unit 11 is specifically configured to: determine a first reconstructed region surrounding the current block; determine a sample average reconstructed value based on reconstructed values of the first reconstructed region; de-average reconstructed values of samples of the reference region based on the sample average reconstructed value; and use de-averaged sample values of the samples in the reference region as an input of the extrapolation filter, and slide the extrapolation filter within the reference region, to obtain the filter coefficient of the extrapolation filter.

In some embodiments, the coefficient determination unit 11 is specifically configured to: determine the sample average reconstructed value based on a shape of the current block and the reconstructed values of the first reconstructed region.

In some embodiments, the coefficient determination unit 11 is specifically configured to: determine a first region from the top reconstructed region and the left reconstructed region based on the shape of the current block; determine an average reconstructed value of the first region based on reconstructed values of the first region; and determine the sample average reconstructed value based on the average reconstructed value of the first region.

In some embodiments, the coefficient determination unit 11 is specifically configured to: in response to the shape of the current block being such that a width is greater than a height, determine the top reconstructed region as the first region; or in response to the shape of the current block being such that a height is greater than a width, determine the left reconstructed region as the first region; or in response to the shape of the current block being such that a height is equal to a width, determine the top reconstructed region and the left reconstructed region as the first region.

In some embodiments, a horizontal sliding step size and a vertical sliding step size of the extrapolation filter within the reference region are different.

In some embodiments, at least one of a horizontal sliding step size or a vertical sliding step size of the extrapolation filter within the reference region is greater than a preset step size.

In some embodiments, the prediction unit 12 is specifically configured to: de-average the sample values of the N positions corresponding to each of the M samples in parallel based on the sample average reconstructed value, to obtain de-averaged sample values of the N positions corresponding to each of the M samples; and determine the prediction values of the M samples in parallel based on the filter coefficient and the de-averaged sample values of the N positions corresponding to each of the M samples.

In some embodiments, the prediction unit 12 is specifically configured to: for any one sample of the M samples, subtract the sample average reconstructed value from sample values of N positions of the sample, to obtain de-averaged sample values of the N positions of the sample.

In some embodiments, the prediction unit 12 is specifically configured to: determine a second reconstructed region surrounding the current block, and determine a maximum reconstructed value and a minimum reconstructed value of the second reconstructed region; obtain first prediction values of the M samples in parallel based on the de-averaged sample values of the N positions corresponding to each of the M samples, the filter coefficient, and the sample average reconstructed value; and determine the prediction values of the M samples in parallel based on the first prediction values of the M samples, the maximum reconstructed value, and the minimum reconstructed value.

In some embodiments, the prediction unit 12 is specifically configured to: for any one sample of the M samples, multiply de-averaged sample values of N positions of the sample by the filter coefficient, to obtain a second prediction value of the sample; and add the second prediction value and the sample average reconstructed value, to obtain a first prediction value of the sample.

In some embodiments, the prediction unit 12 is specifically configured to: for any one sample of the M samples, in response to a first prediction value of the sample being greater than the minimum reconstructed value and less than the maximum reconstructed value, determine the first prediction value as a prediction value of the sample; or in response to a first prediction value of the sample being less than or equal to the minimum reconstructed value, determine the minimum reconstructed value as a prediction value of the sample; or in response to a first prediction value of the sample being greater than or equal to the maximum reconstructed value, determine the maximum reconstructed value as a prediction value of the sample.

In some embodiments, the coefficient determination unit 11, before determining the reference region and the extrapolation filter of the current block, is further configured to: determine whether an extrapolation filter prediction mode is allowed to be used for the current block; and in response to the extrapolation filter prediction mode being allowed to be used for the current block, determine the reference region and the extrapolation filter of the current block.

In some embodiments, the coefficient determination unit 11 is specifically configured to: in response to the current block being in a first row of a current CTU, determine that the extrapolation filter prediction mode is not allowed to be used for the current block.

In some embodiments, the coefficient determination unit 11 is specifically configured to: determine whether the extrapolation filter prediction mode is allowed to be used for the current block based on a type of a current picture.

In some embodiments, the coefficient determination unit 11 is specifically configured to: in response to the current picture being not an intra prediction picture, determine that the extrapolation filter prediction mode is not allowed to be used for the current block.

In some embodiments, the coefficient determination unit 11 is specifically configured to: in response to a size of the current block being smaller than a preset size, determine that the extrapolation filter prediction mode is not allowed to be used for the current block.

In some embodiments, the coefficient determination unit 11 is specifically configured to: decode a bitstream, to obtain first information, where the first information is used to indicate whether a template matching-based technology is enabled; and determine whether the extrapolation filter prediction mode is allowed to be used for the current block based on the first information.

In some embodiments, the coefficient determination unit 11 is specifically configured to: in response to the first information indicating that the template matching-based technology is not enabled, determine that the extrapolation filter prediction mode is not allowed to be used for the current block.

In some embodiments, the coefficient determination unit 11 is specifically configured to: in response to the first information indicating that the template matching-based technology is enabled, decode the bitstream to obtain second information, the second information being used to indicate whether the extrapolation filter prediction mode is allowed to be used for predicting a current sequence; and determine whether the extrapolation filter prediction mode is allowed to be used for the current block based on the second information.

In some embodiments, the reconstruction unit 13 is specifically configured to: determine an intra prediction mode corresponding to the prediction block; and determine the transform core corresponding to the current block based on the intra prediction mode corresponding to the prediction block.

In some embodiments, the reconstruction unit 13 is specifically configured to: determine angle values of R points in the prediction block, R being a positive integer; and determine the intra prediction mode corresponding to the prediction block based on the angle values of the R points.

In some embodiments, the reconstruction unit 13 is specifically configured to: acquire a corresponding relationship between intra prediction modes and transform core groups, where a transform core group includes at least one type of transform core; search for a first transform core group corresponding to the intra prediction mode of the prediction block, in the corresponding relationship; and determine the transform core corresponding to the current block from the first transform core group.

In some embodiments, the coefficient determination unit 11 is specifically configured to: determine the reference region of the current block from P preset reference regions, P being a positive integer greater than 1.

In some embodiments, the coefficient determination unit 11 is specifically configured to: determine the extrapolation filter of the current block from Q preset extrapolation filters, Q being a positive integer greater than 1.

It should be understood that, the apparatus embodiments and the method embodiments may correspond to each other, and similar descriptions for the apparatus embodiments may refer to the method embodiments, which will not be repeated herein to avoid repetition. Specifically, the apparatus 10 illustrated in FIG. 30 may perform the decoding method for the decoder side of the embodiments of the present disclosure, and the aforementioned and other operations and/or functions of various units in the apparatus 10 are respectively for implementing the corresponding processes in various methods such as the decoding method for the decoder side mentioned above, which will not be repeated herein for the sake of brevity.

FIG. 31 is a schematic block diagram of a video encoding apparatus provided in an embodiment of the present disclosure, and the video encoding apparatus is applied to the above-mentioned encoder.

As illustrated in FIG. 31, the video encoding apparatus 20 may include:

a coefficient determination unit 21, configured to determine a reference region and an extrapolation filter of a current block, and determine a filter coefficient of the extrapolation filter based on the reference region;
a prediction unit 22, configured to perform, based on the filter coefficient, parallel prediction on at least two samples in the current block by using the extrapolation filter, to determine a prediction block of the current block; and
an encoding unit 23, configured to determine a transform core corresponding to the current block, and encode the current block based on the transform core corresponding to the current block and the prediction block, to obtain a bitstream.

In some embodiments, the prediction unit 22 is specifically configured to: perform, based on the filter coefficient, parallel extrapolation filter prediction on samples on a same diagonal line of the current block by using the extrapolation filter along a diagonal line direction, to obtain the prediction block of the current block.

In some embodiments, the prediction unit 22 is specifically configured to: perform, based on the filter coefficient, parallel extrapolation filter prediction on samples on the same diagonal line of the current block by using the extrapolation filter along the diagonal line direction starting from a top-left corner of the current block, to obtain the prediction block of the current block.

In some embodiments, the diagonal line direction includes at least one of: a direction from top-right to bottom-left, or a direction from bottom-left to top-right.

In some embodiments, the prediction unit 22 is specifically configured to: for M samples on a k-th diagonal line of the current block, determine prediction values of the M samples in parallel by using the extrapolation filter based on the filter coefficient, k and M being both positive integers; and obtain the prediction value of the current block based on prediction values of samples on each diagonal line of the current block.

In some embodiments, the prediction unit 22 is specifically configured to: determine sample values of N positions corresponding to each of the M samples in parallel based on a shape of the extrapolation filter; and determine the prediction values of the M samples in parallel based on the filter coefficient and the sample values of the N positions corresponding to each of the M samples.

In some embodiments, the coefficient determination unit 21 is specifically configured to: determine a first reconstructed region surrounding the current block; determine a sample average reconstructed value based on reconstructed values of the first reconstructed region; de-average reconstructed values of samples of the reference region based on the sample average reconstructed value; and use de-averaged sample values of the samples in the reference region as an input of the extrapolation filter, and slide the extrapolation filter within the reference region, to obtain the filter coefficient of the extrapolation filter.

In some embodiments, the coefficient determination unit 21 is specifically configured to: determine the sample average reconstructed value based on a shape of the current block and the reconstructed values of the first reconstructed region.

In some embodiments, the coefficient determination unit 21 is specifically configured to: determine a first region from the top reconstructed region and the left reconstructed region based on the shape of the current block; determine an average reconstructed value of the first region based on reconstructed values of the first region; and determine the sample average reconstructed value based on the average reconstructed value of the first region.

In some embodiments, the coefficient determination unit 21 is specifically configured to: in response to the shape of the current block being such that a width is greater than a height, determine the top reconstructed region as the first region; or in response to the shape of the current block being such that a height is greater than a width, determine the left reconstructed region as the first region; or in response to the shape of the current block being such that a height is equal to a width, determine the top reconstructed region and the left reconstructed region as the first region.

In some embodiments, a horizontal sliding step size and a vertical sliding step size of the extrapolation filter within the reference region are different.

In some embodiments, at least one of a horizontal sliding step size or a vertical sliding step size of the extrapolation filter within the reference region is greater than a preset step size.

In some embodiments, the prediction unit 22 is specifically configured to: de-average the sample values of the N positions corresponding to each of the M samples in parallel based on the sample average reconstructed value, to obtain de-averaged sample values of the N positions corresponding to each of the M samples; and determine the prediction values of the M samples in parallel based on the filter coefficient and the de-averaged sample values of the N positions corresponding to each of the M samples.

In some embodiments, the prediction unit 12 is specifically configured to: for any one sample of the M samples, subtract the sample average reconstructed value from sample values of N positions of the sample, to obtain de-averaged sample values of the N positions of the sample.

In some embodiments, the prediction unit 22 is specifically configured to: determine a second reconstructed region surrounding the current block, and determine a maximum reconstructed value and a minimum reconstructed value of the second reconstructed region; obtain first prediction values of the M samples in parallel based on the de-averaged sample values of the N positions corresponding to each of the M samples, the filter coefficient, and the sample average reconstructed value; and determine the prediction values of the M samples in parallel based on the first prediction values of the M samples, the maximum reconstructed value, and the minimum reconstructed value.

In some embodiments, the prediction unit 22 is specifically configured to: for any one sample of the M samples, multiply de-averaged sample values of N positions of the sample by the filter coefficient, to obtain a second prediction value of the sample; and add the second prediction value and the sample average reconstructed value, to obtain a first prediction value of the sample.

In some embodiments, the prediction unit 22 is specifically configured to: for any one sample of the M samples, in response to a first prediction value of the sample being greater than the minimum reconstructed value and less than the maximum reconstructed value, determine the first prediction value as a prediction value of the sample; or in response to a first prediction value of the sample being less than or equal to the minimum reconstructed value, determine the minimum reconstructed value as a prediction value of the sample; or in response to a first prediction value of the sample being greater than or equal to the maximum reconstructed value, determine the maximum reconstructed value as a prediction value of the sample.

In some embodiments, the coefficient determination unit 21, before determining the reference region and the extrapolation filter of the current block, is further configured to: determine whether an extrapolation filter prediction mode is allowed to be used for the current block; and in response to the extrapolation filter prediction mode being allowed to be used for the current block, determine the reference region and the extrapolation filter of the current block.

In some embodiments, the coefficient determination unit 21 is specifically configured to: in response to that the current block is in a first row of a current CTU, determine that the extrapolation filter prediction mode is not allowed to be used for the current block.

In some embodiments, the coefficient determination unit 21 is specifically configured to: determine whether the extrapolation filter prediction mode is allowed to be used for the current block based on a type of a current picture.

In some embodiments, the coefficient determination unit 21 is specifically configured to: in response to the current picture being not an intra prediction picture, determine that the extrapolation filter prediction mode is not allowed to be used for the current block.

In some embodiments, the coefficient determination unit 21 is specifically configured to: in response to a size of the current block being smaller than a preset size, determine that the extrapolation filter prediction mode is not allowed to be used for the current block.

In some embodiments, the coefficient determination unit 21 is specifically configured to determine first information, where the first information is used to indicate whether a template matching-based technology is enabled; and determine whether the extrapolation filter prediction mode is allowed to be used for the current block based on the first information.

In some embodiments, the coefficient determination unit 21 is specifically configured to: in response to the first information indicating that the template matching-based technology is not enabled, determine that the extrapolation filter prediction mode is not allowed to be used for the current block.

In some embodiments, the coefficient determination unit 21 is specifically configured to: in response to the first information indicating that the template matching-based technology is enabled, determine second information, the second information being used to indicate whether the extrapolation filter prediction mode is allowed to be used for predicting a current sequence; and determine whether the extrapolation filter prediction mode is allowed to be used for the current block based on the second information.

In some embodiments, the reconstruction unit 23 is specifically configured to: determine an intra prediction mode corresponding to the prediction block; and determine the transform core corresponding to the current block based on the intra prediction mode corresponding to the prediction block.

In some embodiments, the reconstruction unit 23 is specifically configured to: determine angle values of R points in the prediction block, R being a positive integer; and determine the intra prediction mode corresponding to the prediction block based on the angle values of the R points.

In some embodiments, the reconstruction unit 23 is specifically configured to: acquire a corresponding relationship between intra prediction modes and transform core groups, where a transform core group includes at least one type of transform core; search for a first transform core group corresponding to the intra prediction mode of the prediction block, in the corresponding relationship; and determine the transform core corresponding to the current block from the first transform core group.

In some embodiments, the coefficient determination unit 21 is specifically configured to: determine the reference region of the current block from P preset reference regions, P being a positive integer greater than 1.

In some embodiments, the coefficient determination unit 21 is specifically configured to: determine the extrapolation filter of the current block from Q preset extrapolation filters, Q being a positive integer greater than 1.

It should be understood that, the apparatus embodiments and the method embodiments may correspond to each other, and similar descriptions for the apparatus embodiments may refer to the method embodiments, which will not be described herein to avoid repetition. Specifically, the apparatus 20 illustrated in FIG. 31 may correspond to a respective entity performing the encoding method for the encoder side of the embodiments of the present disclosure, and the aforementioned and other operations and/or functions of various units in the apparatus 20 are respectively for implementing the corresponding processes in various methods such as the encoding method for the encoder side, which will not be repeated herein for the sake of brevity.

The apparatus and system in the embodiments of the present disclosure are described above from the perspective of functional units in combination with the accompanying drawings. It should be understood that the functional units may be implemented in the form of hardware, may be implemented by instructions in the form of software, or may be implemented by a combination of hardware and software units. Specifically, various steps of the method embodiments in the embodiments of the present disclosure may be completed by an integrated logic circuit of hardware and/or instructions in the form of software in the processor. The steps of the method disclosed in combination with the embodiments of the present disclosure may be directly embodied as being executed and completed by a hardware coding processor, or by a combination of hardware and software units in the coding processor. Optionally, the software unit may be located in a mature storage medium in the art, such as a random access memory, a flash memory, a read-only memory, a programmable read-only memory, an electrically erasable programmable memory, a register, etc. The storage medium is located in a memory, and a processor reads information in the memory and completes the steps in the above method embodiments in combination with the hardware of the processor.

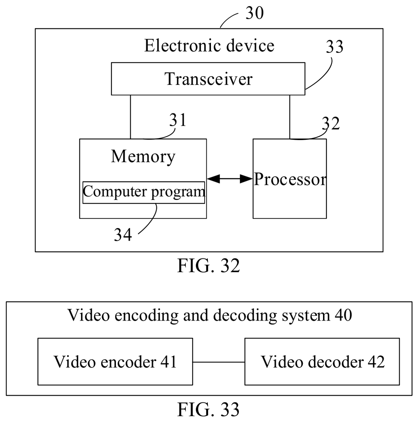

FIG. 32 is a schematic block diagram of an electronic device provided in the embodiments of the present disclosure.

As illustrated in FIG. 32, the electronic device 30 may be a video encoder or a video decoder as described in the embodiments of the present disclosure, and the electronic device 30 may include:
a memory 33 and a processor 32, where the memory 33 is used to store a computer program 34 and transmit the program code 34 to the processor 32. In other words, the processor 32 may invoke and execute the computer program 34 from the memory 33 to implement the method in the embodiments of the present disclosure.

For example, the processor 32 may be configured to perform the steps in the above method 200 according to instructions in the computer program 34.

In some embodiments of the present disclosure, the processor 32 may include, but not limited to:
a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or transistor logic device, a discrete hardware component, etc.

In some embodiments of the present disclosure, the memory 33 includes, but not limited to:
a volatile memory and/or a non-volatile memory. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synch link DRAM, SLDRAM) and a direct rambus random access memory (Direct Rambus RAM, DR RAM).

In some embodiments of the present disclosure, the computer program 34 may be divided into one or more units, and the one or more units are stored in the memory 33 and performed by the processor 32 to complete the methods provided in the present disclosure. The one or more units may be a series of computer program instruction segments capable of completing specific functions, and the instruction segments are used to describe the execution process of the computer program 34 in the electronic device 30.

As illustrated in FIG. 32, the electronic device 30 may further include:
a transceiver 33. The transceiver 33 may be connected to the processor 32 or the memory 33.

Herein, the processor 32 may control the transceiver 33 to communicate with other devices, and specifically, to transmit information or data to other devices, or receive information or data transmitted from other devices. The transceiver 33 may include a transmitter and a receiver. The transceiver 33 may further include antennas, and the number of the antennas may be one or more.

It should be understood that the various components in the electronic device 30 are connected via a bus system, where the bus system includes not only a data bus, but also a power bus, a control bus and a status signal bus.

FIG. 33 is a schematic block diagram of a video encoding and decoding system provided in the embodiments of the present disclosure.

As illustrated in FIG. 33, the video encoding and decoding system 40 may include: a video encoder 41 and a video decoder 42, where the video encoder 41 is configured to perform the video encoding method involved in the embodiments of the present disclosure, and the video decoder 42 is configured to perform the video decoding method involved in the embodiments of the present disclosure.

A computer storage medium is further provided in the present disclosure, and a computer program is stored on the computer storage medium. The computer program, when being executed by a computer, causes the computer to perform the method in the above method embodiments. In other words, a computer program product including instructions is further provided in the embodiments of the present disclosure, and the instructions, when being executed by a computer, cause the computer to perform the method in the above method embodiments.

A bitstream is further provided in the present disclosure, and the bitstream is generated according to the above encoding method.

When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available media. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

Those ordinary skilled in the art may be aware that steps of units and algorithms of various examples described in conjunction with the embodiments disclosed in the present disclosure can be implemented by electronic hardware, or a combination of computer software and electronic hardware. Whether these functions are performed by hardware or software depends on specific application and design constraints of the technical solutions. A skilled person may use different methods for each specific application, to implement the described functions, but such implementation should not be considered beyond the scope of the present disclosure.

In several embodiments provided by the present disclosure, it should be understood that the disclosed system, apparatus and method may be implemented in other ways. For example, the apparatus embodiments described above are only illustrative. For example, the division of units is only a logical function division, and there may be other division methods for actual implementations. For example, multiple units or components may be combined or integrated into another system, or some features may be ignored or may not be executed. On the other hand, the coupling or direct coupling or communicative connection between each other as shown or discussed may be indirect coupling or indirect communicative connection via some interfaces, apparatus or units, which may be in the form of electronics, mechanisms, or others.

The units described as separate components may be or may not be physically separated, and the components shown as units may be or may not be physical units, that is, they may be located in one place or distributed across multiple network units. A portion or all of the units may be selected according to actual needs to implement the purposes of the embodiments' schemes. For example, various functional units in various embodiments of the present disclosure may be integrated into one processing unit or the various units may exist physically and separately, or two or more units may be integrated into one unit.

The above description is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

## Claims

1. A video decoding method, comprising:

   determining a reference region and an extrapolation filter of a current block, and determining a filter coefficient of the extrapolation filter based on the reference region;
   performing, based on the filter coefficient, parallel prediction on at least two samples in the current block by using the extrapolation filter, to determine a prediction block of the current block; and
   determining a transform core corresponding to the current block, and determining a reconstructed block of the current block based on the transform core corresponding to the current block and the prediction block.

2. The method according to claim 1, wherein performing, based on the filter coefficient, parallel extrapolation filter prediction on the at least two samples in the current block by using the extrapolation filter, to obtain the prediction block of the current block comprises:

   performing, based on the filter coefficient, parallel extrapolation filter prediction on samples on a same diagonal line of the current block by using the extrapolation filter along a diagonal line direction, to obtain the prediction block of the current block.

3. The method according to claim 2, wherein performing, based on the filter coefficient, parallel extrapolation filter prediction on the samples on the same diagonal line of the current block by using the extrapolation filter along the diagonal line direction, to obtain the prediction block of the current block comprises:

   performing, based on the filter coefficient, parallel extrapolation filter prediction on the samples on the same diagonal line of the current block by using the extrapolation filter along the diagonal line direction starting from a top-left corner of the current block, to obtain the prediction block of the current block.

4. The method according to claim 3, wherein the diagonal line direction comprises at least one of: a direction from top-right to bottom-left, or a direction from bottom-left to top-right.

5. The method according to claim 3, wherein performing, based on the filter coefficient, parallel extrapolation filter prediction on the samples on the same diagonal line of the current block by using the extrapolation filter along the diagonal line direction starting from the top-left corner of the current block, to obtain the prediction block of the current block comprises:

   for M samples on a k-th diagonal line of the current block, determining prediction values of the M samples in parallel by using the extrapolation filter based on the filter coefficient, k and M being both positive integers; and obtaining the prediction value of the current block based on prediction values of samples on each diagonal line of the current block.

6. The method according to claim 5, wherein determining the prediction values of the M samples in parallel by using the extrapolation filter based on the filter coefficient comprises:

   determining sample values of N positions corresponding to each of the M samples in parallel based on a shape of the extrapolation filter; and determining the prediction values of the M samples in parallel based on the filter coefficient and the sample values of the N positions corresponding to each of the M samples.

7. The method according to claim 6, wherein determining the filter coefficient of the extrapolation filter based on the reference region comprises:

   determining a first reconstructed region surrounding the current block; determining a sample average reconstructed value based on reconstructed values of the first reconstructed region; de-averaging reconstructed values of samples of the reference region based on the sample average reconstructed value; and using de-averaged sample values of the samples in the reference region as an input of the extrapolation filter, and sliding the extrapolation filter within the reference region, to obtain the filter coefficient of the extrapolation filter.

8. The method according to claim 7, wherein determining the sample average reconstructed value based on the reconstructed values of the first reconstructed region comprises:
   determining the sample average reconstructed value based on a shape of the current block and the reconstructed values of the first reconstructed region.

9. The method according to claim 8, wherein the first reconstructed region comprises a top reconstructed region and a left reconstructed region of the current block, and determining the sample average reconstructed value based on the shape of the current block and the reconstructed values of the first reconstructed region comprises:

   determining a first region from the top reconstructed region and the left reconstructed region based on the shape of the current block; determining an average reconstructed value of the first region based on reconstructed values of the first region; and determining the sample average reconstructed value based on the average reconstructed value of the first region.

10. The method according to claim 9, wherein determining the first region from the top reconstructed region and the left reconstructed region based on the shape of the current block comprises:

   in response to the shape of the current block being such that a width is greater than a height, determining the top reconstructed region as the first region; or

in response to the shape of the current block being such that a height is greater than a width, determining the left reconstructed region as the first region; or

in response to the shape of the current block being such that a height is equal to a width, determining the top reconstructed region and the left reconstructed region as the first region.

11. The method according to claim 7, wherein a horizontal sliding step size and a vertical sliding step size of the extrapolation filter within the reference region are different.

12. The method according to claim 7, wherein at least one of a horizontal sliding step size or a vertical sliding step size of the extrapolation filter within the reference region is greater than a preset step size.

13. The method according to claim 7, wherein determining the prediction values of the M samples in parallel based on the filter coefficient and the sample values of the N positions corresponding to each of the M samples comprises:

de-averaging the sample values of the N positions corresponding to each of the M samples in parallel based on the sample average reconstructed value, to obtain de-averaged sample values of the N positions corresponding to each of the M samples; and

determining the prediction values of the M samples in parallel based on the filter coefficient and the de-averaged sample values of the N positions corresponding to each of the M samples.

14. The method according to claim 13, wherein de-averaging the sample values of the N positions corresponding to each of the M samples in parallel based on the sample average reconstructed value, to obtain the de-averaged sample values of the N positions corresponding to each of the M samples comprises:

for any one sample of the M samples, subtracting the sample average reconstructed value from sample values of N positions of the sample, to obtain de-averaged sample values of the N positions of the sample.

15. The method according to claim 13, wherein determining the prediction values of the M samples based on the filter coefficient and the de-averaged sample values of the N positions corresponding to each of the M samples comprises:

determining a second reconstructed region surrounding the current block, and determining a maximum reconstructed value and a minimum reconstructed value of the second reconstructed region;

obtaining first prediction values of the M samples in parallel based on the de-averaged sample values of the N positions corresponding to each of the M samples, the filter coefficient and the sample average reconstructed value; and

determining the prediction values of the M samples in parallel based on the first prediction values of the M samples, the maximum reconstructed value and the minimum reconstructed value.

16. The method according to claim 15, wherein obtaining the first prediction values of the M samples in parallel based on the de-averaged sample values of the N positions corresponding to each of the M samples, the filter coefficient and the sample average reconstructed value comprises:

for any one sample of the M samples, multiplying de-averaged sample values of N positions of the sample by the filter coefficient, to obtain a second prediction value of the sample; and

adding the second prediction value and the sample average reconstructed value, to obtain a first prediction value of the sample.

17. The method according to claim 15, wherein determining the prediction values of the M samples in parallel based on the first prediction values of the M samples, the maximum reconstructed value and the minimum reconstructed value, comprising:

for any one sample of the M samples, in response to a first prediction value of the sample being greater than the minimum reconstructed value and less than the maximum reconstructed value, determining the first prediction value as a prediction value of the sample; or

in response to a first prediction value of the sample being less than or equal to the minimum reconstructed value, determining the minimum reconstructed value as a prediction value of the sample; or

in response to a first prediction value of the sample being greater than or equal to the maximum reconstructed value, determining the maximum reconstructed value as a prediction value of the sample.

18. The method according to claim 1, wherein before determining the reference region and the extrapolation filter of the current block, the method further comprises:

   determining whether an extrapolation filter prediction mode is allowed to be used for the current block;
   wherein determining the reference region and the extrapolation filter of the current block comprises:
   in response to the extrapolation filter prediction mode being allowed to be used for the current block, determining the reference region and the extrapolation filter of the current block.

19. The method according to claim 18, wherein determining whether the extrapolation filter prediction mode is allowed to be used for the current block comprises:
   in response to the current block being in a first row of a current coding tree unit (CTU), determining that the extrapolation filter prediction mode is not allowed to be used for the current block.

20. The method according to claim 18, wherein determining whether the extrapolation filter prediction mode is allowed to be used for the current block comprises:
   determining whether the extrapolation filter prediction mode is allowed to be used for the current block based on a type of a current picture.

21. The method according to claim 20, wherein determining whether the extrapolation filter prediction mode is allowed to be used for the current block based on the type of the current picture comprises:
   in response to the current picture being not an intra prediction picture, determining that the extrapolation filter prediction mode is not allowed to be used for the current block.

22. The method according to claim 18, wherein determining whether the extrapolation filter prediction mode is allowed to be used for the current block comprises:
   in response to a size of the current block being smaller than a preset size, determining that the extrapolation filter prediction mode is not allowed to be used for the current block.

23. The method according to claim 18, wherein determining whether the extrapolation filter prediction mode is allowed to be used for the current block comprises:

   decoding a bitstream, to obtain first information, wherein the first information is used to indicate whether a template matching-based technology is enabled; and
   determining whether the extrapolation filter prediction mode is allowed to be used for the current block based on the first information.

24. The method according to claim 23, wherein determining whether the extrapolation filter prediction mode is allowed to be used for the current block based on the first information comprises:
   in response to the first information indicating that the template matching-based technology is not enabled, determining that the extrapolation filter prediction mode is not allowed to be used for the current block.

25. The method according to claim 23, wherein determining whether the extrapolation filter prediction mode is allowed to be used for the current block based on the first information comprises:

   in response to the first information indicating that the template matching-based technology is enabled, decoding the bitstream to obtain second information, the second information being used to indicate whether the extrapolation filter prediction mode is allowed to be used for predicting a current sequence; and
   determining whether the extrapolation filter prediction mode is allowed to be used for the current block based on the second information.

26. The method according to claim 1, wherein determining the transform core corresponding to the current block comprises:

   determining an intra prediction mode corresponding to the prediction block; and
   determining the transform core corresponding to the current block based on the intra prediction mode corresponding to the prediction block.

27. The method according to claim 26, wherein determining the intra prediction mode corresponding to the prediction block comprises:

determining angle values of R points in the prediction block, R being a positive integer; and
determining the intra prediction mode corresponding to the prediction block based on the angle values of the R points.

28. The method according to claim 1, wherein determining the transform core corresponding to the current block based on the intra prediction mode corresponding to the prediction block comprises:

acquiring a corresponding relationship between intra prediction modes and transform core groups, wherein a transform core group comprises at least one type of transform core;
searching for a first transform core group corresponding to the intra prediction mode of the prediction block, in the corresponding relationship; and
determining the transform core corresponding to the current block from the first transform core group.

29. The method according to claim 1, wherein determining the reference region of the current block comprises: determining the reference region of the current block from P preset reference regions, P being a positive integer greater than 1.

30. The method according to claim 1, wherein determining the extrapolation filter of the current block comprises: determining the extrapolation filter of the current block from Q preset extrapolation filters, Q being a positive integer greater than 1.

31. A video encoding method, comprising:

determining a reference region and an extrapolation filter of a current block, and determining a filter coefficient of the extrapolation filter based on the reference region;
performing, based on the filter coefficient, parallel prediction on at least two samples in the current block by using the extrapolation filter, to determine a prediction block of the current block; and
determining a transform core corresponding to the current block, and encoding the current block based on the transform core corresponding to the current block and the prediction block, to obtain a bitstream.

32. The method according to claim 31, wherein performing, based on the filter coefficient, parallel extrapolation filter prediction on the at least two samples in the current block by using the extrapolation filter, to obtain the prediction block of the current block comprises:
performing, based on the filter coefficient, parallel extrapolation filter prediction on samples on a same diagonal line of the current block by using the extrapolation filter along a diagonal line direction, to obtain the prediction block of the current block.

33. The method according to claim 32, wherein performing, based on the filter coefficient, parallel extrapolation filter prediction on the samples on the same diagonal line of the current block by using the extrapolation filter along the diagonal line direction, to obtain the prediction block of the current block comprises:
performing, based on the filter coefficient, parallel extrapolation filter prediction on the samples on the same diagonal line of the current block by using the extrapolation filter along the diagonal line direction starting from a top-left corner of the current block, to obtain the prediction block of the current block.

34. The method according to claim 33, wherein the diagonal line direction comprises at least one of: a direction from top-right to bottom-left, or a direction from bottom-left to top-right.

35. The method according to claim 33, wherein performing, based on the filter coefficient, parallel extrapolation filter prediction on the samples on the same diagonal line of the current block by using the extrapolation filter along the diagonal line direction starting from the top-left corner of the current block, to obtain the prediction block of the current block comprises:

for M samples on a k-th diagonal line of the current block, determining prediction values of the M samples in parallel by using the extrapolation filter based on the filter coefficient, k and M being both positive integers; and
obtaining the prediction value of the current block based on prediction values of samples on each diagonal line of the current block.

36. The method according to claim 35, wherein determining prediction values of the M samples in parallel by using the extrapolation filter based on the filter coefficient comprises:

    determining sample values of N positions corresponding to each of the M samples in parallel based on a shape of the extrapolation filter; and
    determining the prediction values of the M samples in parallel based on the filter coefficient and the sample values of the N positions corresponding to each of the M samples.

37. The method according to claim 36, determining the filter coefficient of the extrapolation filter based on the reference region comprises:

    determining a first reconstructed region surrounding the current block;
    determining a sample average reconstructed value based on reconstructed values of the first reconstructed region;
    de-averaging reconstructed values of samples of the reference region based on the sample average reconstructed value; and
    using de-averaged sample values of the samples in the reference region as an input of the extrapolation filter, and sliding the extrapolation filter within the reference region, to obtain the filter coefficient of the extrapolation filter.

38. The method according to claim 37, wherein determining the sample average reconstructed value based on the reconstructed values of the first reconstructed region comprises:
    determining the sample average reconstructed value based on a shape of the current block and the reconstructed values of the first reconstructed region.

39. The method according to claim 38, wherein the first reconstructed region comprises a top reconstructed region and a left reconstructed region of the current block, and determining the sample average reconstructed value based on the shape of the current block and the reconstructed values of the first reconstructed region comprises:

    determining a first region from the top reconstructed region and the left reconstructed region based on the shape of the current block;
    determining an average reconstructed value of the first region based on reconstructed values of the first region; and
    determining the sample average reconstructed value based on the average reconstructed value of the first region.

40. The method according to claim 39, wherein determining the first region from the top reconstructed region and the left reconstructed region based on the shape of the current block comprises:

    in response to the shape of the current block being such that a width is greater than a height, determining the top reconstructed region as the first region; or
    in response to the shape of the current block being such that a height is greater than a width, determining the left reconstructed region as the first region; or
    in response to the shape of the current block being such that a height is equal to a width, determining the top reconstructed region and the left reconstructed region as the first region.

41. The method according to claim 37, wherein a horizontal sliding step size and a vertical sliding step size of the extrapolation filter within the reference region are different.

42. The method according to claim 37, wherein at least one of a horizontal sliding step size or a vertical sliding step size of the extrapolation filter within the reference region is greater than a preset step size.

43. The method according to claim 37, wherein determining the prediction values of the M samples in parallel based on the filter coefficient and the sample values of the N positions corresponding to each of the M samples comprises:

    de-averaging the sample values of the N positions corresponding to each of the M samples in parallel based on the sample average reconstructed value, to obtain de-averaged sample values of the N positions corresponding to each of the M samples; and
    determining the prediction values of the M samples based on the filter coefficient and the de-averaged sample values of the N positions corresponding to each of the M samples.

44. The method according to claim 43, wherein de-averaging the sample values of the N positions corresponding to each of the M samples in parallel based on the sample average reconstructed value, to obtain the de-averaged sample values of the N positions corresponding to each of the M samples comprises:
for any one sample of the M samples, subtracting the sample average reconstructed value from sample values of N positions of the sample, to obtain de-averaged sample values of the N positions of the sample.

45. The method according to claim 43, wherein determining the prediction values of the M samples based on the filter coefficient and the de-averaged sample values of the N positions corresponding to each of the M samples comprises:

    determining a second reconstructed region surrounding the current block, and determining a maximum reconstructed value and a minimum reconstructed value of the second reconstructed region;
    obtaining first prediction values of the M samples in parallel based on the de-averaged sample values of the N positions corresponding to each of the M samples, the filter coefficient and the sample average reconstructed value; and
    determining the prediction values of the M samples in parallel based on the first prediction values of the M samples, the maximum reconstructed value and the minimum reconstructed value.

46. The method according to claim 45, obtaining the first prediction values of the M samples in parallel based on the de-averaged sample values of the N positions corresponding to each of the M samples, the filter coefficient and the sample average reconstructed value comprises:

    for any one sample of the M samples, multiplying de-averaged sample values of N positions of the sample by the filter coefficient, to obtain a second prediction value of the sample; and
    adding the second prediction value and the sample average reconstructed value, to obtain a first prediction value of the sample.

47. The method according to claim 45, wherein determining the prediction values of the M samples in parallel based on the first prediction values of the M samples, the maximum reconstructed value and the minimum reconstructed value comprising:

    for any one sample of the M samples, in response to a first prediction value of the sample being greater than the minimum reconstructed value and less than the maximum reconstructed value, determining the first prediction value as a prediction value of the sample; or
    in response to a first prediction value of the sample being less than or equal to the minimum reconstructed value, determining the minimum reconstructed value as a prediction value of the sample; or
    in response to a first prediction value of the sample being greater than or equal to the maximum reconstructed value, determining the maximum reconstructed value as a prediction value of the sample.

48. The method according to claim 31, wherein before determining the reference region and the extrapolation filter of the current block, the method further comprises:

    determining whether an extrapolation filter prediction mode is allowed to be used for the current block;
    determining the reference region and the extrapolation filter of the current block comprises:
    in response to the extrapolation filter prediction mode being allowed to be used for the current block, determining the reference region and the extrapolation filter of the current block.

49. The method according to claim 48, wherein determining whether the extrapolation filter prediction mode is allowed to be used for the current block comprises:
in response to the current block being in a first row of a current coding tree unit (CTU), determining that the extrapolation filter prediction mode is not allowed to be used for the current block.

50. The method according to claim 48, wherein determining whether the extrapolation filter prediction mode is allowed to be used for the current block comprises:
determining whether the extrapolation filter prediction mode is allowed to be used for the current block based on a type of a current picture.

51. The method according to claim 50, wherein determining whether the extrapolation filter prediction mode is allowed to be used for the current block based on the type of the current picture comprises:

in response to the current picture being not an intra prediction picture, determining that the extrapolation filter prediction mode is not allowed to be used for the current block.

52. The method according to claim 48, determining whether the extrapolation filter prediction mode is allowed to be used for the current block comprises:
in response to a size of the current block being smaller than a preset size, determining that the extrapolation filter prediction mode is not allowed to be used for the current block.

53. The method according to claim 48, wherein determining whether the extrapolation filter prediction mode is allowed to be used for the current block comprises:

determining first information, wherein the first information is used to indicate whether a template matching-based technology is enabled; and
determining whether the extrapolation filter prediction mode is allowed to be used for the current block based on the first information.

54. The method according to claim 53, wherein determining whether the extrapolation filter prediction mode is allowed to be used for the current block based on the first information comprises:
in response to the first information indicating that the template matching-based technology is not enabled, determining that the extrapolation filter prediction mode is not allowed to be used for the current block.

55. The method according to claim 53, determining whether the extrapolation filter prediction mode is allowed to be used for the current block based on the first information comprises:

in response to the first information indicating that the template matching-based technology is enabled, determining second information, the second information being used to indicate whether the extrapolation filter prediction mode is allowed to be used for predicting a current sequence; and
determining whether the extrapolation filter prediction mode is allowed to be used for the current block based on the second information.

56. The method according to claim 31, wherein determining the transform core corresponding to the current block comprises:

determining an intra prediction mode corresponding to the prediction block; and
determining the transform core corresponding to the current block based on the intra prediction mode corresponding to the prediction block.

57. The method according to claim 56, wherein determining the intra prediction mode corresponding to the prediction block comprises:

determining angle values of R points in the prediction block, R being a positive integer; and
determining the intra prediction mode corresponding to the prediction block based on the angle values of the R points.

58. The method according to claim 56, wherein determining the transform core corresponding to the current block based on the intra prediction mode corresponding to the prediction block comprises:

acquiring a corresponding relationship between intra prediction modes and transform core groups, wherein a transform core group comprises at least one type of transform core;
searching for a first transform core group corresponding to the intra prediction mode of the prediction block, in the corresponding relationship; and
determining the transform core corresponding to the current block from the first transform core group.

59. The method according to claim 31, wherein determining the reference region of the current block comprises:
determining the reference region of the current block from P preset reference regions, P being a positive integer greater than 1.

60. The method according to claim 31, wherein determining the extrapolation filter of the current block comprises:

determining the extrapolation filter of the current block from Q preset extrapolation filters, Q being a positive integer greater than 1.

61. A video decoding apparatus, comprising:

a coefficient determination unit, configured to determine a reference region and an extrapolation filter of a current block, and determine a filter coefficient of the extrapolation filter based on the reference region;
a prediction unit, configured to perform, based on the filter coefficient, parallel prediction on at least two samples in the current block by using the extrapolation filter, to determine a prediction block of the current block; and
a reconstruction unit, configured to determine a transform core corresponding to the current block, and determine a reconstructed block of the current block based on the transform core corresponding to the current block and the prediction block.

62. A video encoding apparatus, comprising:

a coefficient determination unit, configured to determine a reference region and an extrapolation filter of a current block, and determine a filter coefficient of the extrapolation filter based on the reference region;
a prediction unit, configured to perform, based on the filter coefficient, parallel prediction on at least two samples in the current block by using the extrapolation filter, to determine a prediction block of the current block; and
an encoding unit, configured to determine a transform core corresponding to the current block, and encode the current block based on the transform core corresponding to the current block and the prediction block, to obtain a bitstream.

63. An electronic device, comprising a processor and a memory; wherein

the memory is configured to store a computer program; and
the processor is configured to call and run the computer program stored in the memory, to implement the method according to any one of claims 1 to 30 or 41 to 60.

64. A video encoding and decoding system, comprising: a video encoder and a video decoder; wherein

the video decoder is configured to implement the method according to any one of claims 1 to 30;
the video encoder is configured to implement the method according to any one of claims 31 to 60.

65. A computer-readable storage medium, configured to store a computer program; wherein
the computer program causes a computer to perform the method according to any one of claims 1 to 30 or 41 to 60.

| Encoding device 110 | | |
|---|---|---|
| Video source 111 | Video encoder 112 | Output interface 113 |

— 130

| Decoding device 120 | | |
|---|---|---|
| Display apparatus 123 | Video decoder 122 | Input interface 121 |

FIG. 1

FIG. 2

EP 4 701 181 A1

Video decoder 300

Bitstream

Entropy decoding unit 310

Inverse quantization/ transform unit 330

Prediction unit 320

Inter prediction unit 321

Intra prediction unit 322

340

In loop filter unit 350

Decoded picture buffer 360

Video data

FIG. 3

FIG. 4A

FIG. 4B

FIG. 5A

FIG. 5B

FIG. 5C

FIG. 5D

FIG. 5E

FIG. 5F

FIG. 5G

FIG. 5H

FIG. 5I

0: Planar mode
1: DC

FIG. 6

0: Planar mode
1: DC

FIG. 7

FIG. 8

FIG. 9

Determine an reference region and an extrapolation filter for the current block, and determine a filter coefficient of the extrapolation filter based on the reference region ⌇S101

Perform parallel prediction on at least two pixels in the current block by using the extrapolation filter, based on the filter coefficient, to determine a prediction block of the current block ⌇S102

Determine a transform core corresponding to the current block, and determine a reconstructed block of the current block based on the transform core corresponding to the current block and the prediction block ⌇S103

FIG. 10

Current block

H

W

Current picture

FIG. 11

Top reconstructed region

To-be-predicted block

Left reconstructed region

To-be-predicted block

Top-right reconstructed region

To-be-predicted block

Bottom-left Reconstructed region

To-be-predicted block

Top-left reconstructed region

To-be-predicted block

EP 4 701 181 A1

FIG. 12

FIG. 13A          FIG. 13B          FIG. 13C

FIG. 14A    FIG. 14B          FIG. 14C          FIG. 14D

FIG. 14E          FIG. 14F          FIG. 14G

FIG. 15

FIG. 16

FIG. 17

FIG. 18A

FIG. 18B

FIG. 19

Step
size 1
pixel

Reconstructed region

Step size 1 pixel

FIG. 20A

A top row

Top-left corner

A left column

FIG. 20B

FIG. 21

FIG. 22A

FIG. 22B

FIG. 23

Current block

FIG. 24A

FIG. 24B

FIG. 24C

FIG. 25

FIG. 26

FIG. 27

| Determine a reference region and an extrapolation filter of a current block, and determine a filter coefficient of the extrapolation filter based on the reference region | S201 |

| Perform parallel prediction on at least two pixels in the current block by using the extrapolation filter, based on the filter coefficient, to determine a prediction block of the current block | S202 |

| Determine a transform core corresponding to the current block, and encode the current block based on the transform core corresponding to the current block and the prediction block, to obtain a bitstream | S203 |

FIG. 28

Determine whether extrapolation filter predict can be used for a current block

Yes · No

Acquire filter coefficients and predict the current block

Skip selection of extrapolation filter prediction technologies

Perform rough selection of prediction modes with other intra prediction tools

Select several modes with lower cost for fine selection, to determine a final intra encoding mode

**FIG. 29**

Video decoding apparatus 10

Coefficient determination unit 11

Prediction unit 12

Reconstruction unit 13

**FIG. 30**

Video encoding apparatus 20

Coefficient determination unit 21

Prediction unit 22

Encoding unit 23

**FIG. 31**

30

Electronic device

33

Transceiver

31

Memory

32

Computer program

Processor

34

FIG. 32

Video encoding and decoding system 40

Video encoder 41 — Video decoder 42

FIG. 33

## INTERNATIONAL SEARCH REPORT

| International application No. |
|---|
| **PCT/CN2023/089855** |

| A. | CLASSIFICATION OF SUBJECT MATTER |
|---|---|

H04N19/117(2014.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CJFD, CNTXT, VEN, WOTXT, USTXT, EPTXT: 编码, 解码, 变换, 块, 核, 并行, 预测, 参考, 插值, 滤波, 系数, 重建, 对角线, 模式, 是否, 像素, encode, decode, conversion, block, kernel, parallel, predict, refer, interpolation, filter, diagonal, pixel, mode, coefficient, reconstruction

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108513137 A (MEDIATEK INC.) 07 September 2018 (2018-09-07) description, paragraphs [0004]-[0088] | 1, 26-31, 56-65 |
| A | CN 110381321 A (XI'AN UNIVERSITY OF POSTS & TELECOMMUNICATIONS) 25 October 2019 (2019-10-25) entire document | 1-65 |
| A | CN 114501029 A (UNILUMIN GROUP CO., LTD.) 13 May 2022 (2022-05-13) entire document | 1-65 |
| A | CN 1933600 A (TSINGHUA UNIVERSITY) 21 March 2007 (2007-03-21) entire document | 1-65 |
| A | US 2017244974 A1 (SAMSUNG ELECTRONICS CO., LTD.) 24 August 2017 (2017-08-24) entire document | 1-65 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 January 2024** | **12 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089855**

| Patent document cited in search report | | | Publication date (day/month/year) | Patent family member(s) | | | Publication date (day/month/year) |
|---|---|---|---|---|---|---|---|
| CN | 108513137 | A | 07 September 2018 | TW | 201733265 | A | 16 September 2017 |
| | | | | TWI | 652899 | B | 01 March 2019 |
| | | | | US | 2017244981 | A1 | 24 August 2017 |
| CN | 110381321 | A | 25 October 2019 | | None | | |
| CN | 114501029 | A | 13 May 2022 | | None | | |
| CN | 1933600 | A | 21 March 2007 | | None | | |
| US | 2017244974 | A1 | 24 August 2017 | WO | 2016072757 | A1 | 12 May 2016 |
| | | | | US | 10356425 | B2 | 16 July 2019 |
| | | | | KR | 20170082528 | A | 14 July 2017 |

Form PCT/ISA/210 (patent family annex) (July 2022)